(19)

(11) EP 3 208 474 B1

(12) **EUROPÄISCHE PATENTSCHRIFT**

(45) Veröffentlichungstag und Bekanntmachung des Hinweises auf die Patenterteilung:
**13.10.2021 Patentblatt 2021/41**

(51) Int Cl.:
***F16B 5/02*** *(2006.01)* ***F16B 33/02*** *(2006.01)*
***F16B 37/02*** *(2006.01)*

(21) Anmeldenummer: **16000401.6**

(22) Anmeldetag: **17.02.2016**

(54) **VERBINDUNGSVORRICHTUNG**

CONNECTION DEVICE

DISPOSITIF DE CONNEXION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.08.2017 Patentblatt 2017/34**

(73) Patentinhaber: **Lomberg, Thomas**
**84307 Eggenfelden (DE)**

(72) Erfinder: **Lomberg, Thomas**
**84307 Eggenfelden (DE)**

(74) Vertreter: **Schatt, Markus F.**
**Stolmár & Partner**
**Blumenstrasse 17**
**80331 München (DE)**

(56) Entgegenhaltungen:
**EP-A1- 0 368 433**
**EP-A1- 2 175 144**
**EP-A2- 0 412 297**
**DD-A1- 230 051**
**HU-B- 197 074**
**US-A- 2 196 032**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 208 474 B1

**Beschreibung**

Die Erfindung betrifft eine Verbindungsvorrichtung insbesondere zur Befestigung zweier Bauteile aneinander.

Aus der EP 0 412 297 A2, der EP 2 175 144 A1, der US 2 196 032 A, der DD230051 A1 und der EP 0 368 433 A1 sind Verbindungsvorrichtungen zur Verbindung von Bauteilen bekannt. Die HU 197 074 B beschreibt ein Einspannelement für eine Schraube.

Aufgabe der vorliegenden Erfindung ist, eine Verbindungsvorrichtung bereitzustellen, mit der jeweils auf einfache Weise eine Befestigung zweier Bauteile aneinander bewerkstelligt werden kann.

Diese Aufgabe wird mit den Merkmalen des unabhängigen Anspruchs gelöst. Weitere Ausführungsformen sind in den auf diesen rückbezogenen Unteransprüchen angegeben.

Nach einem Aspekt der Erfindung ist eine Verbindungsvorrichtung zur festen Verbindung zweier Bauteile miteinander nach dem Anspruch 1 vorgesehen.

Nach einer Ausführungsform kann bei der Verbindungsvorrichtung das Verhältnis zwischen der sich entlang der Dicke D10 des ersten Anschlussabschnitts erstreckenden Breite der Randabschnitts-Oberfläche und dem Nennmaß DNS des Gewindes des Schraubenschafts betragen: $B15 / DNS \leq 3$ und zugleich $B15 / DNS \geq 0{,}1$ oder einer der beiden folgenden Bestimmungen: $B15 / DNS \leq 3$ oder $B15 / DNS \geq 0{,}1$.

Nach einer Ausführungsform kann bei der Verbindungsvorrichtung vorgesehen sein, dass der Gewindeprofil-Abschnitt in der ersten ebenen Erstreckung gesehen über die entgegengesetzt zueinander gelegenen Oberflächen des ersten plattenförmigen Anschlussabschnitts heraussteht.

Nach einer Ausführungsform ist bei der Verbindungsvorrichtung vorgesehen, dass das Gewinde des Schraubenschafts nach einer der folgenden Alternativen ausgeführt ist: Blechschrauben-Gewinde, Holzschrauben-Gewinde, Spanplattenschrauben-Gewinde, Gewinde einer selbstschneidenden Schraube, Kunststoffschrauben-Gewinde, Flachgewinde, Rundgewinde, Sägegewinde, Trapezgewinde, Whitworth-Gewinde, Spitzgewinde, insbesondere metrisches Spitzgewinde oder Zollgewinde.

Nach einer Ausführungsform kann bei der Verbindungsvorrichtung vorgesehen sein,
dass das erste Bauteil und das zweite Bauteil jeweils als separate Bauteile hergestellt sind,
dass der plattenförmige zweite Anschlussabschnitt des zweiten Bauteils mit einer ersten Oberfläche des plattenförmige zweiten Anschlussabschnitts auf der Randabschnitts-Oberfläche des ersten Bauteils aufliegt
dass die Gewindeschraube mittels dem Schraubenkopf das zweite Bauteil an die Randabschnitts-Oberfläche des ersten Bauteils anpresst.

Nach einer Ausführungsform der Verbindungsvorrichtung weist das zweite Bauteil einen zweiten Anschlussabschnitt und einen Funktionsabschnitt auf, der sich in der Erstreckungsrichtung des Anschlussabschnitts des zweiten Bauteils an den zweiten Anschlussabschnitt anschließt.

Dabei kann insbesondere vorgesehen sein, dass der zweite Anschlussabschnitt des zweiten Bauteils und der Funktionsabschnitt des zweiten Bauteils jeweils als separate Bauteile hergestellt sind.

Nach einer Ausführungsform der Verbindungsvorrichtung weist die Verbindungsvorrichtung eine Eingriffsvorrichtung auf, die aufweist:

zumindest einem Fixierungs-Vorsprung, der jeweils an einem der beiden folgenden Alternativen (a) oder (b) ausgebildet ist:

(a) an dem ersten Bauteil,

(b) an dem zweiten Bauteil,

zumindest einer Fixierungs-Ausnehmung, in dem jeweils der Fixierungs-Vorsprung zumindest abschnittsweise gelegen ist, wobei die zumindest eine Fixierungs-Ausnehmung an demjenigen Bauteil (a) oder (b) ausgebildet ist, an dem der in dieser jeweils gelegene Fixierungs-Vorsprung nicht ausgebildet ist,

wobei im befestigten Zustand der Verbindungsvorrichtung der zumindest eine Fixierungs-Vorsprung derart in der jeweiligen Fixierungs-Ausnehmung gelegen ist, dass sich der Fixierungs-Vorsprung nur gering in der jeweiligen Fixierungs-Ausnehmung bewegen kann

und die Eingriffsvorrichtung eine Sicherung der Bauteile gegen eine Bewegung relativ zueinander in Bezug auf eine Drehrichtung in Richtung der Ausnehmungs-Längsrichtung bereitstellt.

Dabei kann die Verbindungsvorrichtung (1) derart ausgeführt sein,

dass das erste Bauteil ein Paar von ersten Bauteilen jeweils mit einem ersten Anschlussabschnitt aufweist, wobei sich die ersten Bauteile (B310, B410) jeweils in einer ersten ebenen Erstreckung erstrecken und jeweils eine Befestigungs-Ausnehmung aufweisen, die sich unter Ausbildung einer Ausnehmungs-Öffnung an einem Randabschnitt des jeweiligen ersten Bauteils von diesem aus in einer Ausnehmungs-Erstreckungsrichtung quer zu dem Anlage-Randabschnitt des jeweiligen ersten Bauteils erstrecken und dabei entlang zueinander verlaufende Ausnehmungs-Längsabschnitte jeweils mit einem Gewinde-Aufnahmeprofil ausbildet, das jeweils eine Abfolge von Aufnahmeprofil-Abschnitten aufweist,

dass sich das zweite Bauteil mit einem plattenförmigen zweiten Anschlussabschnitt in einer zweiten ebenen Erstreckung erstreckt, die quer zu der ersten ebenen Erstreckung verläuft, wobei der plattenförmige zweite Anschlussabschnitt eine Durchgangsöffnung aufweist,

wobei die Verbindungsvorrichtung eine Gewindeschraube mit einem Schraubenschaft aufweist, an dessen Außenseite ein Gewinde mit einer von den Aufnahmeprofil-Abschnitten ersten Bauteile aufgenommenen Gewindeprofil-Abschnitt ausgebildet ist, wobei die Gewindeschraube von einer entgegengesetzt zur ersten Oberfläche des plattenförmigen zweiten Anschlussabschnitts orientierten zweiten Oberfläche aus die Durchgangsöffnung durchragt,

wobei die Eingriffsvorrichtung der Verbindungsvorrichtung zumindest einem Fixierungs-Vorsprung der jeweils an jedem der beiden ersten Bauteile ausgebildet ist, und zumindest eine Fixierungs-Ausnehmung aufweist, in dem jeweils zwei der Fixierungs-Vorsprünge von verschiedenen der beiden ersten Bauteile zumindest abschnittsweise gelegen sind.

Eine Verbindungsvorrichtung zur festen Verbindung zweier Bauteile miteinander kann aufweisen:

ein erstes Bauteil mit einem Anschlussabschnitt, in dem eine Ausnehmungs-Öffnung ausgebildet ist,
ein zweites Bauteil mit einem Anschlussabschnitt, in dem eine Ausnehmungs-Öffnung ausgebildet ist,
eine Stützvorrichtung, die ein erstes Stützteil und ein zweites Stützteil aufweist, die jeweils an in der Abstützrichtung entgegengesetzt zueinander gelegenen Enden durch jeweils eine Eingriffsvorrichtung (E) an dem jeweiligen Bauteil fixiert ist, wobei zumindest das erste Stützteil oder das zweite Stützteil jeweils ein sich in einer Abstützrichtung erstreckendes Gewinde-Aufnahmeprofil mit einer Mehrzahl von Aufnahmeprofil-Abschnitten aufweist, wobei die Gewinde-Aufnahmeprofile einander zugewandt gelegen sind und zwischen diesen eine Befestigungs-Ausnehmung ausgebildet ist
eine erste Gewindeschraube, deren umlaufender Gewindeprofil-Abschnitt die erste Befestigungs-Ausnehmung durchragt und von entgegengesetzten Seiten von dem Gewinde-Aufnahmeprofil aufgenommen ist,
eine zweite Gewindeschraube, deren umlaufender Gewindeprofil-Abschnitt die Befestigungs-Ausnehmung durchragt und von entgegengesetzten Seiten von dem Gewinde-Aufnahmeprofil aufgenommen ist,
wobei die Aufnahmeprofil-Abschnitte jeweils als zwei aufeinander zulaufende Gewindeflanken ausgebildet sind, wobei die Gewindeflanke jeweils als zumindest senkrecht zur Richtung des Gewinde-Aufnahmeprofils gerade verlaufende Ebenen oder als im Wesentlichen gerade verlaufende Ebenen gestaltet sind.

Bei dieser Ausführungsform der Verbindungsvorrichtung kann vorgesehen sein, dass der Gewindeprofil-Abschnitt in der ersten ebenen Erstreckung gesehen über die entgegengesetzt zueinander gelegenen Oberflächen des ersten plattenförmigen Anschlussabschnitts heraussteht.

Bei einer anderen Verbindungsvorrichtung kann vorgesehen sein, dass die Aufnahmeprofil-Abschnitte jeweils als zwei aufeinander zulaufende Gewindeflanke ausgebildet sind, wobei die Gewindeflanke jeweils als senkrecht zur Ausnehmungs-Erstreckungsrichtung gerade verlaufende Ebenen oder als im Wesentlichen gerade Ebenen gestaltet sind.

Alternativ oder zusätzlich kann bei dieser Ausführungsform der Verbindungsvorrichtung vorgesehen sein, dass der Außendurchmesser des Schraubenschafts und die sich quer zur jeweiligen Ausnehmungs-Erstreckungsrichtung jeweils erstreckende Weiten der Ausnehmungs-Öffnungen jeweils betragsmäßig in einem Verhältnis zueinander stehen, bei dem das Gewinde jeweils in der ersten ebenen Erstreckung und der zweiten ebenen Erstreckung gesehen über die entgegengesetzt zueinander gelegenen Oberflächen des ersten plattenförmigen Anschlussabschnitts sowie die entgegengesetzt zueinander gelegenen Oberflächen des zweiten plattenförmigen Anschlussabschnitts heraussteht.

Eine Verbindungsvorrichtung kann aufweisen:

ein erstes Bauteil mit einem ersten Anschlussabschnitt, der an einem Randabschnitt eines Funktionsabschnitts, an dem sich der Anschlussabschnitt anschließt, weg ragt, wobei der Anschlussabschnitt streifenförmig gestaltet ist und an entgegengesetzt zueinander gelegenen Anschlussabschnitt-Längsabschnitte jeweils ein Gewinde-Aufnahmeprofil mit jeweils einer Abfolge von Aufnahmeprofil-Abschnitten aufweist, wobei die Aufnahmeprofil-Abschnitte jeweils als zwei aufeinander zulaufende Gewindeflanke ausgebildet sind,
ein zweites Bauteil mit einem zweiten Anschlussabschnitt mit einer Durchgangsöffnung, die der Anschlussabschnitt durchragt,
eine auf den ersten plattenförmigen Anschlussabschnitt geschraubte Gewindemutter, die ein Innengewinde mit einem von den Aufnahmeprofil-Abschnitten aufgenommenen Gewindeprofil-Abschnitt aufweist und auf den Aufnahmeprofil-Abschnitten des Anschlussabschnitts aufgeschraubt ist, wobei zwischen der Gewindemutter und dem Randabschnitt der zweiten Anschlussabschnitt gelegen ist.

Die Gewindeflanken sind jeweils als quer zum Gewinde-Aufnahmeprofil gerade Ebenen gestaltet.

Alternativ oder zusätzlich kann bei dieser Ausführungsform der Verbindungsvorrichtung vorgesehen sein, dass der Funktionsabschnitt einen Randabschnitt mit einer Randabschnitt-Oberfläche aufweist, von dem aus ein Anschlussabschnitt in einer Anschlussabschnitt-Längsrichtung weg ragt und an dem das zweite Bauteil anliegt, wobei der Randabschnitt (917) eine Dicke (D917) aufweist, die einen Betrag von mindestens dem 0,2-fachen und maximal dem 0,6-fachen des Innendurchmessers der Gewindemutter hat.

Eine Verbindungsvorrichtung zur festen Verbindung zweier Bauteile miteinander kann aufweisen:

ein Kopplungsbauteil mit einer in dessen Längserstreckung durchgehenden und durch Längsabschnitte begrenzten Befestigungs-Ausnehmung (230), wobei die Längsabschnitte jeweils ein Gewinde-Aufnahmeprofil mit einer Mehrzahl von Aufnahmeprofil-Abschnitten ausbilden,

zwei Anschlussvorrichtungen, die jeweils in Bezug auf die Längserstreckung der Befestigungs-Ausnehmung auf zueinander entgegengesetzten Enden des Kopplungsbauteils gelegen sind,

zwei jeweils von zwei entgegengesetzt zueinander gelegenen Seiten der Befestigungs-Ausnehmung in diese zumindest teilweise hineinragende Gewindeschrauben (90) aufweist,

wobei die Aufnahmeprofil-Abschnitte jeweils als zwei aufeinander zulaufende Gewindeflanke und mit einem diese verbindenden Randabschnitt ausgebildet sind, wobei die Gewindeflanke jeweils als senkrecht zur Längserstreckung im Wesentlichen gerade verlaufende Ebenen gestaltet sind.

Insbesondere kann vorgesehen sein, dass die Randabschnitts-Oberfläche der Ausnehmungs-Öffnung zumindest abschnittsweise geradflächig gestaltet ist. Die geradflächige Gestaltung der Randabschnitts-Oberfläche kann insbesondere in einem Auflagebereich ausgebildet sein, in dem das zweite Bauteil an der Randabschnitts-Oberfläche anliegt.

Insbesondere kann dabei vorgesehen sein, dass die Aufnahmeprofil-Abschnitte jeweils als zwei aufeinander zulaufende Gewindeflanken ausgebildet sind, wobei die Gewindeflanken jeweils als senkrecht zur Ausnehmungs-Erstreckungsrichtung gerade verlaufende Ebenen oder als im Wesentlichen gerade verlaufende Ebenen gestaltet sind. Die Aufnahmeprofil-Abschnitte können insbesondere jeweils mit zwei aufeinander zulaufende Gewindeflanken und mit einem diese verbindenden Randabschnitt ausgebildet sein.

Dabei kann das Verhältnis zwischen der Dicke D10 des ersten Anschlussabschnitts und dem Außendurchmesser DNS oder Nenndurchmesser des Gewindes des Schraubenschafts insbesondere wie folgt bestimmt sein: $D10 / DNS \leq 3{,}0$.

Dabei kann insbesondere als Dicke D10 des ersten Anschlussabschnitts diejenige Dicke verwendet werden, die der erste Anschlussabschnitt unmittelbar an den Aufnahmeprofil-Abschnitten hat. Insbesondere kann die Dicke D10 verwendet werden, die an demjenigen Randabschnitt auftritt, der den Übergang der Gewindeflanken zu flächigen Oberflächen des ersten Anschlussabschnitts hat. Insbesondere kann bei den erfindungsgemäßen Ausführungsformen generell vorgesehen sein, dass dabei diejenige Dicke verwendet wird, die derjenige Randabschnitt hat, der den Übergang der Gewindeflanken zu den flächigen Oberflächen des ersten Anschlussabschnitts bildet.

Dabei kann das Verhältnis zwischen der sich entlang der Dicke D10 des ersten Anschlussabschnitts erstreckenden und insbesondere mittleren Breite B15 der geradflächigen Randabschnitts-Oberfläche und dem Nennmaß DNS des Gewindes des Schraubenschafts wie folgt bestimmt sein: $B15 / DNS \geq 0{,}1$.

Alternativ oder zusätzlich zu zumindest einer dieser Bestimmungen kann hierin bei allen oder einzelnen Ausführungsformen vorgesehen sein, dass das Nennmaß des Schraubenschafts und die linear und parallel zueinander verlaufenden Aufnahmeprofile jeweils gegenüberliegender Ausnehmungs-Längsabschnitte so gestaltet sind, dass der jeweilige Schraubenschaft und die Gewinde-Aufnahmeprofile einer jeweiligen Befestigungs-Ausnehmung eine leichtgängige oder schwergängige Verbindung eingehen. Das Nennmaß der linear und parallel zueinander verlaufenden Aufnahmeprofile jeweils gegenüberliegender Ausnehmungs-Längsabschnitte entspricht dem Nennmaß des durch das Verfahren hergestellten linearen Innengewindeprofils. Dieser Zusammenhang bzw. die Realisierung einer Spielverbindung oder einer Klemmverbindung oder sowohl einer Spielverbindung als auch einer Klemmverbindung an einem jeweiligen Anschlussabschnitt mit einer Befestigungs-Ausnehmung kann bei jeder der hierin beschriebenen Ausführungsformen für eine Kombination von Schraubenschaft und Befestigungs-Ausnehmung realisiert sein.

Bei diesen Ausführungsformen der Verbindungsvorrichtung ist ein jeweils erster Anschlussabschnitt zur Aufnahme jeweils eines Schraubenschafts vorgesehen. Die erfindungsgemäße Verbindungsvorrichtung kann auf einfache Weise hergestellt werden, wozu auch nur relativ wenig Material erforderlich ist. Die Herstellung der Ausnehmungs-Längsabschnitte jeweils mit einem Gewinde-Aufnahmeprofil kann mit Werkzeugen vorgenommen werden, die bei der Herstellung der Bauteile bereits verwendet werden, so dass die Herstellung der erfindungsgemäßen Verbindungsvorrichtung insgesamt effizient ist.

Gegenüber bekannten Verbindungsvorrichtungen sind nur eine geringe Anzahl von Arbeitsschritten zur Herstellung der erfindungsgemäßen Verbindungsvorrichtung erforderlich und insbesondere entfallen ansonsten erforderliche Arbeitsschritte wie z.B. Gewindeschneiden, Muttersetzen oder Umformen.

Die Anwendung der erfindungsgemäßen Verbindungsvorrichtung ist auf platzsparende Weise möglich, da die Kombination aus dem ersten und dem zweiten Bauteil wenig Bauraum erforderlich macht.

Insbesondere aus diesem Grund führt die Anwendung der erfindungsgemäßen Verbindungsvorrichtung zu Gewichtseinsparungen von Baukonstruktionen.

Durch die mögliche platzsparende Gestaltung der Bauteile ist der Verpackungsaufwand für diese und somit für die erfindungsgemäße Verbindungsvorrichtung relativ gering.

Durch die einfache Bauweise der erfindungsgemäßen Verbindungsvorrichtung, durch die Zugänglichkeit der jeweiligen Aufnahmeprofil-Abschnitte sowie die Gestaltung der Anschlussabschnitte kann die Montage der Verbindungsvorrichtung und somit von Baukonstruktionen mit Verwendung der erfindungsgemäßen Verbindungsvorrichtung hinsichtlich dem Zeitaufwand effizient erfolgen.

Durch die Gestaltung der Aufnahmeprofil-Abschnitte der Aufnahmeprofile der erfindungsgemäßen Verbindungsvorrichtung ist es möglich, dass bei demselben Aufnahmeprofil-Abschnitt der Verbindungsvorrichtung Gewindeschrauben mit unterschiedliche Drehrichtungen und dabei ein- oder mehrgängige Gewindeschrauben aufgenommen werden können.

Für die jeweilige Kombination von Aufnahmeprofil-Abschnitten der Aufnahmeprofile und der zugehörigen Gewindeschraube kann - das Toleranzfeld derart festgelegt sein, dass die Gewindeschraube leichtgängig oder klemmend in die Aufnahmeprofil-Abschnitte eingeführt werden kann.

Unter "klemmend" wird eine Kombination der Gewindeschraube und der Befestigungs-Ausnehmung verstanden, bei dem ein Verhältnis zwischen dem Nennmaß des Außengewindes der Gewindeschraube DNS und der Einsetztiefe der Gewindeschraube in Richtung der Ausnehmungs-Erstreckungsrichtung von einem Wert verstanden, der kleiner als 0,9 ist.

Unter dem Ausdruck "Erstreckung" wird hierin insbesondere der Verlauf oder in lokaler Hinsicht die Richtung einer Komponente oder einer Fläche oder einer Mittelachse verstanden, die sich aus den Flächenmittelpunkten der kleinsten Querschnittsflächen der jeweiligen Komponente bzw. den Mittelpunkten der Breite der jeweiligen Fläche an jedem Punkt der Komponente ergibt.

Der Ausdruck "in der Dickenrichtung Z gesehen" bedeutet hierin zur Bezeichnung einer relativen Lage von angesprochenen Merkmalen oder Komponenten in eine Blickrichtung, aufgrund der einer Lage der angesprochenen Merkmale oder Komponenten angegeben wird.

Der Ausdruck "entlang" kann hierin im Zusammenhang mit den hierin genannten Richtungsangaben, die den Verlauf einer Konturlinie oder einer Oberfläche betreffen können, oder die eine Richtung einer mechanischen Komponente wie einer Achse oder Welle betreffen können, insbesondere bedeuten, dass die Tangente an die jeweilige Konturlinie oder an die jeweilige Oberfläche in deren Verlauf gemäß der Richtungsangabe bzw. die Längserstreckung und z.B. Mittelachse der mechanischen Komponente lokal mit einem Winkel von maximal 45 Grad und insbesondere von maximal 30 Grad von einer Bezugsrichtung oder Bezugsachse abweicht, auf die jeweilige Richtungsangabe jeweils bezogen ist.

Der Ausdruck "quer" kann hierin im Zusammenhang mit den hierin genannten Richtungsangaben, die den Verlauf einer Konturlinie oder einer Oberfläche betreffen können, oder die eine Richtung einer mechanischen Komponente wie einer Achse oder Welle betreffen können, insbesondere bedeuten, dass die Tangente an die jeweilige Konturlinie oder an die jeweilige Oberfläche in deren Verlauf gemäß der Richtungsangabe bzw. die Längserstreckung und z.B. Mittelachse der mechanischen Komponente lokal mit einem Winkel im Bereich zwischen 45 Grad und 135 Grad und insbesondere mit einem Winkel im Bereich zwischen 67 Grad und 113 Grad von einer Bezugsrichtung oder Bezugsachse abweicht, auf die bzw. der die jeweilige Richtungsangabe bezogen ist.

Unter dem Ausdruck "im Wesentlichen" gleich eines Referenzbetrags wird ein Betrag verstanden, der bis zu 20% von dem Referenzbetrag, der insbesondere die gesamte relevante Größe einer jeweiligen Komponente sein kann, abweicht.

Der Ausdruck "generell" bedeutet insbesondere, dass das betreffende Merkmal nicht nur an der Ausführungsform, in diesem Zusammenhang der Ausdruck "generell" mit Bezug auf das jeweilige Merkmal verwendet worden ist, sondern auch an jeder anderen der hiermit beschriebenen Ausführungsformen vorhanden sein kann.

Unter Mittellinie einer Komponente in einer angegebenen Richtung wird die Verbindungslinie der Flächenschwerpunkte von entlang der angegebenen Richtung sich quer zu dieser ergebenden Querschnittsflächen verstanden, die dem Betrag nach jeweils am kleinsten sind. Insbesondere wird unter Mittellinie eine gerade Linie verstanden, die entlang der genannten Verbindungslinie der Flächenschwerpunkte verläuft, wobei diejenige gerade Linie relevant ist, die durch den Mittelpunkt der genannten Verbindungslinie verläuft und die in der Summe entlang der Verbindungslinie den geringsten Abstandswert, wie z.B. Intergral- oder Flächenwert, zu dieser hat.

Unter dem Begriff "Abstand" insbesondere zwischen zwei Flächen wird hierin insbesondere der kürzeste Abstand verstanden.

Unter einer Gerichtetheit einer Oberfläche z.B. durch einen Ausdruck, nach dem eine Oberfläche in eine jeweils angegebene Richtung weist, bedeutet hierin insbesondere, dass der Normalenvektor zumindest eines Abschnitts dieser Oberfläche in die jeweils angegebene Richtung weist.

Unter einem Winkel zwischen einer Linie oder Richtung und einer weiteren Linie oder Richtung als Bezugslinie wird hierin derjenige Winkel verstanden, der sich aus einer Projektion der Linien bzw. Richtungen in Richtung des kürzesten Abstandes zwischen den Linien bzw. Richtungen an der Stelle des Schnittpunkts derselben ergibt.

Bei der hierin beschriebenen Gestalt eines Oberflächen-Abschnitts eines jeweiligen Ausnehmungs-Abschnitts, wenn diese als Material-abtragende Oberfläche und z.B. als Sägezahnprofil ausgeführt ist, wird zur Definition der jeweiligen Gestalt von einer durchschnittlichen Oberfläche entlang der Umfangsrichtung ausgegangen.

Bei hierin angegebenen Bemaßungen von Gegenständen oder Merkmalen sind bei einem jeweiligen Wert auch Abweichungen von ± 20 % enthalten.

Unter einem "kontinuierlichen Verlauf" einer Oberfläche ist gemeint, dass die Oberfläche entlang einer Referenzrichtung gesehen über die gesamte quer zur Referenzrichtung verlaufende Breite keine Ecke aufweist, d.h. differenzierbaren Verlauf hat.

Die Drehrichtung wird hierin als Vektorrichtung definiert.

Der jeweilige Anschlussabschnitt eines Bauteils erstreckt sich um eine jeweilige Befestigungs-Ausnehmung oder eine Durchgangsöffnung, die das jeweilige Bauteil jeweils zur Aufnahme einer Befestigungsschraube aufweist. In Bezug auf eine Befestigungs-Ausnehmung erstreckt sich der jeweilige Anschlussabschnitt in der Erstreckungsrichtung des Bauteils bis zu einem Abstand der maximalen Breite der Befestigungs-Ausnehmung und insbesondere bis zu einem Abstand der halben maximalen Breite der Befestigungs-Ausnehmung um diese herum. In Bezug auf eine Durchgangsöffnung erstreckt sich der jeweilige Anschlussabschnitt in der Erstreckungsrichtung des Bauteils bis zu einem Abstand des maximalen Durchmessers der Durchgangsöffnung und insbesondere bis zu einem Abstand der halben maximalen Breite der Durchgangsöffnung um diese herum.

Als Dicke eines Bauteils oder eine Komponente wird hierin die durchschnittliche Dicke des jeweiligen Bauteils oder der jeweiligen Komponente verstanden.

Generell können hierin die Anschlussabschnitte oder jeweils zumindest ein Anschlussabschnitt plattenförmig ausgebildet sein. Unter einer Plattenförmigkeit eines Anschlussabschnitts wird hierin insbesondere verstanden, dass die maximale Dicke des Anschlussabschnitts maximal ein Viertel der längsten Erstreckung des Anschlussabschnitts beträgt und dass die Dicke des Anschlussabschnitts über die Erstreckung desselben nur um 30 % ändert.

Die hierin genannte Gewindeschraube kann je nach Anwendungsfall ausgeführt sein und dabei insbesondere als Blechschraube, als Holzschraube, als Spanplattenschraube, als selbstschneidende Schraube oder als Kunststoffschraube realisiert sein.

Das hierin genannte Gewinde einer Gewindeschraube oder Gewindemutter kann beispielsweise als Flachgewinde, als Rundgewinde, als Sägegewinde, als Trapezgewinde, als Whitworth-Gewinde, als Spitzgewinde, dabei insbesondere als metrisches Spitzgewinde oder als Zollgewinde, realisiert sein.

Weiterhin ist ein Verfahren zur Herstellung eines Bauteils offenbart.

Für das Verhältnis zwischen der Dicke D10 des ersten Anschlussabschnitts und dem Nennmaß DNS des Gewindes des Schraubenschafts kann dabei insbesondere gelten: $D10 / DNS \leq 3{,}0$.

Bei dem Verfahren kann vorgesehen sein, dass das Trennverfahren ein thermisches Trennverfahren ist, bei dem ein thermischer Bearbeitungsstrahl, insbesondere aus einem heißen Fluid, erzeugt wird und bei dem ein thermischer Bearbeitungsstrahl den Anschlussabschnitt in einer Richtung quer zu einer ersten ebenen Erstreckung durchstrahlt. Dabei kann insbesondere vorgesehen sein, dass der thermische Bearbeitungsstrahl quer zur flächigen Erstreckung des Bauteils bewegt und durch das Bauteil geführt wird, um die Gewinde-Aufnahmeprofile auszubilden.

Bei dem Verfahren kann vorgesehen sein, dass das Trennverfahren ein Laserverfahren ist, bei dem ein Laserstrahl erzeugt wird und bei dem ein Laserstrahl den Anschlussabschnitt in einer Richtung quer zu einer ersten ebenen Erstreckung durchstrahlt. Dabei kann insbesondere vorgesehen sein, dass der Laserstrahl quer zur flächigen Erstreckung des Bauteils bewegt und durch das Bauteil geführt wird, um die Gewinde-Aufnahmeprofile auszubilden.

Bei dem Verfahren kann vorgesehen sein, dass das Trennverfahren ein Stanzverfahren ist, bei dem insbesondere ein Stanzmesser quer zur flächigen Erstreckung des Bauteils bewegt und durch das Bauteil geführt wird, um die Gewinde-Aufnahmeprofile auszubilden. Das kann in ihrem Querschnitt gesehen die Form zumindest eines Abschnitts des Gewinde-Aufnahmeprofils aufweisen.

Bei dem Verfahren kann vorgesehen sein, dass das Trennverfahren ein Wasserstrahl-Trennverfahren ist, bei dem insbesondere ein Wasserstrahl quer zur flächigen Erstreckung des Bauteils bewegt und durch das Bauteil geführt wird, wobei der Wasserstrahl quer zur flächigen Erstreckung des Bauteils derart geführt wird, dass mit diesem zumindest ein Abschnitt des Gewinde-Aufnahmeprofils ausgebildet wird.

Bei dem Verfahren kann vorgesehen sein, dass das Trennverfahren Fräsen ist, bei dem durch ein Fräswerkzeug durch Fräsen einer Außenkontur eines Längsabschnitts der Befestigungs-Ausnehmung zumindest ein Abschnitt des Gewinde-Aufnahmeprofils ausgebildet wird.

Bei dem Verfahren kann vorgesehen sein, dass das Trennverfahren ein Schleifverfahren ist, bei dem durch ein Schleifwerkzeug durch Schleifen einer Außenkontur eines Längsabschnitts der Befestigungs-Ausnehmung zumindest ein Abschnitt des Gewinde-Aufnahmeprofils ausgebildet wird.

Im Folgenden werden Ausführungsformen der Erfindung anhand der beiliegenden Figuren beschrieben, die zeigen:

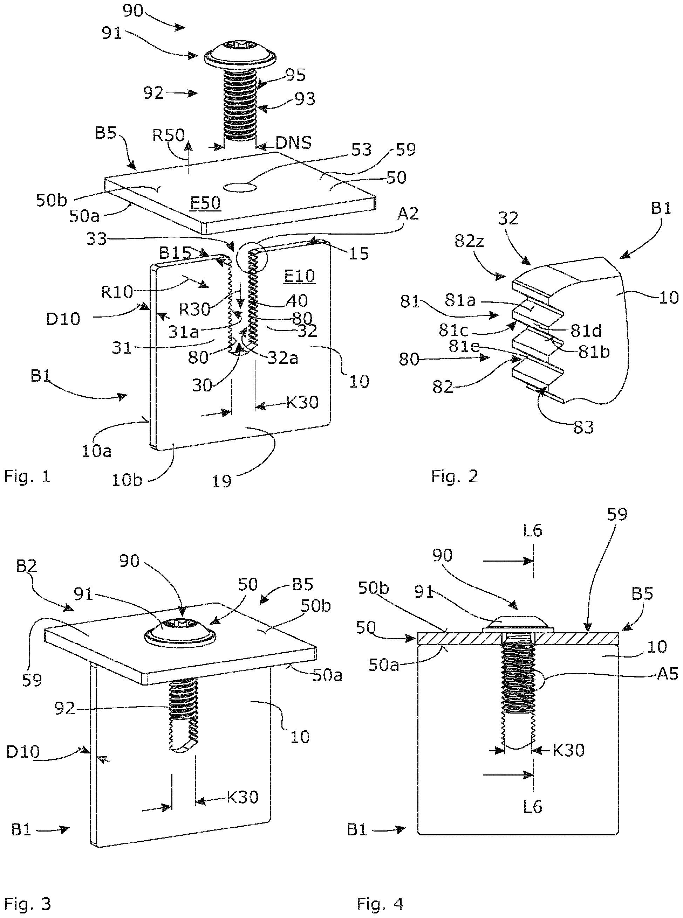

Figur 1 eine perspektivische Explosionsdarstellung einer Ausführungsform der erfindungsgemäßen Verbindungsvorrichtung, wobei die Ausführungsform der Verbindungsvorrichtung aufweist: ein erstes Bauteil mit einem ersten plattenförmigen Anschlussabschnitt mit einer Ausnehmung und diese auf gegenüberliegenden Seiten umgebende Ausnehmungs-Randbereiche sowie einem Funktionsabschnitt, ein zweites Bauteil mit einem eine Durchgangsöffnung aufweisenden zweiten plattenförmigen Anschlussabschnitt und mit einem Funktionsabschnitt sowie eine die plattenförmigen Anschlussabschnitte verbindende Gewindeschraube, die die Durchgangsöffnung durchragt und in die Ausnehmung hineinragt,

Figur 2 einen Ausschnitt eines Ausnehmungs-Randbereichs des Anschlussabschnitts, wobei der Ausnehmungs-Randbereich jeweils ein Gewinde-Aufnahmeprofil mit einer Mehrzahl von in einer Reihe angeordneten Aufnahmeprofil-Abschnitten aufweist,

Figur 3 eine perspektivische Darstellung der Ausführungsform der erfindungsgemäßen Verbindungsvorrichtung nach der Figur 1 in ihrem zusammengesetzten Zustand oder ihrem Montagezustand,

Figur 4 eine Seitendarstellung der Ausführungsform der erfindungsgemäßen Verbindungsvorrichtung nach der Figur 1 in ihrem zusammengesetzten Zustand, wobei das zweite Bauteil geschnitten dargestellt ist,

Figur 5 eine vergrößerte Darstellung eines in der Figur 4 mit A5 bezeichneten Ausschnitts, in dem das Zusammenwirken des Gewindes des Schraubenschafts und des Gewinde-Aufnahmeprofils dargestellt ist,

Figur 6 eine Schnittdarstellung der Ausführungsform der erfindungsgemäßen Verbindungsvorrichtung nach der Figur 1 entlang der in der Figur 4 angegebenen Linie L6 - L6,

Figur 7 eine vergrößerte Darstellung eines in der Figur 6 mit A7 bezeichneten Ausschnitts, in dem das Zusammenwirken des Gewindes des Schraubenschafts und des Gewinde-Aufnahmeprofils dargestellt ist,

Figur 8 eine Seitendarstellung eines Ausschnitts der Ausnehmungs-Randbereiche des Anschlussabschnitts des ersten Bauteils der Ausführungsform der erfindungsgemäßen Verbindungsvorrichtung nach der Figur 1,

Figur 9 eine vergrößerte Darstellung eines in der Figur 8 mit A9 bezeichneten Ausschnitts, in dem ein Teilabschnitt des Gewinde-Aufnahmeprofils dargestellt ist,

Figur 10 der in der Figur 9 gezeigte Ausschnitt eines alternativ zum Gewinde-Aufnahmeprofil der Figur 9 ausgeführten Gewinde-Aufnahmeprofils,

Figur 11 eine perspektivische Darstellung eines insbesondere hinsichtlich des Funktionsabschnitts alternativ zum ersten Bauteil der Figur 1 ausgeführten ersten Bauteils,

Figur 12 eine Explosionsdarstellung einer weiteren Ausführungsform der erfindungsgemäßen Verbindungsvorrichtung, bei der das erste Bauteil nach der Figur 11 und das zweite Bauteil nach der Figur 1 ausgeführt ist,

Figur 13 eine perspektivische Darstellung der Ausführungsform der erfindungsgemäßen Verbindungsvorrichtung nach der Figur 12, wobei die Verbindungsvorrichtung im zusammengesetzten Zustand oder Montagezustand gezeigt ist,

Figur 14 eine Explosionsdarstellung einer weiteren Ausführungsform der erfindungsgemäßen Verbindungsvorrichtung, die eine Eingriffsvorrichtung zur Fixierung des ersten und des zweiten Bauteils in Bezug auf eine Drehrichtung aufweist,

Figur 15 eine Seitendarstellung der in der Figur 14 dargestellten Ausführungsform der erfindungsgemäßen Verbindungsvorrichtung im zusammengesetzten Zustand, wobei das zweite Bauteil geschnitten dargestellt ist,

Figur 16 eine perspektivische Darstellung einer weiteren Ausführungsform des ersten Bauteils mit mehreren Befestigungs-Ausnehmungen jeweils zur Aufnahme eines Schraubenschafts,

Figur 17 eine Explosionsdarstellung einer weiteren Ausführungsform der erfindungsgemäßen Verbindungsvorrichtung, die das erste Bauteil nach der Figur 16 sowie mehrere zweite Bauteile aufweist,

Figur 18 eine perspektivische Darstellung einer weiteren Ausführungsform der erfindungsgemäßen Verbindungsvorrichtung, die das erste Bauteil nach der Figur 16 sowie mehrere zweite Bauteile im jeweils zusammengesetzten Zustand oder Montagezustand aufweist,

Figur 19 eine Explosionsdarstellung einer weiteren Ausführungsform der erfindungsgemäßen Verbindungsvorrichtung mit einer Eingriffsvorrichtung, die als Variante zu der Eingriffsvorrichtung nach der Figur 14 ausgeführt ist,

Figur 20 eine Seitendarstellung der in der Figur 19 dargestellten Ausführungsform der erfindungsgemäßen Verbindungsvorrichtung, wobei die Verbindungsvorrichtung im zusammengesetzten Zustand gezeigt ist, wobei das zweite Bauteil geschnitten dargestellt ist,

Figur 21 eine Explosionsdarstellung einer weiteren Ausführungsform der erfindungsgemäßen Verbindungsvorrichtung mit einer Eingriffsvorrichtung, die als Variante zu den Eingriffsvorrichtungen nach den Figuren 14 und 19 ausgeführt ist,

Figur 22 eine Seitendarstellung der in der Figur 21 dargestellten Ausführungsform der erfindungsgemäßen Verbindungsvorrichtung, wobei die Verbindungsvorrichtung im zusammengesetzten Zustand gezeigt ist, wobei das zweite Bauteil geschnitten dargestellt ist,

Figur 23 eine Explosionsdarstellung einer weiteren Ausführungsform der erfindungsgemäßen Verbindungsvorrichtung mit einer Eingriffsvorrichtung, die als Variante zu den Eingriffsvorrichtungen nach den Figuren 14, 19 und 21 ausgeführt ist,

Figur 24 eine Seitendarstellung der in der Figur 23 dargestellten Ausführungsform der erfindungsgemäßen Verbindungsvorrichtung, wobei die Verbindungsvorrichtung im zusammengesetzten Zustand gezeigt ist, wobei das zweite Bauteil geschnitten dargestellt ist,

Figur 25 eine Explosionsdarstellung einer weiteren Ausführungsform der erfindungsgemäßen Verbindungsvorrichtung mit einer Eingriffsvorrichtung, die als Variante zu den Eingriffsvorrichtungen nach den Figuren 14, 19, 21 und 23 ausgeführt ist,

Figur 26 eine Seitendarstellung der in der Figur 25 dargestellten Ausführungsform der erfindungsgemäßen Verbindungsvorrichtung, wobei die Verbindungsvorrichtung im zusammengesetzten Zustand gezeigt ist, wobei das zweite Bauteil geschnitten dargestellt ist,

Figur 27 eine Explosionsdarstellung einer weiteren Ausführungsform der erfindungsgemäßen Verbindungsvorrichtung mit einer Eingriffsvorrichtung, die als Variante zu den Eingriffsvorrichtungen nach der Figur 19 ausgeführt ist, und mit einer Gewindeschraube, die sich von der in der Figur 19 gezeigten Gewindeschraube unterscheidet,

Figur 28 eine Seitendarstellung der in der Figur 27 dargestellten Ausführungsform der erfindungsgemäßen Verbindungsvorrichtung, wobei die Verbindungsvorrichtung im zusammengesetzten Zustand gezeigt ist, wobei das zweite Bauteil geschnitten dargestellt ist,

Figuren 29 bis 33 jeweils eine Explosionsdarstellung von weiteren Ausführungsformen der in den Figuren 29-32 erfindungsgemäßen Verbindungsvorrichtung jeweils mit einer Eingriffsvorrichtung und mit einer Gewindeschraube, die sich von den in den Figuren 19 bis 28 gezeigten Eingriffsvorrichtungen und mit einer Gewindeschraube die sich von der in den Figuren 19 und 27 gezeigten Gewindeschraube unterscheidet,

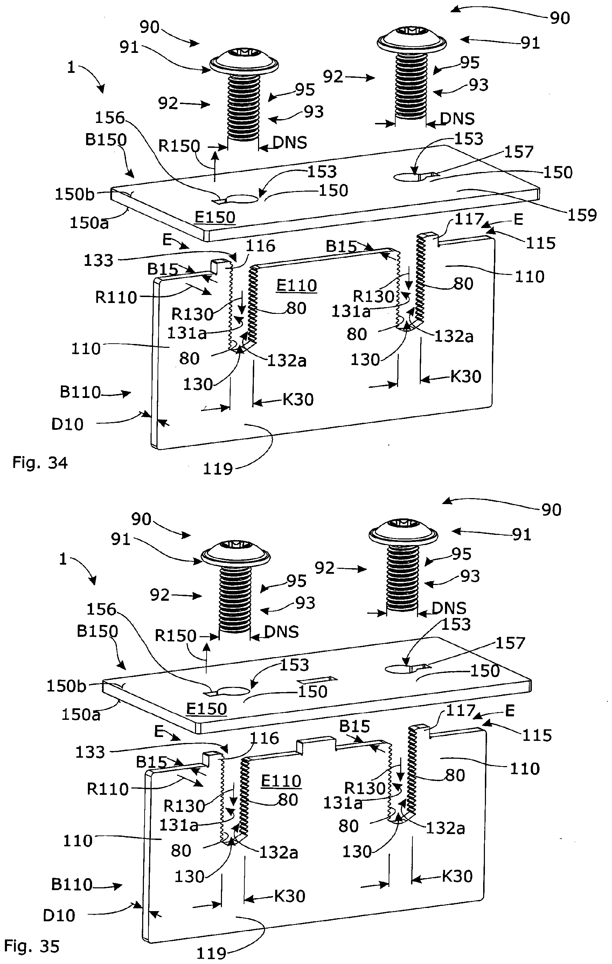

Figur 34 eine perspektivische Explosionsdarstellung einer Ausführungsform der erfindungsgemäßen Verbindungsvorrichtung, wobei die Ausführungsform der Verbindungsvorrichtung aufweist: ein erstes Bauteil mit mehr als einem Anschlussabschnitt jeweils mit einer Ausnehmung, ein zweites Bauteil mit zwei Anschlussabschnitten jeweils mit einer Durchgangsöffnung sowie zwei jeweils zwei Anschlussabschnitte verbindende Gewindeschrauben, von denen jede jeweils eine der Durchgangsöffnungen durchragt und in jeweils eine Ausnehmung hineinragt, wobei die Verbindungsvorrichtung eine Eingriffsvorrichtung zur Fixierung des ersten und des zweiten Bauteils in Bezug auf eine Drehrichtung aufweist,

Figur 35 eine perspektivische Explosionsdarstellung einer Ausführungsform der erfindungsgemäßen Verbindungsvorrichtung, die sich von der Ausführungsform der Figuren 34 durch eine alternative Ausführung der Eingriffsvorrichtung unterscheidet,

Figur 36 eine perspektivische Explosionsdarstellung einer Ausführungsform der Verbindungsvorrichtung, die zwei Bewegungsgewinde aufweist,

Figur 37 eine Seitendarstellung der in der Figur 36 dargestellten Ausführungsform der Verbindungsvorrichtung, wobei die Verbindungsvorrichtung im zusammengesetzten Zustand gezeigt ist,

Figuren 38 bis 45 eine weitere Ausführungsform der erfindungsgemäßen Verbindungsvorrichtung,

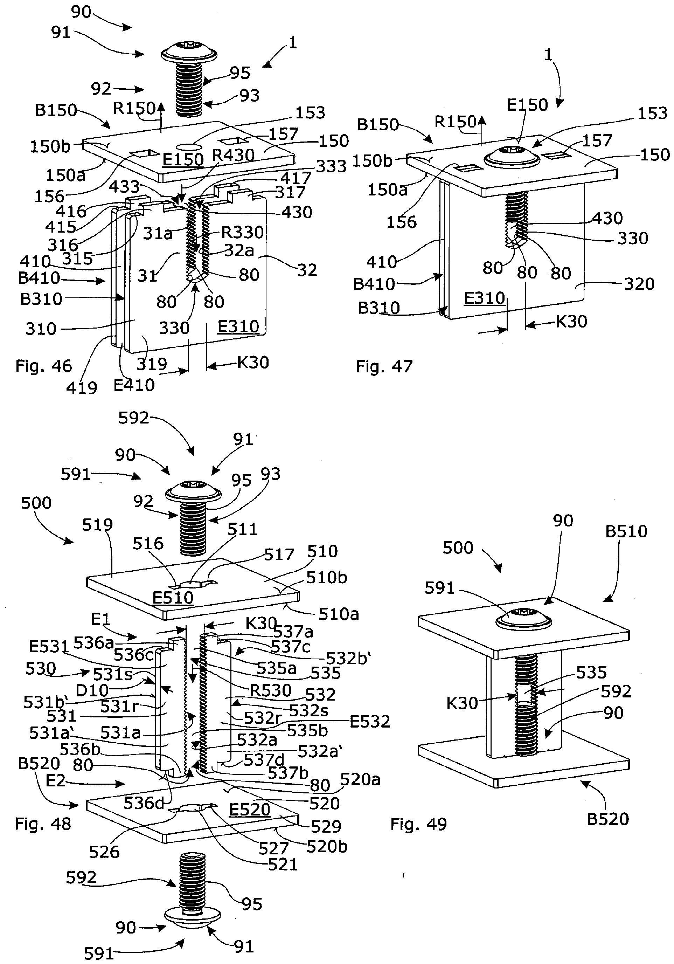

Figur 46 eine perspektivische Explosionsdarstellung einer Ausführungsform der erfindungsgemäßen Verbindungsvorrichtung, wobei die Ausführungsform der Verbindungsvorrichtung aufweist: zwei erste Bauteile jeweils mit einem ersten Anschlussabschnitt mit jeweils einer Ausnehmung, ein zweites Bauteil mit einem zweiten Anschlussabschnitt mit einer Durchgangsöffnung sowie eine Gewindeschraube, die von den zwei Ausnehmungen aufgenommen ist, so dass diese die beiden ersten Bauteile und das zweite Bauteil miteinander verbindet und aneinander befestigt, wobei die Verbindungsvorrichtung eine Eingriffsvorrichtung zur Fixierung der ersten Bauteile und des zweiten Bauteils insgesamt aneinander in Bezug auf eine Drehrichtung aufweist,

Figur 47 eine Seitendarstellung der in der Figur 46 dargestellten Ausführungsform der erfindungsgemäßen Verbindungsvorrichtung, wobei die Verbindungsvorrichtung im zusammengesetzten Zustand gezeigt ist,

Figur 48 eine perspektivische Explosionsdarstellung einer Ausführungsform der erfindungsgemäßen Verbindungsvorrichtung, wobei die Ausführungsform der Verbindungsvorrichtung aufweist: zwei Bauteile jeweils mit einem Anschlussabschnitt, in denen eine Ausnehmungs-Öffnung ausgebildet ist, eine Stützvorrichtung, die ein erstes Stützteil und ein zweites Stützteil aufweist, die jeweils ein Gewinde-Aufnahmeprofil aufweisen und die jeweils an den Bauteilen fixiert sind und eine Befestigungs-Ausnehmung ausbilden, sowie zwei Gewindeschrauben, die von jeweils entgegengesetzt zueinander gelegenen Seiten von der Befestigungs-Ausnehmung aufgenommen sind,

Figur 49 eine Seitendarstellung der in der Figur 48 dargestellten Ausführungsform der erfindungsgemäßen Verbindungsvorrichtung, wobei die Verbindungsvorrichtung im zusammengesetzten Zustand gezeigt ist,

Figur 50 eine Explosionsdarstellung einer weiteren Ausführungsform der erfindungsgemäßen Verbindungsvorrichtung, bei der ein erstes Bauteil an einem ersten Anlage-Randabschnitt einen ersten Aufnahme-Schlitz und ein zweites Bauteil einen in der Verlängerung der Befestigungs-Ausnehmung ausgebildeten zweiten Aufnahme-Schlitz aufweist, wobei durch die Aufnahme-Schlitze das erste und das zweite Bauteil ineinander gesteckt und mit einer Gewindeschraube aneinander befestigt werden können,

Figur 51 eine Explosionsdarstellung einer weiteren Ausführungsform der erfindungsgemäßen Verbindungsvorrichtung, bei der gegenüber der Ausführungsform der Figur 50 insbesondere eine anderer Gewindeschraube verwendet wird,

Figur 52 eine perspektivische Darstellung der in der Figur 51 gezeigten Ausführungsform der erfindungsgemäßen Verbindungsvorrichtung, wobei die Verbindungsvorrichtung im zusammengesetzten Zustand gezeigt ist,

Figur 53 eine Explosionsdarstellung einer weiteren Ausführungsform der erfindungsgemäßen Verbindungsvorrichtung, die gegenüber der Ausführungsform der Figur 50 ein weiteres Bauteil und eine Eingriffsvorrichtung zur Fixierung des ersten und des zweiten Bauteils in Bezug auf eine Drehrichtung aufweist,

Figur 54 eine Explosionsdarstellung einer weiteren Ausführungsform der erfindungsgemäßen Verbindungsvorrichtung, die eine Eingriffsvorrichtung zur Fixierung des ersten und des zweiten Bauteils in Bezug auf eine Drehrichtung aufweist, die eine Variante der in der Figur 53 gezeigten Eingriffsvorrichtung ist,

Figur 55 eine Explosionsdarstellung einer weiteren Ausführungsform der Verbindungsvorrichtung, wobei die Ausführungsform der Verbindungsvorrichtung aufweist: ein erstes Bauteil mit einem ersten Anschlussabschnitt mit einem streifenförmigen Gewindeflanken-Aufnahmeabschnitt, der von einem Randabschnitt des ersten Bauteils weg ragt, ein zweites Bauteil mit einem zweiten plattenförmigen Anschlussabschnitt mit einer Durchgangsöffnung sowie eine die plattenförmigen Anschlussabschnitte verbindende Gewindemutter, die auf dem Gewindeflanken-Aufnahmeabschnitt aufgeschraubt ist,

Figur 56 eine perspektivische Darstellung der in der Figur 55 gezeigten Ausführungsform der Verbindungsvorrichtung, wobei die Verbindungsvorrichtung im zusammengesetzten Zustand gezeigt ist,

Figur 57 eine Seitendarstellung eines Abschnitts des in der Figur 56 dargestellten ersten Anschlussabschnitts mit dem streifenförmigen Gewindeflanken-Aufnahmeabschnitt, das zwei Gewinde-Aufnahmeprofile aufweist, die auf jeweils einer der beiden entgegengesetzt zueinander gerichteten Längsseiten des Gewindeflanken-Aufnahmeabschnitts ausgebildet sind,

Figur 58 eine Draufsicht der Ausführungsform der Figur 57 in dem in der Figur 57 dargestellten Zustand,

Figur 59 eine vergrößerte Darstellung eines Ausschnitts eines Schnitts entlang der in der

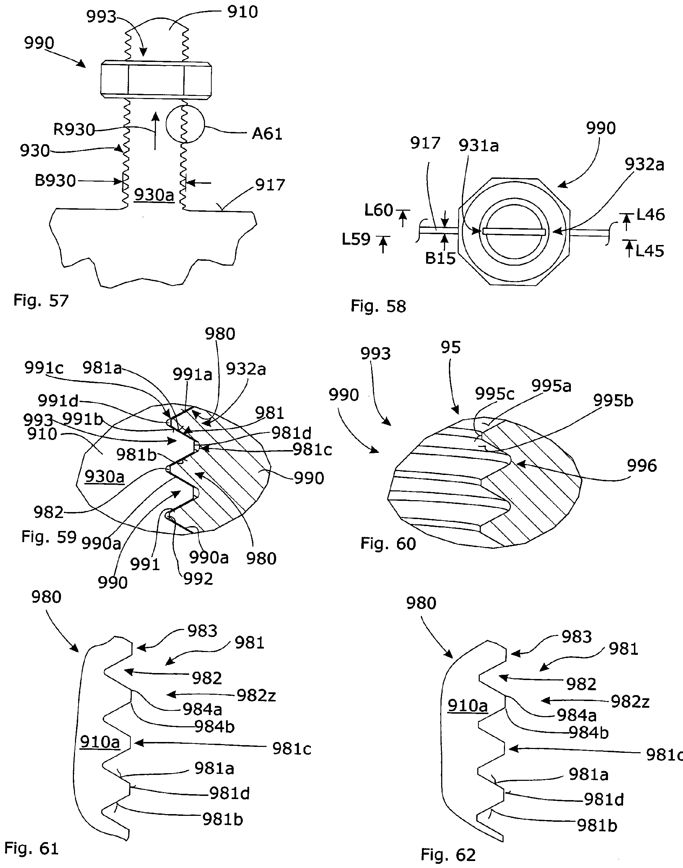

Figur 58 eingetragenen Linie L59-L45, in dem ein Teilabschnitt des Gewinde-Aufnahmeprofils sowie der eines Innengewindes der Gewindemutter dargestellt ist,

Figur 60 eine vergrößerte Darstellung eines Ausschnitts eines Schnitts entlang der in der Figur 58 eingetragenen Linie L60-L46,

Figur 61 eine vergrößerte Darstellung eines in der Figur 57 mit A61 bezeichneten Ausschnitts, in dem ein Teilabschnitt des Gewinde-Aufnahmeprofils gezeigt ist,

Figur 62 der in der Figur 61 gezeigte Ausschnitt eines alternativ zum Gewinde-Aufnahmeprofil der Figur 61 ausgeführten Gewinde-Aufnahmeprofils.

Bei den Figuren sind Merkmale von verschiedenen Ausführungsformen mit gleicher Funktion teilweise mit denselben Bezugszeichen versehen.

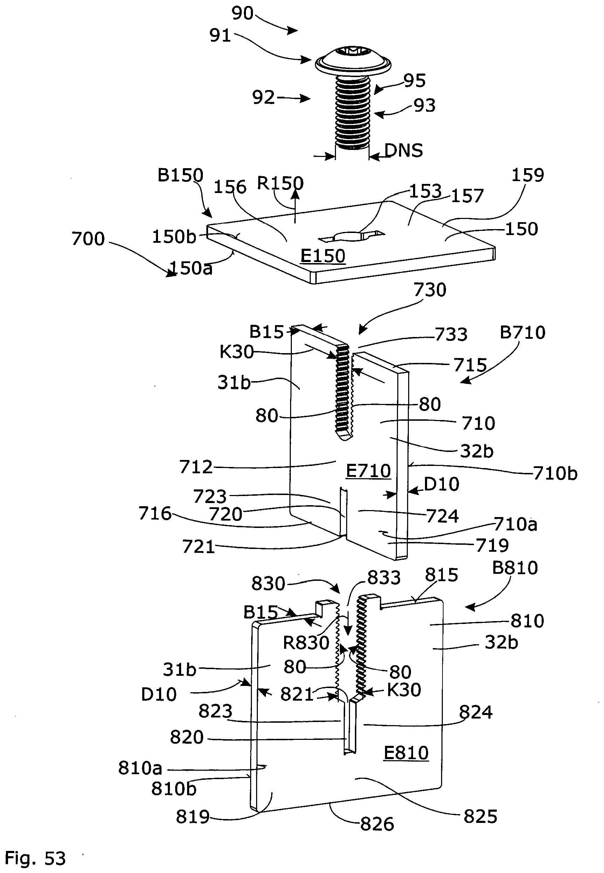

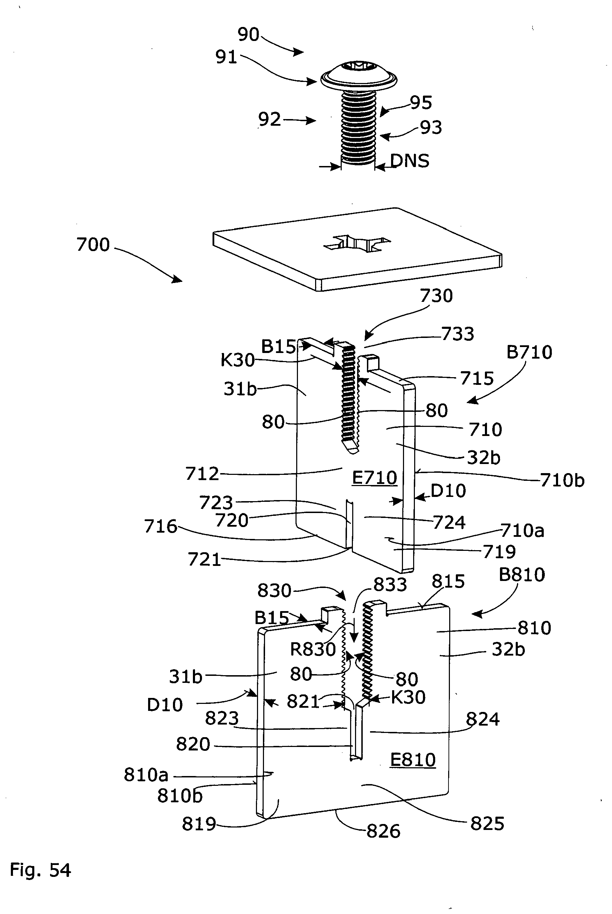

Nach der erfindungsgemäßen Verbindungsvorrichtung 1 weist ein sich in einer ersten flächigen Erstreckung erstreckendes Bauteil einen insbesondere plattenförmigen Anschlussabschnitt, der eine Befestigungs-Ausnehmung aufweist, auf. Generell kann bei den hierin beschriebenen Ausführungsformen, insbesondere der Figuren 1 bis 54, vorgesehen sein, dass das Bauteil mit der Befestigungs-Ausnehmung ein seitliches Ende mit einer Randabschnitts-Oberfläche aufweist, die quer zur Dickenrichtung des Anschlussabschnitts orientiert ist, wobei Randabschnitts-Oberfläche in der ersten flächigen Erstreckung oder der Erstreckungsrichtung der Befestigungs-Ausnehmung gesehen ausschließlich eine Seitenfläche einer Platte ist.

Unter der Plattenförmigkeit des Anschlussabschnitts wird hierin insbesondere verstanden, dass die Dicke des jeweiligen Anschlussabschnitts über deren flächigen Erstreckung maximal um das Dreifache der durchschnittlichen Dicke des Anschlussabschnitts abweichen kann. Insbesondere kann z.B. an der Randabschnitts-Oberfläche des seitlichen Endes ein in Dickenrichtung des Anschlussabschnitts wegragender Vorsprung oder Sims ausgebildet sein. Auch kann der Anschlussabschnitt zumindest eine Stufe oder Rippe aufweisen, die jeweils maximal um das Dreifache der durchschnittlichen Dicke des Anschlussabschnitts in Dickenrichtung ausgebildet sein kann.

Die Befestigungs-Ausnehmung ist durch zwei entlang zueinander verlaufender Ausnehmungs-Längsabschnitte, die jeweils einen Randabschnitt eines jeweiligen Ausnehmungs-Randbereichs des Anschlussabschnitts bilden, begrenzt. Die Längsabschnitte bilden jeweils ein Gewinde-Aufnahmeprofil 80 mit einer Mehrzahl von Aufnahmeprofil-Abschnitten 81 aus, die in einer Reihe angeordnet sind. Zwischen jeweils zwei Aufnahmeprofil-Abschnitten 81 ist ein Gewindeaufnahme-Tal 82 ausgebildet. Generell kann bei den hierin beschriebenen, also insbesondere an Hand der Figuren der Figuren 1 bis 54 beschriebenen Ausführungsformengenerell der jeweiligen Bauteile mit einer Befestigungs-Ausnehmung, insbesondere der Figuren 1 bis 54, vorgesehen sein, dass Ausnehmungs-Längsabschnitte 31a, 32a der Gewinde-Aufnahmeprofile 80 im Wesentlichen parallel zueinander verlaufen, wenn sich das Bauteil mit der Befestigungs-Ausnehmung in einer Referenzstellung befindet, die gegeben ist, wenn auf das erste Bauteil keine äußere Kraft einwirkt. Unter dem Ausdruck "im Wesentlichen parallel zueinander verlaufen" wird hierin insbesondere verstanden, dass die beiden Ausnehmungs-Längsabschnitte 31a, 32a der jeweiligen Befestigungs-Ausnehmung in einen Winkel von weniger als 3 Grad zueinander verlaufen. Die Aufnahmeprofil-Abschnitte 81 sind insbesondere jeweils als zwei entlang zueinander verlaufende Gewindeflanken 81a, 81b, die entgegengesetzt zueinander orientiert sind, ausgebildet sind, wobei die Gewindeflanke 81a, 81b jeweils gerade verlaufende Ebenen oder als im Wesentlichen gerade verlaufende Ebenen, deren Orientierung entlang der Ausnehmungs-Erstreckungsrichtung R30 verlaufen, gestaltet sind.

Die Verbindungsvorrichtung 1 weist ein weiteres Bauteil mit einem Anschlussabschnitt, der eine Durchgangsöffnung aufweist, auf. Das weitere Bauteil erstreckt sich quer zu dem Bauteil mit der Befestigungs-Ausnehmung. Ein Schraubenschaft 92 einer Gewindeschraube 90 erstreckt sich durch die Durchgangsöffnung und ist zumindest teilweise von der Befestigungs-Ausnehmung aufgenommen, um die beiden Bauteile aneinander zu befestigen oder miteinander zu koppeln.

An der Außenseite 92a des Schraubenschafts 92 ist ein Gewinde 93 mit einem von den Aufnahmeprofil-Abschnitten 81 aufgenommenen Gewindeprofil-Abschnitt 95 ausgebildet. Dabei kann insbesondere vorgesehen sein, dass das Nennmaß DNS des Gewindes des Schraubenschafts 92 und die insbesondere durchschnittliche Dicke D10 der Ausnehmungs-Randbereiche des Anschlussabschnitts betragsmäßig in einem Verhältnis D10 / DNS zueinander stehen, für das gilt: D10 / DNS ≤ 3,0. In besonders vorteilhafter Weise kann für den Zusammenhang zwischen D10 und DNS gelten: $\mathrm{D10} * \mathrm{L} = \sqrt{\mathrm{DNS}^2 - \mathrm{K30}^2}$. Dabei wird K30 als Kernmaß der erfindungsgemäß vorgesehenen Befestigungs-Ausnehmung bezeichnet, die sich als der geringste Abstand der Linien ergibt, die jeweils an den am weitesten in die Befestigungs-Ausnehmung hineinreichenden Oberflächenpunkte der jeweils entlang zueinander verlaufenden Aufnahmeprofils 80 ergibt. Weiterhin ist der Faktor L ein Proportionalitätsfaktor, der insbesondere einen Wert zwischen 0,8 und 1,2 hat. Insbesondere kann das Verhältnis D10 / DNS so festgelegt sein, dass der Gewindeprofil-Abschnitt 95 in der Erstreckung des Bauteils mit der Befestigungs-Ausnehmung gesehen über die entgegengesetzt zueinander gelegenen Oberflächen des ersten plattenförmigen Anschlussabschnitts des Bauteils mit der Befestigungs-Ausnehmung heraussteht.

Das Kernmaß kann insbesondere mit Hilfe von Geraden definiert sein, die jeweils an einem von beiden der Gewinde-Aufnahmeprofile 80 derselben Befestigungs-Ausnehmung anliegen, wobei die jeweilige Gerade an den am weitesten in die Befestigungs-Ausnehmung hineinragenden Stellen der Aufnahmeprofil-Abschnitte 81 jeweils eines Gewinde-Aufnahmeprofils 80 anliegt. Dabei kann das Kernmaß der mittlere Abstand zwischen den beiden Geraden derselben Befestigungs-Ausnehmung sein. Das Kernmaß wird bei allen Ausführungsformen einheitlich mit dem Bezugszeichen "K30" bezeichnet.

Unter dem Anschlussabschnitt wird hierin insbesondere ein Bereich in der flächigen Erstreckung des Bauteils mit der Befestigungs-Ausnehmung verstanden, das innerhalb eines Abstands von der Befestigungs-Ausnehmung neben und entlang der Befestigungs-Ausnehmung gelegen ist, der den Betrag des halben Kernmaßes hat. Unter der Dicke D10 der Ausnehmungs-Randbereiche des Anschlussabschnitts kann hierin insbesondere die durchschnittliche oder die maximale Dicke D10 der Ausnehmungs-Randbereiche verstanden werden.

Generell können hierin das Nennmaß des Schraubenschafts und die linear und parallel zueinander verlaufenden Aufnahmeprofile jeweils gegenüberliegender Ausnehmungs-Längsabschnitte so gestaltet sein, dass der jeweilige Schraubenschaft und die Gewinde-Aufnahmeprofile 80 einer jeweiligen Befestigungs-Ausnehmung 30 eine leichtgängige oder schwergängige Verbindung eingehen. Das Nennmaß der linear und parallel zueinander verlaufenden Aufnahmeprofile jeweils gegenüberliegender Ausnehmungs-Längsabschnitte entspricht dem Nennmaß des durch das Verfahren hergestellten linearen Innengewindeprofils. Generell kann vorgesehen sein, dass für das Verhältnis zwischen der Dicke D10 des ersten Anschlussabschnitts und dem Außendurchmesser DNS des Gewindes des Schraubenschafts gilt: $D10 / DNS \leq 3{,}0$.

Nach einem Aspekt der Erfindung ist eine Verbindungsvorrichtung 1 vorgesehen, die ein erstes Bauteil B1 und ein zweites Bauteil B5 sowie eine Gewindeschraube 90, durch die das erste Bauteil B1 und das zweite Bauteil B5 aneinander befestigt sind, aufweist.

Das erste Bauteil B1 erstreckt sich in einer ersten ebenen Erstreckung E10, so dass die Oberfläche desselben in einer Richtung R10 gerichtet ist. Das erste Bauteil B1 weist einen ersten Anschlussabschnitt 10, der insbesondere plattenförmig ausgeführt sein kann, und eine Befestigungs-Ausnehmung 30 auf, die sich unter Ausbildung einer Ausnehmungs-Öffnung 33 an einer Randabschnitts-Oberfläche 15 des ersten Bauteils B1 von diesem aus in einer Ausnehmungs-Erstreckungsrichtung R30 quer zu der Randabschnitts-Oberfläche 15 des ersten Bauteils B1 erstreckt. Der erste Anschlussabschnitt 10 weist zwei flächige Oberflächen 10a, 10b auf, die entgegengesetzt zueinander gelegen sind.

Das erste Bauteil B1 weist einen Funktionsabschnitt 19 auf, der an den Anschlussabschnitt 10 anschließt und je nach dem Verwendungszweck und der Funktion des ersten Bauteils B1 gestaltet ist. Bei der in der Figur 1 gezeigten Ausführungsform ist der Funktionsabschnitt 19 in dieser Ausführungsform ebenfalls als plattenförmiger Abschnitt ausgebildet, der sich in derselben Erstreckungsrichtung E10 wie der Anschlussabschnitt 10 erstreckt. Beispielsweise kann der Funktionsabschnitt 19 dazu vorgesehen sein, dass an diesem weitere Bauteile befestigt und z.B. angeklemmt, angeschraubt oder angeschweißt werden. In der Figur 1 ist der Funktionsabschnitt 19 als Teil einer sich kontinuierlich erstreckenden und einheitlich geformten Platte mit dem Anschlussabschnitt 10 ausgebildet. Je nach dem Anwendungsfall kann der Funktionsabschnitt 19 beispielsweise als ProfilBauteil, wie z.B. als Profilschiene, oder als Abdeckplatte oder Trägerplatte ausgeführt sein. Der Anschlussabschnitt 10 kann in eine Ausnehmung des Funktionsabschnitts 19 eingesetzt und in dieser befestigt sein.

Die Befestigungs-Ausnehmung 30 ist durch zwei entlang zueinander verlaufender Ausnehmungs-Längsabschnitte 31a, 32a, die jeweils einen Randabschnitt eines jeweiligen Ausnehmungs-Randbereichs 31 bzw. 32 des Anschlussabschnitts 10 bilden, begrenzt. Die Ausnehmungs-Längsabschnitte 31a, 32a bilden jeweils ein Gewinde-Aufnahmeprofil 80 mit einer Mehrzahl von Aufnahmeprofil-Abschnitten 81 aus, die in einer Reihe angeordnet sind. Zwischen jeweils zwei Aufnahmeprofil-Abschnitten 81 ist ein Gewindeaufnahme-Tal 82 ausgebildet. Jeder Aufnahmeprofil-Abschnitt 81 ist jeweils aus zwei Gewindeflanken 81a, 81b gebildet, die zueinander entgegengesetzt gerichtet sind und die in ihrer Längserstreckung in Richtung zur Ausnehmungs-Öffnung 33 und quer zur Ausnehmungs-Erstreckungsrichtung R30 aufeinander zu verlaufen. Dabei kann vorgesehen sein, dass die zu der Ausnehmungs-Öffnung 33 hin gerichteten Enden jeweils mit einer Endfläche 81d miteinander verbunden sind. Dabei kann diese sich entlang der Ausnehmungs-Erstreckungsrichtung R30 erstrecken. Alternativ dazu kann vorgesehen sein, dass die Gewindeflanken 81a, 81b aufeinander zu verlaufen und dabei eine gemeinsame Kantenlinie ausbilden oder durch eine Abrundungsfläche miteinander verbunden sind. Nach der Erfindung ist vorgesehen, dass die Aufnahmeprofil-Abschnitte 81 jeweils als zwei aufeinander zulaufende Gewindeflanken 81a, 81b und mit einem diese verbindenden Randabschnitt 81c ausgebildet sind, der jeweils als eine Randlinie oder als eine Randfläche ausgeführt sein kann, wobei die Gewindeflanken 81a, 81b jeweils als senkrecht zur Ausnehmungs-Erstreckungsrichtung R30 gerade verlaufende Ebenen oder als senkrecht zur Ausnehmungs-Erstreckungsrichtung R30 im Wesentlichen gerade Ebenen gestaltet sind. Speziell können die Gewindeflanken 81a, 81b als insgesamt gerade verlaufende Ebenen gestaltet sein.

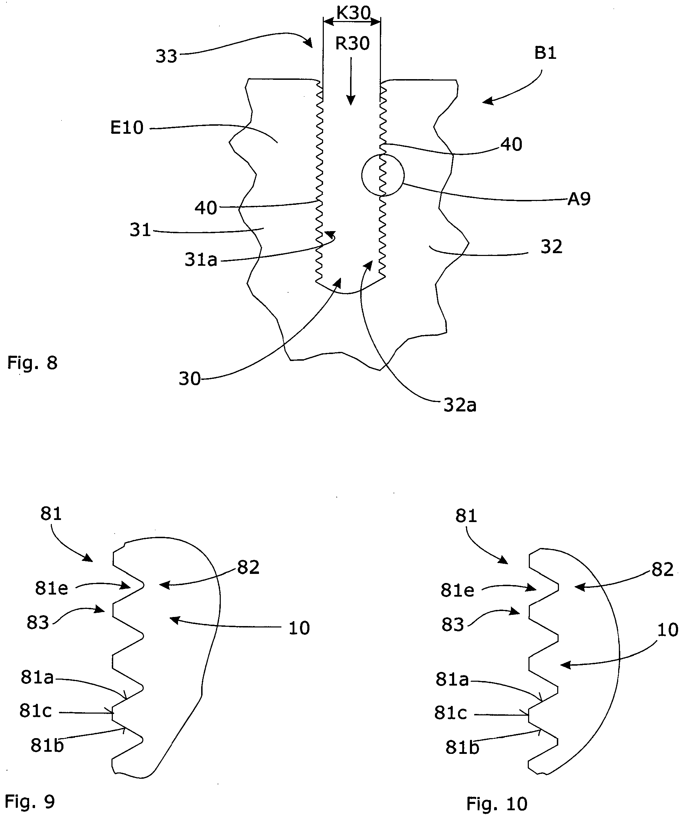

Zwischen jeweils zwei Aufnahmeprofil-Abschnitten 81 ist ein Aufnahmeprofil-Abschnitt 81e ausgebildet. Bei dem sich in der Richtung R10 entstehenden Profilverlauf des Aufnahmeprofils 80 kann der Aufnahmeprofil-Abschnitt 81e einen gekrümmten Verlauf (Figur 9) oder einen geradlinigen Verlauf (Figur 10) haben.

Generell kann bei den hierin beschriebenen, also insbesondere an Hand der Figuren der Figuren 1 bis 54 beschriebenen Ausführungsformen mit einem Aufnahmeprofil 80 vorgesehen sein, dass die Ausnehmungs-Längsabschnitte 31a, 32a im Wesentlichen in einen Winkel von ≤ 3 Grad zueinander verlaufen, wobei dies für eine Referenzstellung gilt, bei der auf das jeweilige erste Bauteil oder das Bauteil mit dem Aufnahmeprofil 80 keine inneren Spannungen aufweist, also keine äußeren Kräfte wirken.

Das zweite Bauteil B5 weist einen zweiten Anschlussabschnitt 50 auf, der insbesondere plattenförmig ausgebildet sein kann. Das zweite Bauteil B5 erstreckt sich in einer zweiten ebenen und insbesondere geraden Erstreckung E50, die quer zu der ersten ebenen und insbesondere geraden Erstreckung E10 des ersten Bauteils B1 verläuft. Der zweite Anschlussabschnitt 50 weist eine umlaufend geschlossene Durchgangsöffnung 53 auf. Bei der Verbindungsvorrichtung 1 nach der Figur 1 liegt eine erste Oberfläche 50a des zweiten plattenförmigen Anschlussabschnitts 50 des zweiten Bauteils B5 auf der Randabschnitts-Oberfläche 15 des ersten Bauteils B1 auf.

Das zweite Bauteil B5 weist einen Funktionsabschnitt 59 auf, der an den Anschlussabschnitt 50 anschließt und je nach dem Verwendungszweck und der Funktion des zweiten Bauteils B5 gestaltet ist. Bei der in der Figur 1 gezeigten Ausführungsform ist der Funktionsabschnitt 59 ebenfalls als plattenförmiger Abschnitt ausgebildet, der sich in derselben Erstreckungsrichtung E50 wie der Anschlussabschnitt 50 erstreckt. Beispielsweise kann der Funktionsabschnitt 59 dazu vorgesehen sein, dass an diesem Bauteile befestigt und z.B. angeklemmt, angeschraubt oder angeschweißt werden.

Die Verbindungsvorrichtung 1 weist weiterhin eine Gewindeschraube 90 mit einem Schraubenschaft 92 auf. Die Gewindeschraube 90 kann zusätzlich einen an den Schraubenschaft 92 anschließenden Schraubenkopf 91 aufweisen. Auch kann vorgesehen sein, dass die Gewindeschraube 90 oder der Schraubenschaft 92, also die Gewindeschraube 90 ohne Schraubenkopf 91, an dem zweiten Bauteil B5 fixiert ist und von diesem absteht.

An der Außenseite 92a des Schraubenschafts 92 ist ein Gewinde 93 mit einem von den Aufnahmeprofil-Abschnitten 81 aufgenommenen Gewindeprofil-Abschnitt 95 ausgebildet. Die Gewindeschraube 90 durchragt die Durchgangsöffnung 53 von einer entgegengesetzt zur ersten Oberfläche 50a des zweiten plattenförmigen Anschlussabschnitts 50 orientierten zweiten Oberfläche 50b aus und mittels dem Schraubenkopf 91 das zweite Bauteil B5 an die Randabschnitts-Oberfläche 15 des ersten Bauteils B1 anpresst.

Dabei kann insbesondere vorgesehen sein, dass der Nennmaß DNS des Gewindes des Schraubenschafts 92 und die Dicke D10 der Ausnehmungs-Randbereiche des Anschlussabschnitts betragsmäßig in einem Verhältnis D10 / DNS zueinander stehen, für das gilt: D10 / DNS ≤ 3,0. In besonders vorteilhafter Weise kann für den Zusammenhang zwischen D10 und DNS gelten: $\mathrm{D10} * \mathrm{L} = \sqrt{\mathrm{DNS}^2 - \mathrm{K30}^2}$ wobei K30 das Kernmaß der Gewinde-Aufnahmeprofile 80 derselben Befestigungs-Ausnehmung darstellt und L ein Proportionalitätsfaktor ist der einen Wert zwischen 0,8 und 1,2 hat. Insbesondere kann das Verhältnis D10 / DNS so festgelegt sein, dass der Gewindeprofil-Abschnitt 95 in der ersten ebenen Erstreckung E10 gesehen über die entgegengesetzt zueinander gelegenen Oberflächen 10a, 10b des ersten plattenförmigen Anschlussabschnitts 10 heraussteht.

Dabei kann insbesondere als Dicke D10 des ersten Anschlussabschnitts diejenige Dicke verwendet werden, die der erste Anschlussabschnitt unmittelbar an den Aufnahmeprofil-Abschnitten hat. Insbesondere kann bei den erfindungsgemäßen Ausführungsformen generell vorgesehen sein, dass dabei als diejenige Dicke D10 verwendet wird, die derjenige Randabschnitt hat, der den Übergang der Gewindeflanken 81a, 81b zu den flächigen Oberflächen des ersten Anschlussabschnitts bildet.

Das Nennmaß DNS des Schraubenschafts 92 und die linear und parallel zueinander verlaufenden Aufnahmeprofile jeweils gegenüberliegender Ausnehmungs-Längsabschnitte, insbesondere das jeweilige Kernmaß, können so gestaltet sein, dass der jeweilige Schraubenschaft und die Gewinde-Aufnahmeprofile 80 einer jeweiligen Befestigungs-Ausnehmung 30 eine leichtgängige oder schwergängige Verbindung eingehen.

Generell kann bei den erfindungsgemäßen Ausführungsformen der Verbindungsvorrichtung 1 vorgesehen sein, dass die Aufnahmeprofil-Abschnitte 81 jeweils als Zähne 82z oder als geradflächige Gewindeabschnitte ausgebildet sind. Die Aufnahmeprofil-Abschnitte 81 sind somit an den Ausnehmungs-Längsabschnitten 31a, 32a ausgebildet und erstrecken sich in Richtung zur Befestigungs-Ausnehmung 30. Die Oberflächen der Aufnahmeprofil-Abschnitte 81 weisen aufeinander zulaufende Gewindeflanken 81a, 81b und einen diese zur Ausbildung eines freien Endes 83 des jeweiligen Aufnahmeprofil-Abschnitte 81 verbindenden Randabschnitt 81c auf. Die Gewindeflanken 81a, 81b können dabei als zumindest senkrecht zur Richtung des Gewinde-Aufnahmeprofils 80 gerade Ebenen oder als zumindest senkrecht zur Richtung des Gewinde-Aufnahmeprofils 80 im Wesentlichen gerade verlaufende Ebenen gestaltet sein. Der Randabschnitt 81c ist als eine gerade verlaufende Ebene oder als gerader Randlinien-Abschnitt bei einem Zulaufen der Gewindeflanken 81a, 81b ausgeführt sein. Dadurch ist ein einfaches Herstellungsverfahren durch ein Trennverfahren durch eine Materialformung quer zur ebenen Erstreckung E10 des plattenförmigen Anschlussabschnitts 10 möglich.

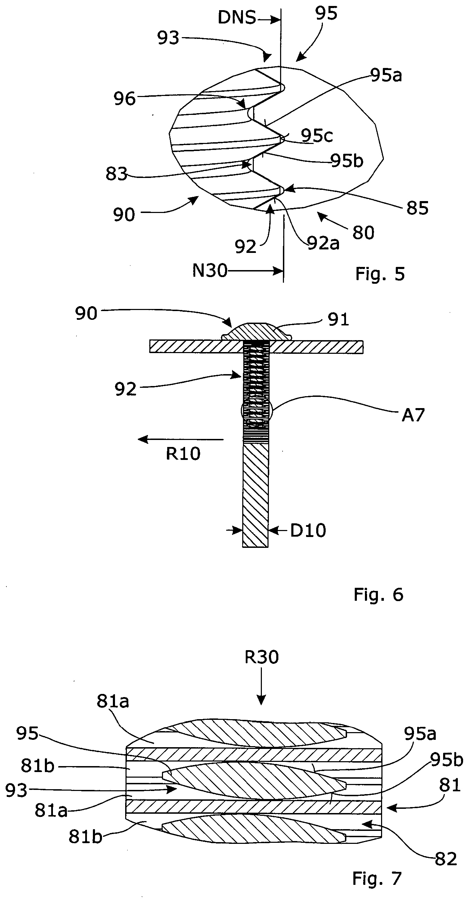

Eine Außenseite oder äußere Oberfläche 92a des Schraubenschafts 92 der Gewindeschraube 90 weist zumindest einen spiralförmig umlaufenden Gewindeprofil-Abschnitt 95 auf, die das Gewinde 93 ausbildet, so dass zwischen diesem umlaufend ein Gewindetal 96 verläuft. In der Figur 5 ist ein eingängiges Gewinde dargestellt. Der spiralförmig umlaufende Gewindeprofil-Abschnitt 95 ist aus einer gegebenenfalls dem Schraubenkopf 91 zugewandten ersten Gewindeprofil-Flanke 95a und einer entgegengesetzt zu dieser orientierten zweiten Gewindeprofil-Flanke 95b gebildet. Die erste und die zweite Gewindeprofil-Flanke 95a, 95b sind über einen Randabschnitt 95c miteinander verbunden, der bei einem Zulaufen der Gewindeprofil-Flanken 95a, 95b als eine Linie oder, wie dargestellt, als eine Fläche ausgeführt sein kann. Der Schraubenschaft 92 kann auch als mehrgängiges Gewinde ausgeführt sein. Der Nennmaß DNS des Gewindes des Schraubenschafts 92 ist der größte Durchmesser des Gewindeprofil-Abschnitts 95.

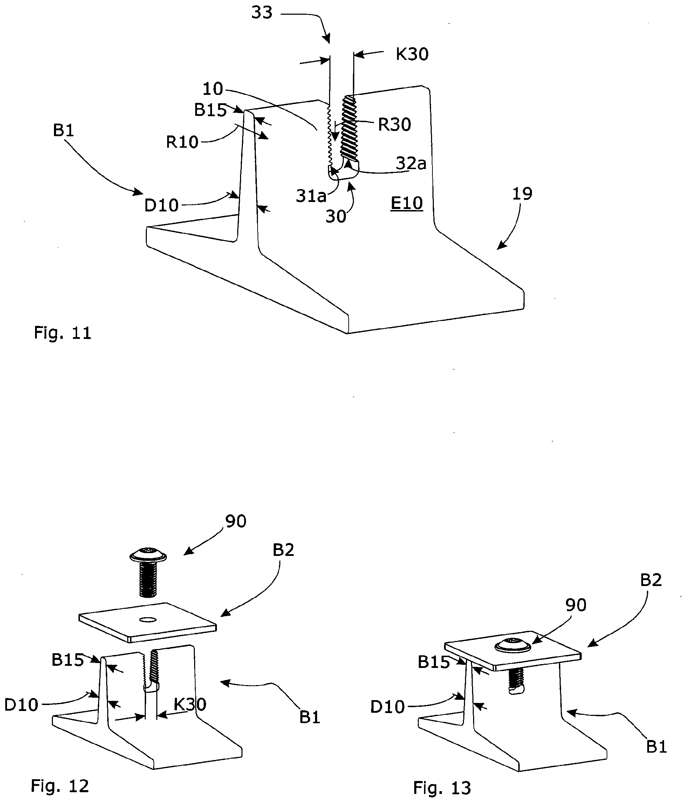

In der Figur 11 ist eine perspektivische Darstellung eines ersten Bauteils B1 mit einer Befestigungs-Ausnehmung 30 und einem Gewinde-Aufnahmeprofil 80 gemäß der Ausführungsform der Figur 1 dargestellt. Der Anschlussabschnitt 10 ist im Wesentlichen plattenförmig ausgeführt, wobei die entgegengesetzt zueinander gelegenen Oberflächen schräg zueinander verlaufen. Der Funktionsabschnitt 19, der sich an den Anschlussabschnitt 10 anschließt, ist als sich quer zum Anschlussabschnitt 10 erstreckendes Teil ausgeführt, so dass das erste Bauteil B1 insgesamt ein T-Profilteil ausbildet. Der Funktionsabschnitt 19 kann beispielsweise auf eine Oberfläche einer Stützvorrichtung aufgelegt und an dieser befestigt, also z.B. mit dieser verschraubt oder verklebt werden.

Zur Fixierung des jeweils ersten und des jeweils zweiten Bauteils einer Verbindungsvorrichtung 1 mittels einer Befestigungs-Ausnehmung in Bezug auf eine Drehung in einer Drehrichtung entlang der Erstreckungsrichtung der jeweiligen Befestigungs-Ausnehmung relativ zueinander kann die Verbindungsvorrichtung 1 eine Eingriffsvorrichtung E aufweisen: Das jeweils erste Bauteil einer Verbindungsvorrichtung 1 kann generell zumindest einen Fixierungs-Vorsprung aufweisen, der mit einer Fixierungs-Ausnehmung des jeweils zweiten Bauteils zusammen wirkt, wenn diese mittels der Befestigungsschraube 90 aneinander befestigt sind, so dass beide Bauteile einer Verbindungsvorrichtung 1 zusammen eine Eingriffsvorrichtung E zur Fixierung des ersten und des zweiten Bauteils oder eine Bewegungssicherung in Bezug auf eine Drehung relativ zueinander ausbilden. Umgekehrt kann die Eingriffsvorrichtung E aus einer Fixierungs-Ausnehmung, die in dem dem zweiten Bauteil zugewandten und im Befestigungszustand an diesem anliegenden Anlage-Randabschnitt, ausgebildet ist und einem an der zweiten Oberfläche des jeweils zweiten Bauteils ausgebildeten und von diesem weg ragenden Fixierungs-Vorsprung gebildet sein, so dass beide Bauteile durch diese Eingriffsvorrichtung E aneinander in Bezug auf eine Drehrichtung mit einem Drehvektor entlang der jeweiligen Ausnehmungs-Richtung (z.B. bei der Ausführungsform der Figur 1 die Ausnehmungs-Richtung R30), fixiert sind. Auch ist eine Kombination beider Realisierungsformen jeweils mit einer Kombination der hierin gezeigten Arten optional nach der Erfindung vorgesehen. Dabei liegen im befestigten Zustand der Verbindungsvorrichtung 1 der zumindest eine Fixierungs-Vorsprung derart in der jeweiligen Fixierungs-Ausnehmung, dass sich der Fixierungs-Vorsprung nicht oder nur gering in der jeweiligen Fixierungs-Ausnehmung bewegen kann. Unter "gering" wird in diesem Zusammenhang ein Bewegungsbereich verstanden, der höchstens ein Zehntel der durchschnittlich kleinsten Dicke des zweiten Bauteils entlang der Durchgangsöffnung beträgt. Dabei können Fixierungs-Vorsprung und die jeweilige Fixierungs-Ausnehmung auch eine Presspassung bilden, bei der eine drehfeste Verbindung zwischen den jeweiligen Bauteilen realisiert wird und auch geringe Drehungen zwischen diesen verhindert werden. Auch kann bei der Eingriffsvorrichtung E an dem jeweiligen Fixierungs-Vorsprung oder an der jeweilige Fixierungs-Ausnehmung eine Hinterschnitt-Vertiefung ausgebildet sein, die mit einem Teilvorsprung an dem jeweiligen anderen der Komponenten aus Fixierungs-Vorsprung oder Fixierungs-Ausnehmung zusammenwirkt und eine Eingriffsstellung realisiert, wenn Hinterschnitt-Vertiefung und Teilvorsprung ineinander liegen.

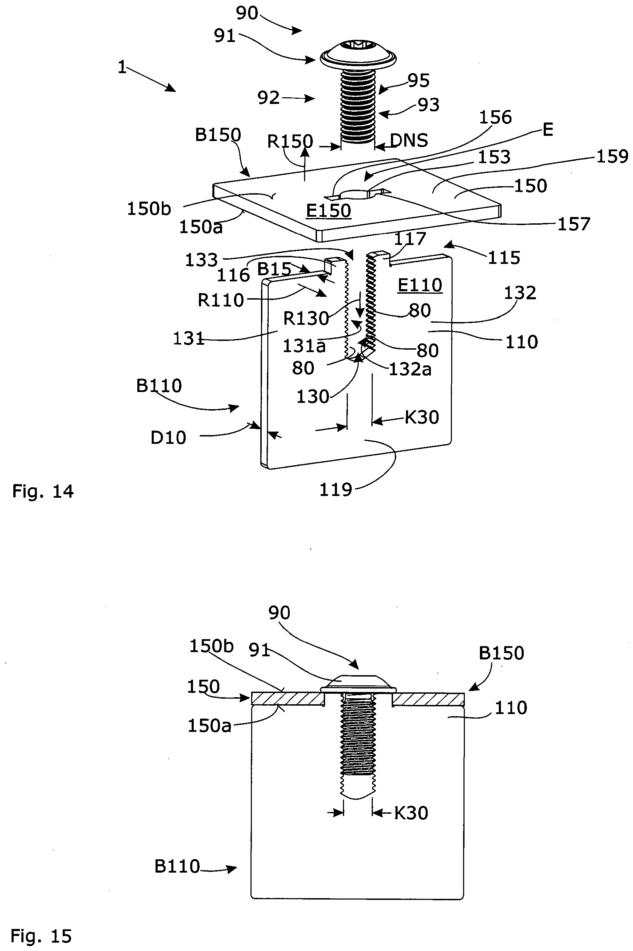

In den Figuren 14 bis 28 sind verschiedene Varianten der Eingriffsvorrichtung E dargestellt, wobei der zumindest eine Fixierungs-Vorsprung an dem ersten Bauteil und die zumindest eine Fixierungs-Ausnehmung an dem zweiten Bauteil ausgebildet ist. Dies kann auch umgekehrt realisiert sein. In diesem Fall ist die zumindest eine Fixierungs-Ausnehmung insbesondere in dem Anlage-Randabschnitt ausgebildet.

Die Figur 14 zeigt eine Ausführungsform der erfindungsgemäßen Verbindungsvorrichtung 1 mit einem ersten Bauteil B110, das weitgehend nach dem ersten Bauteil 10 der Figur 1 gebildet ist, einem zweiten Bauteil B150, das weitgehend nach dem zweiten Bauteil 50 der Figur 1 gebildet ist, und mit einer Eingriffsvorrichtung E. Das erste Bauteil B110 erstreckt sich in einer ersten ebenen Erstreckung E110 und weist einen ersten Anschlussabschnitt 110 und eine Befestigungs-Ausnehmung 130 auf, die sich unter Ausbildung einer Ausnehmung 133 an einer Randabschnitts-Oberfläche 115 des ersten Bauteils B110 von diesem aus in einer Ausnehmungs-Erstreckungsrichtung R130 quer zu der Randabschnitts-Oberfläche 115 des ersten Bauteils B110 erstreckt. Das erste Bauteil B1 weist weiterhin den Funktionsabschnitt 119 auf, der an den Anschlussabschnitt 110 anschließt. Die Befestigungs-Ausnehmung 130 ist durch zwei entlang zueinander verlaufende Ausnehmungs-Längsabschnitte 131a, 132a jeweils eines Ausnehmungs-Randbereichs 131 bzw. 132 des Anschlussabschnitts 110 begrenzt. Die Ausnehmungs-Längsabschnitte 131a, 132a bilden jeweils ein Gewinde-Aufnahmeprofil 80 aus, wie es hierin anhand der Figur 2 beschrieben ist.

Das zweite Bauteil B150 weist einen zweiten Anschlussabschnitt 150 mit einer ersten Oberfläche 150a und einer entgegengesetzt zu dieser gelegenen zweiten Oberfläche 150b auf. In dem zweiten Anschlussabschnitt 150 ist die Durchgangsöffnung 153 ausgebildet. Das zweite Bauteil B150 weist einen Funktionsabschnitt 159 auf, der sich in der Erstreckung E150 des zweiten Bauteils B150 an den Anlageabschnitt 150 anschließt.

Die Eingriffsvorrichtung E weist zwei Fixierungs-Ausnehmungen 156, 157 auf, die im zweiten Bauteil B150 als Erweiterungen der Durchgangsöffnung 153 jeweils in zueinander entgegengesetzten Richtungen der Erstreckung E150 des zweiten Bauteils B150 realisiert sind. Das erste Bauteil B110 weist zwei Vorsprünge 116, 117 auf, die jeweils als Verlängerungen der Ausnehmungs-Randbereiche 131 bzw. 132 des Anschlussabschnitts 110 in der Randabschnitts-Oberfläche 115 ausgebildet sind. Die Vorsprünge 116, 117 sind in Bezug auf ihre Position und ihre Größe sowie Gestalt derart ausgeführt, dass diese im Befestigungszustand der Verbindungsvorrichtung 1 in jeweils eine der Fixierungs-Ausnehmungen 156, 157 eingreifen, um beide Bauteile B110, B150 durch diese Eingriffsvorrichtung E aneinander in Bezug auf eine Drehrichtung, deren Drehvektor entlang der Ausnehmungs-Richtung R130 verläuft, zu fixieren.

Dabei kann insbesondere vorgesehen sein, dass das Nennmaß DNS des Gewindes des Schraubenschafts 92 und die Dicke D110 der Ausnehmungs-Randbereiche des Anschlussabschnitts betragsmäßig in einem Verhältnis D110 / DNS zueinander stehen, für das gilt: D110 / DNS ≤ 3,0. In besonders vorteilhafter Weise kann für den Zusammenhang zwischen D110 und DNS gelten: $\mathrm{D110} * \mathrm{L} = \sqrt{\mathrm{DNS}^2 - \mathrm{K30}^2}$ wobei K30 das Kernmaß der Gewinde-Aufnahmeprofile 80 derselben Befestigungs-Ausnehmung darstellt und L ein Proportionalitätsfaktor ist der einen Wert zwischen 0,8 und 1,2 hat. Insbesondere kann das Verhältnis D110 / DNS so festgelegt sein, dass der Gewindeprofil-Abschnitt 95 in der ersten ebenen Erstreckung E110 gesehen über die entgegengesetzt zueinander gelegenen Oberflächen des ersten plattenförmigen Anschlussabschnitts 110 heraussteht.

Das Nennmaß DNS des Gewindes des Schraubenschafts 92 und die linear und parallel zueinander verlaufenden Aufnahmeprofile jeweils gegenüberliegender Ausnehmungs-Längsabschnitte können so gestaltet sein, dass der jeweilige Schraubenschaft und die Gewinde-Aufnahmeprofile 80 einer jeweiligen Befestigungs-Ausnehmung 30 eine leichtgängige oder schwergängige Verbindung eingehen.

Die Merkmale der Ausführungsform der Figur 1 können auch einzeln an der Ausführungsform der Figur 14 ausgebildet sein und umgekehrt.

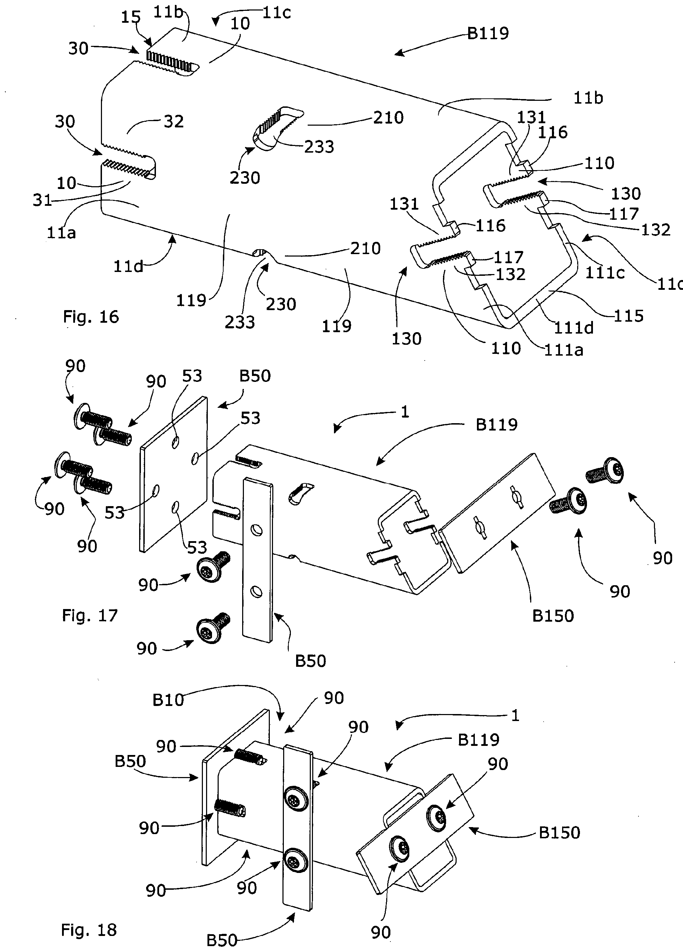

In der Figur 16 ist eine weitere Ausführungsform des ersten Bauteils mit mehreren Befestigungs-Ausnehmungen jeweils zur Aufnahme eines Schraubenschafts 92 dargestellt. Die in der Figur 16 gezeigte Ausführungsform des ersten Bauteils B119 ist insbesondere eine Kombination der Ausführungsform des ersten Bauteils B10 der Figur 1 und der Ausführungsform des ersten Bauteils B110 der Figur 14. Das erste Bauteil B119 weist mehrere Funktionsabschnitte 119 und mehrere Befestigungs-Ausnehmungen 30 oder 130 mit Ausnehmungs-Randbereichen 31, 32 bzw. 131, 132 gemäß des jeweils ersten Bauteils B10 bzw. B110 auf, wobei das erste Bauteil B119 als einstückiges und insbesondere als aus einem Stück hergestelltes Bauteil ausgebildet ist. Bei der Verbindungsvorrichtung 1 nach den Figuren 16 bis 18 sind Befestigungs-Ausnehmungen 30 des Anschlussabschnitts 10 gemäß dem ersten Bauteil B1 und Befestigungs-Ausnehmungen 130 des Anschlussabschnitts 110 gemäß dem ersten Bauteils B110 paarweise an entlang zueinander verlaufenden Abschnitten von jeweils entgegengesetzt zueinander gelegenen Rohrenden angeordnet und zueinander entgegengesetzt orientiert ausgebildet. Dabei ist das erste Bauteil B119 als rohrförmiger Körper gestaltet, und sind die Befestigungs-Ausnehmungen 30, 130 an zueinander entgegengesetzt orientierten Wandabschnitten 11a, 11b, 11c, 11d bzw. 111a, 111b, 111c, 111d des ersten Bauteils B119 oder der jeweiligen Anschlussabschnitte 10 bzw. 110 ausgebildet. Zusätzlich sind im Verbindungsbereich der Funktionsabschnitte 19, 119 abschnittsweise Anschlussabschnitte 230 jeweils mit einer Befestigungs-Ausnehmung 233 ausgebildet.

In der Figur 18 ist eine Verbindungsvorrichtung 1 mit dem ersten Bauteil B119 der Figur 16 gezeigt, an dem mehrere zweite Bauteile gemäß der Figuren 1 und 14 mit den Bezugszeichen B50, B150 befestigt sind.

Das erste Bauteil B119 kann - statt als rohrförmiger Körper gemäß den Figuren 16 bis 18 - generell als Hohlkörper oder auch als Profilkörper, insbesondere Strangpress- oder Walzprofile, ausgeführt sein, die jeweils zumindest einen Wandabschnitt 11a oder 111a oder Paare von entlang zueinander verlaufenden Wandabschnitten 11a, 11c bzw. 111a, 111c aufweisen. Das erste Bauteil B119 kann auch als Vollkörper ausgeführt sein, von dem solche Wandabschnitte abstehen.

Die Merkmale der Ausführungsform der Figur 1 können auch einzeln an der Ausführungsform der Figur 16 ausgebildet sein und umgekehrt.

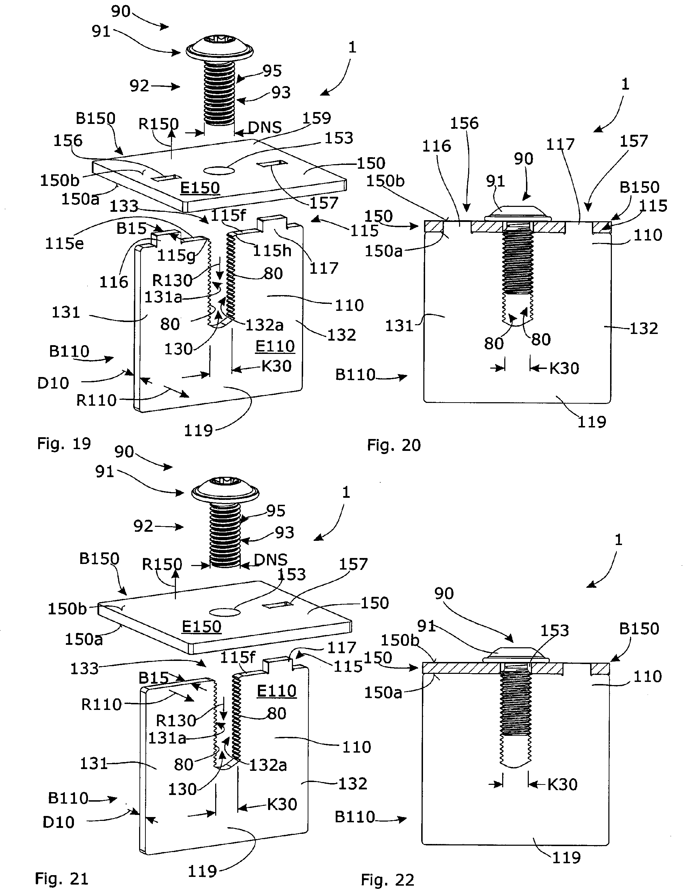

Die Figur 19 zeigt eine weitere Ausführungsform der erfindungsgemäßen Verbindungsvorrichtung 1 mit einer Eingriffsvorrichtung, die als Variante zu der Eingriffsvorrichtung nach der Figur 14 ausgeführt ist. Dabei sind die Vorsprünge 116, 117 an der Randabschnitts-Oberfläche 115 jeweils in einem Abstand zu der Befestigungs-Ausnehmung 130 bzw. der Ausnehmungs-Öffnung 133 ausgebildet, so dass diese von der Ausnehmungs-Öffnung 133 in einem Abstand gelegen sind und zwischen der Ausnehmungs-Öffnung 133 und den Vorsprüngen 116, 117 jeweils ein Zwischenabschnitt 115e bzw. 115f der Randabschnitts-Oberfläche 115 gelegen ist. Dementsprechend sind die Fixierungs-Ausnehmungen 156, 157 beabstandet zu der Durchgangsöffnung 153 gelegen.

Gegenüber der Ausführungsform der erfindungsgemäßen Verbindungsvorrichtung 1 nach der Figur 19 ist bei der Ausführungsform der erfindungsgemäßen Verbindungsvorrichtung 1 nach der Figur 21 nur ein Vorsprung 117 an einem Zwischenabschnitt 115f und eine entsprechend gestaltete Fixierungs-Ausnehmung 157 ausgebildet.

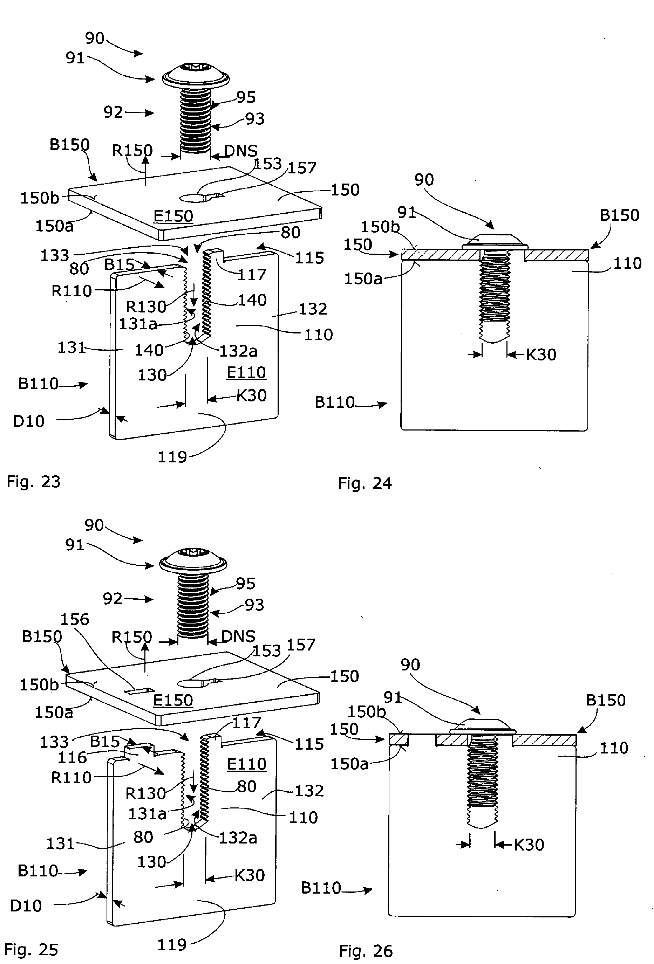

Gegenüber der Ausführungsform der erfindungsgemäßen Verbindungsvorrichtung 1 nach der Figur 14 ist bei der Ausführungsform der erfindungsgemäßen Verbindungsvorrichtung 1 nach der Figur 23 nur ein Vorsprung 117 und eine entsprechend gestaltete Fixierungs-Ausnehmung 157 ausgebildet.

Die Ausführungsform der erfindungsgemäßen Verbindungsvorrichtung 1 nach der Figur 25 ist eine Kombination von Merkmalen der Ausführungsform der Verbindungsvorrichtung 1 nach den Figuren 14, 19 und 23.

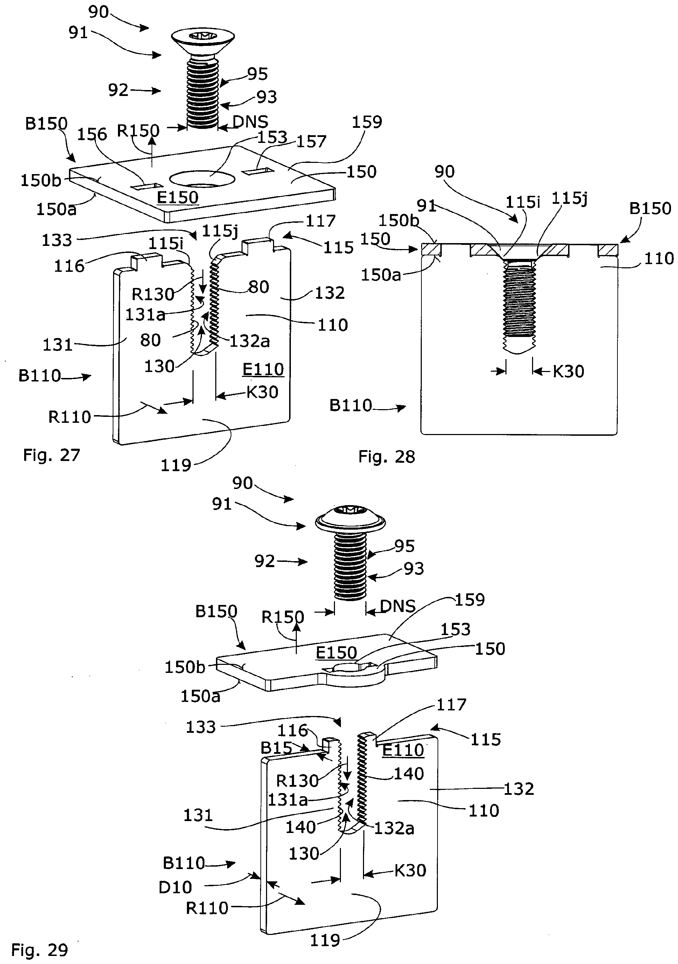

Bei der Ausführungsform der erfindungsgemäßen Verbindungsvorrichtung 1 nach der Figur 27 ist der Eckabschnitt 115g, 115f oder die Ecke der Randabschnitts-Oberfläche 115 als abgeschrägter Flächenabschnitt 115i bzw. 115j ausgebildet, um eine Gewindeschraube 90 in Form einer Senkkopfschraube aufzunehmen.

Bei der Ausführungsform der erfindungsgemäßen Verbindungsvorrichtung 1 nach der Figur 29 ist gezeigt, dass sich die Ausnehmungs-Randbereiche 131, 132 des Anschlussabschnitts 150 nur abschnittsweise über die Randabschnitts-Oberfläche 115 erstrecken, um Vorsprünge 116 bzw. 117 auszubilden. Das zweite Bauteil B150 weist einen Funktionsabschnitt 159 auf, der sich in der Erstreckung E150 des zweiten Bauteils B150 an den Anschlussabschnitt 150 anschließt.

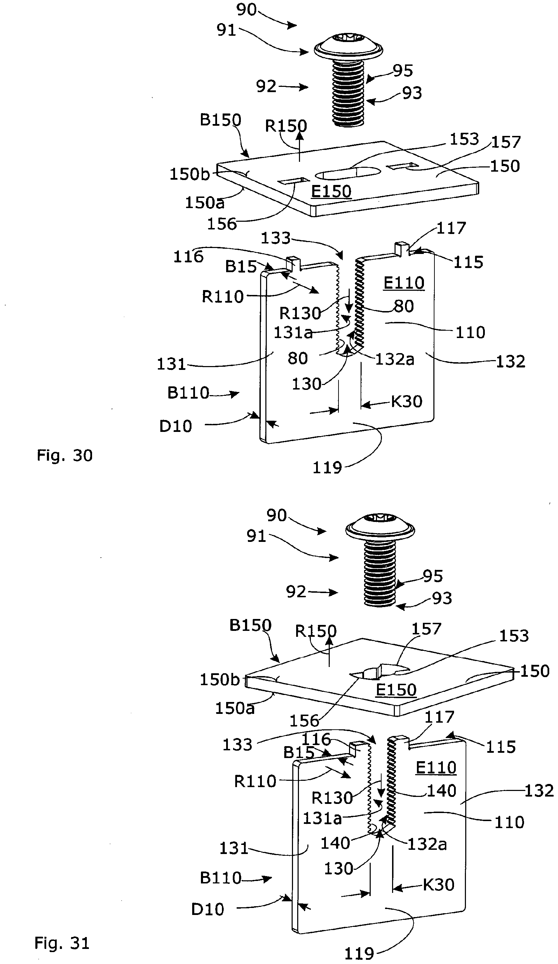

Die Figur 30 zeigt eine Ausführungsform, bei der die Vorsprünge 116, 117 beabstandet von der Ausnehmung 133 gelegen sind.

Die Figur 31 zeigt eine Ausführungsform, bei der die Fixierungs-Ausnehmungen 156, 157 als Erweiterungen der Durchgangsöffnung 153 gestaltet sind.

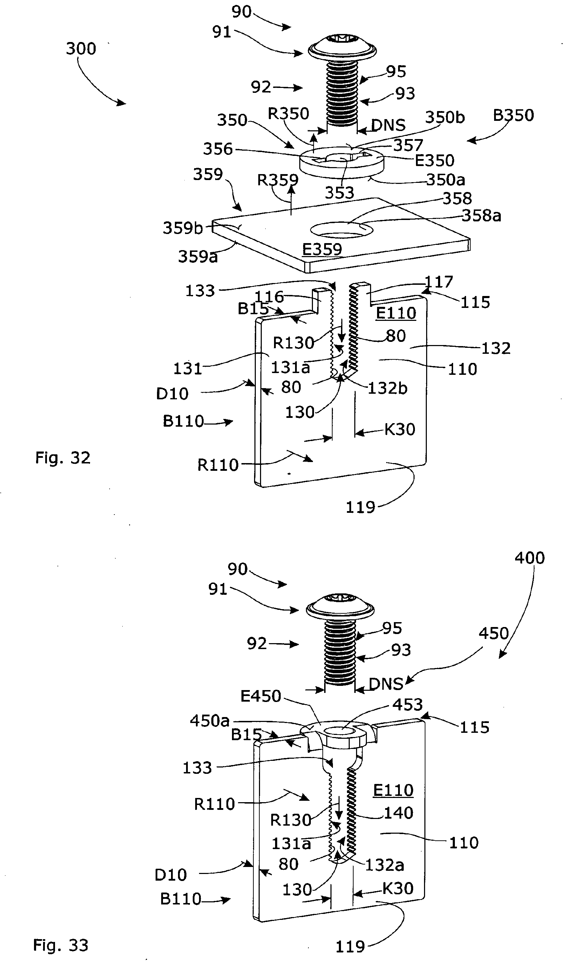

Anhand der in der Figur 32 dargestellten Ausführungsform der erfindungsgemäßen Verbindungsvorrichtung 300 ist gezeigt, dass der Anschlussabschnitt 350 des zweiten Bauteils B350 und ein sich entlang einer insbesondere geraden Erstreckungsebene E359 erstreckender Funktionsabschnitt 359 des zweiten Bauteils 350 jeweils als separate Bauteile hergestellt sein können.

Dabei ist - wie dargestellt - insbesondere der Anschlussabschnitt 350 als plattenförmiges Einsatzstück ausgeführt. Der Anschlussabschnitt 350 weist eine dem ersten Bauteil B110 zugewandte erste Oberfläche 350a und eine entgegengesetzt zu dieser gelegenen zweiten Oberfläche 350b auf. In dem Anschlussabschnitt 350 ist eine Durchgangsöffnung 353 ausgebildet. In dem Fall, dass die Verbindungsvorrichtung 300 eine Eingriffsvorrichtung E aufweist, kann diese eine Fixierungs-Ausnehmung und zumindest einen Vorsprung aufweisen.

Die Ausführungsform der erfindungsgemäßen Verbindungsvorrichtung 300 nach der Figur 32 weist zwei Fixierungs-Ausnehmungen 356, 357 auf, die im zweiten Bauteil B350 als Erweiterungen der Durchgangsöffnung 353 ausgebildet sind. Das erste Bauteil B110 der Verbindungsvorrichtung 300 weist dementsprechend zwei Vorsprünge 116, 117 auf, die jeweils als Verlängerungen der Ausnehmungs-Randbereiche 131 bzw. 132 des Anschlussabschnitts 110 ausgebildet sind. Die Vorsprünge 116, 117 sind in Bezug auf ihre Position und ihre Größe sowie Gestalt derart ausgeführt, dass diese im Befestigungszustand der Verbindungsvorrichtung 300 in jeweils eine der Fixierungs-Ausnehmungen 356, 357 eingreifen, um den Anschlussabschnitt 350 an dem ersten Bauteil B110 durch diese Eingriffsvorrichtung E in Bezug auf eine Drehrichtung, deren Drehvektor entlang der Ausnehmungs-Richtung R130 verläuft, zu fixieren.

Dabei weist der Funktionsabschnitt 359 eine Aufnahme-Öffnung 358 insbesondere in Form einer Durchgangsöffnung auf, in die an der Seite einer zweiten Oberfläche 359b des Funktionsabschnitts 359 der Anschlussabschnitt 350 formschlüssig einsetzbar ist und eingesetzt ist. Dabei kann insbesondere vorgesehen sein, dass die Aufnahme-Öffnung 358 eine Anlagevorrichtung 358a in Form einer Randabschnitts-Oberfläche aufweist, die als Gegenlager für den Anschlussabschnitt 350 an dem Funktionsabschnitt 359 ausgebildet ist. Bei der Ausführungsform der Figur 32 ist die Anlagevorrichtung 358a als sich zu einer, im Montagezustand dem ersten Bauteil B110 zugewandten ersten Oberfläche 359a, verjüngende Oberfläche ausgeführt. Alternativ dazu kann die Anlagevorrichtung 358a z.B. mit einem an der Anlagevorrichtung 358a ausgebildeten Vorsprung, der stiftförmig oder abschnittweise umlaufend oder vollständig umlaufend ist, gebildet sein.

Weiterhin kann die Verbindungsvorrichtung 300 eine Fixierungsvorrichtung aufweisen, durch die der Anschlussabschnitt 350 drehfest an dem Funktionsabschnitt 359 fixiert ist. Dies kann durch ein Paar aus Vorsprung und Ausnehmung, die jeweils an einem der beiden Teile Anschlussabschnitt 350 und Funktionsabschnitt 359 ausgebildet sind, realisiert sein. Alternativ oder zusätzlich dazu können Anschlussabschnitt 350 und Funktionsabschnitt 359 an ihren jeweils zugewandten Oberflächen miteinander verzahnt sein.

Anhand der in der Figur 33 dargestellten Ausführungsform der Verbindungsvorrichtung 400 ist gezeigt, dass der zweite Anschlussabschnitt 450 mit der Durchgangsöffnung 453 einstückig mit dem Anschlussabschnitt 110 des ersten Bauteils B110 ausgebildet und insbesondere als ein Stück hergestellt oder aus einem Stück hergestellt sein kann. Bei der dargestellten Ausführungsform besteht das zweite Bauteil B450 nur aus dem zweiten Anschlussabschnitt 450. Das zweite Bauteil B450 kann jedoch zusätzlich einen Funktionsabschnitt (nicht dargestellt) aufweisen, der z.B. zwischen der von dem ersten Bauteil B110 abgewandten Oberfläche 450a und der Gewindeschraube 90 eingeklemmt werden kann. Dabei kann der Funktionsabschnitt eine Ausnehmung aufweisen, die die Gewindeschraube 90 durchragt, um den Funktionsabschnitt an der zweiten Anschlussvorrichtung 450 zu befestigen. Das zweite Bauteil B450 kann auch einen Funktionsabschnitt (nicht dargestellt) aufweisen, der an dem zweiten Anschlussabschnitt 450 befestigt sein kann.

Die Ausführungsformen der Figuren 34 und 35 weisen ein erstes Bauteil 110 mit zwei Anschlussabschnitten 110, jeweils mit einer Befestigungs-Ausnehmung 130 und ein zweites Bauteil B150 mit zwei zweiten Anschlussabschnitten 150 mit jeweils einer Durchgangsöffnung 153 auf, wobei die Befestigungs-Ausnehmungen 130 und die Durchgangsöffnungen 153 derart positioniert und gestaltet sind, dass zwei Gewindeschrauben 90 jeweils eine der Durchgangsöffnungen 153 durchragen und in jeweils einer Befestigungs-Ausnehmung 130 abschnittsweise gelegen und von dieser aufgenommen sind. Diese Ausführungsformen weisen jeweils eine Eingriffsvorrichtung E auf, durch die die Bauteile B110, B150 aneinander in Bezug auf eine Drehrichtung, deren Drehvektor entlang der Ausnehmungs-Richtung R130 verläuft, fixiert werden können. Bei den in den Figuren 34 und 35 dargestellten Ausführungsformen ist die Eingriffsvorrichtung E nach einer oder mehreren der Figuren 14 bis 25 ausgeführt.

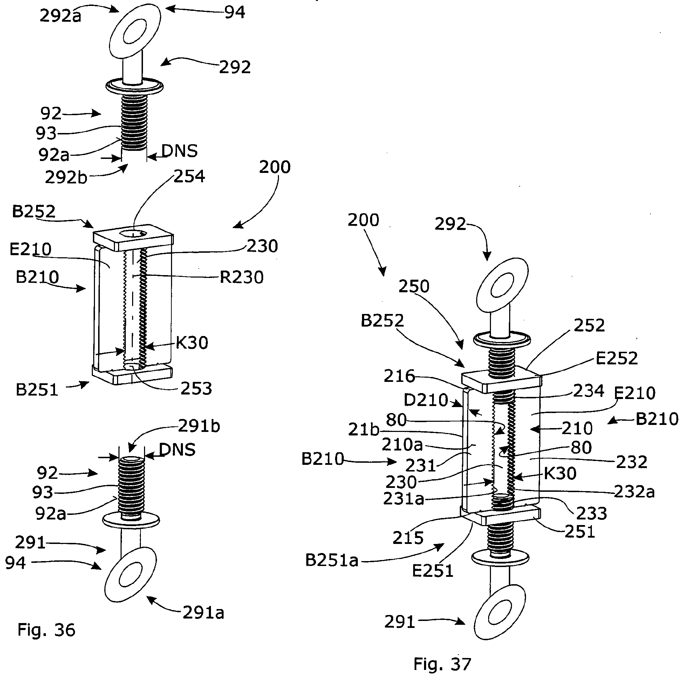

Die Figuren 36 und 37 zeigen eine Ausführungsform der Verbindungsvorrichtung 200, die ein Kopplungsbauteil B210 mit einer in dessen ebenen Erstreckung oder Längserstreckung E210 durchgehenden Befestigungs-Ausnehmung 230, zwei Anschlussvorrichtungen B251, B252 und zwei von zwei entgegengesetzt zueinander gelegenen Seiten der Befestigungs-Ausnehmung 230 in diese zumindest teilweise hineinragende Gewindeschrauben 90 aufweist. Das Kopplungsbauteil B210 kann insbesondere plattenförmig gebildet sein.

Das Kopplungsbauteil B210 weist einen Anschlussabschnitt 210 mit Ausnehmungs-Randbereichen 231 bzw. 232 auf, der insbesondere plattenförmig ausgeführt sein kann.

Zwischen den Ausnehmungs-Randbereichen 231 bzw. 232 erstreckt sich die Befestigungs-Ausnehmung 230 in einer Längsachse R230 unter Ausbildung einer an einer ersten Randabschnitts-Oberfläche 215 ausgebildeten Ausnehmungs-Öffnung 233 des Kopplungsbauteils B210 und einer an einer zweiten Randabschnitts-Oberfläche 216 ausgebildeten Ausnehmungs-Öffnung 234 des Kopplungsbauteils B210 hindurch. Dabei ist der zweite Anlage-Randabschnitt 216 entgegengesetzt zu der ersten Randabschnitts-Oberfläche 215 gelegen. Die Ausnehmungs-Öffnungen 233, 234 sind miteinander verbunden und bilden eine Ausnehmungs-Öffnung einheitliche Ausnehmungs-Öffnung 230 aus. Die Ausnehmungs-Randbereiche 231 bzw. 232 können als separate Bauteile realisiert sein.

Die Befestigungs-Ausnehmung 230 ist durch zwei entlang zueinander verlaufende und einander gegenüber gelegene Ausnehmungs-Längsabschnitte 231a, 232a, die jeweils einen Randabschnitt eines jeweiligen Ausnehmungs-Randbereichs 231 bzw. 232 des Anschlussabschnitts 210 bilden, begrenzt. Die Ausnehmungs-Längsabschnitte 231a, 232a bilden jeweils ein Gewinde-Aufnahmeprofil 80 mit einer Mehrzahl von Aufnahmeprofil-Abschnitten 81 aus, die in einer Reihe angeordnet sind. Zwischen jeweils zwei Aufnahmeprofil-Abschnitten 81 ist ein Gewindeaufnahme-Tal 82 ausgebildet. Jeder Aufnahmeprofil-Abschnitt 81 ist, wie anhand der Figur 2 beschrieben, ausgeführt.

Die Anschlussvorrichtungen B251, B252 sind zur Verbindung der Ausnehmungs-Randbereiche 231 bzw. 232 und zur formsteifen Fixierung derselben aneinander vorgesehen. Ein erstes Anschlussbauteil B251 ist an der ersten Randabschnitts-Oberfläche 215 oder ersten Ende des Kopplungsbauteils B210 gelegen und an diesem fixiert, wobei die ebene Erstreckung E251 des ersten Anschlussbauteils B251 quer zur ebenen Erstreckung E210 des Kopplungsbauteils B210 verläuft. Ein zweites Anschlussbauteil B252 ist an der zweiten Randabschnitts-Oberfläche 216 des Kopplungsbauteils B210 oder einem zweiten Ende desselben, das entgegengesetzt zu dem ersten Ende gelegen ist, gelegen und an diesem fixiert, wobei die ebene Erstreckung E252 des zweiten Anschlussbauteils B252 quer zur ebenen Erstreckung E210 des Kopplungsbauteils B210 verläuft.

Das erste Anschlussbauteil B251 weist eine durchgehende erste Durchgangsöffnung 253 und das zweite Anschlussbauteil B252 weist eine durchgehende zweite Durchgangsöffnung 254 auf. Eine erste Gewindeschraube 291 durchragt die erste Durchgangsöffnung 253 und erstreckt sich zumindest teilweise in die Befestigungs-Ausnehmung 230.

Durch die Anschlussvorrichtungen B251, B252 erstreckt sich jeweils eine Gewindeschraube 291 bzw. 292. Die Gewindeschrauben 291, 292 werden im Folgenden mit denselben Bezugszeichen für die gleichen Merkmale gleicher Funktion beschrieben:
Jede Gewindeschraube 291, 292 weist jeweils ein Kopplungsteil 94, das jeweils ein erstes Ende 291a bzw. 292a derselben ausbildet, und einen Schraubenschaft 92, der jeweils ein zweites Ende 291b bzw. 292b derselben ausbildet, auf. Jedes oder eines der Kopplungsteile 94 kann - wie in den Figuren 36 und 37 dargestellt - als Öse ausgeführt sein. Alternativ dazu kann jedes oder eines der Kopplungsteile 94 als Haken oder als stiftförmiger Endabschnitt ausgeführt sein. Die Kopplungsteile 94 sind generell derart ausgeführt, dass an diesen eine Bewegungskomponente oder eine Befestigungsvorrichtung angekoppelt werden kann. An der Außenseite oder äußeren Oberfläche 92a des Schraubenschafts 92 ist ein Gewinde 93 mit einem von den Aufnahmeprofil-Abschnitten 81 aufgenommenen Gewindeprofil-Abschnitt 95 ausgebildet.

Wie in der Figur 5 dargestellt, weist die Außenseite oder äußere Oberfläche 92a des Schraubenschafts 92 der jeweiligen Gewindeschraube 291, 292 zumindest einen spiralförmig umlaufenden Gewindeprofil-Abschnitt 95 auf, die das Gewinde 93 ausbildet, so dass zwischen diesem umlaufend ein Gewindetal 96 verläuft. In der Figur 5 ist ein eingängiges Gewinde 93 dargestellt. Das Gewinde 93 kann auch mehrgängig ausgeführt sein. Der spiralförmig umlaufende Gewindeprofil-Abschnitt 95 ist aus einer gegebenenfalls dem Schraubenkopf 91 zugewandten ersten Gewindeprofil-Flanke 95a und einer entgegengesetzt zu dieser orientierten zweiten Gewindeprofil-Flanke 95b gebildet. Die erste und die zweite Gewindeprofil-Flanke 95a, 95b sind über einen Randabschnitt 95c miteinander verbunden, der als eine Linie oder, wie dargestellt, als eine Fläche ausgeführt sein kann. Der Schraubenschaft 92 kann auch als mehrgängiges Gewinde ausgeführt sein. Auch kann der Schraubenschaft 92 als Rechtsgewinde oder Linksgewinde ausgeführt sein.

Jede der Gewindeschrauben 90 durchragt die Durchgangsöffnungen 253, 254 und kann jeweils, bei einem Ineinandergreifen des jeweiligen Gewindes 93 und der Aufnahmeprofil-Abschnitte 81 einander gegenüber liegender Ausnehmungs-Längsabschnitte 231a, 232a durch Ausführung von Drehungen in eine Position entlang der Längsachse R230 gebracht werden. Falls in einem Anwendungsfall an den Kopplungsteilen 94 Bewegungskomponenten angehängt sind, können durch Ausführung von Drehungen der Gewindeschrauben 90 diese Bewegungskomponenten relativ zueinander positioniert werden.

Das Gewinde kann als Bewegungsgewinde realisiert sein, so dass die Bauteile entlang der Richtung R230 bewegbar zueinander gestaltet sind.

Das Nennmaß DNS des jeweiligen Schraubenschafts 92 der Gewindeschrauben 291, 292 und die linear und parallel zueinander verlaufenden Aufnahmeprofile jeweils gegenüberliegender Ausnehmungs-Längsabschnitte können so gestaltet sein, dass der jeweilige Schraubenschaft und die Gewinde-Aufnahmeprofile 80 einer jeweiligen Befestigungs-Ausnehmung 230 eine leichtgängige oder schwergängige Verbindung eingehen. Das Nennmaß N230 der insbesondere linear und parallel zueinander verlaufenden Aufnahmeprofile jeweils gegenüberliegender Ausnehmungs-Längsabschnitte entspricht dem Nennmaß des durch das Verfahren hergestellten linearen Innengewindeprofils.

Mit dem Kopplungsbauteil B210 kann auch ein Funktionsabschnitt (nicht dargestellt) verbunden sein, der an das Kopplungsbauteil B210 anschließt und je nach dem Verwendungszweck und der Funktion des Kopplungsbauteils B210 gestaltet ist. Beispielsweise kann ein solcher Funktionsabschnitt an dem Kopplungsbauteil B210 befestigt und z.B. angeklemmt, angeschraubt oder angeschweißt sein.

Die Anschlussvorrichtungen B251, B252 können - wie dargestellt - insbesondere plattenförmig ausgebildet sein. Bei der in den Figuren 36 und 37 dargestellten Ausführungsform weisen die Anschlussvorrichtungen B251, B252 eine umlaufend geschlossene Durchgangsöffnung 253 auf. Bei der Verbindungsvorrichtung 200 kann vorgesehen sein, dass die Anschlussvorrichtungen B251, B252 auf einem jeweiligen insbesondere als gerader Ebene gestalteter Anlage-Randabschnitt des Kopplungsbauteils B210 aufliegen.

Dabei kann insbesondere vorgesehen sein, dass die insbesondere durchschnittliche Dicke D210 des Kopplungsbauteils B210 an den Ausnehmungs-Längsabschnitten 231a, 232a, insbesondere in einem Bereich des halben N230 quer zur Ausnehmungs-Erstreckungsrichtung R230, und dem Nennmaß N230 der Ausnehmung 233 betragsmäßig in einem Verhältnis D210 / DNS zueinander stehen, für das gilt: D210 / DNS ≤ 3,0. In besonders vorteilhafter Weise kann für den Zusammenhang zwischen D10 und DNS gelten: $D210 * L = \sqrt{DNS^2 - K30^2}$ wobei K30 das Kernmaß der Gewinde-Aufnahmeprofile 80 derselben Befestigungs-Ausnehmung darstellt und L ein Proportionalitätsfaktor ist der einen Wert zwischen 0,8 und 1,2 hat. Insbesondere kann das Verhältnis D210 / DNS so festgelegt sein, dass der Gewindeprofil-Abschnitt 95 in der ersten ebenen Erstreckung E210 gesehen über die entgegengesetzt zueinander gelegenen Oberflächen 210a, 210b des Kopplungsbauteils B210 heraussteht.

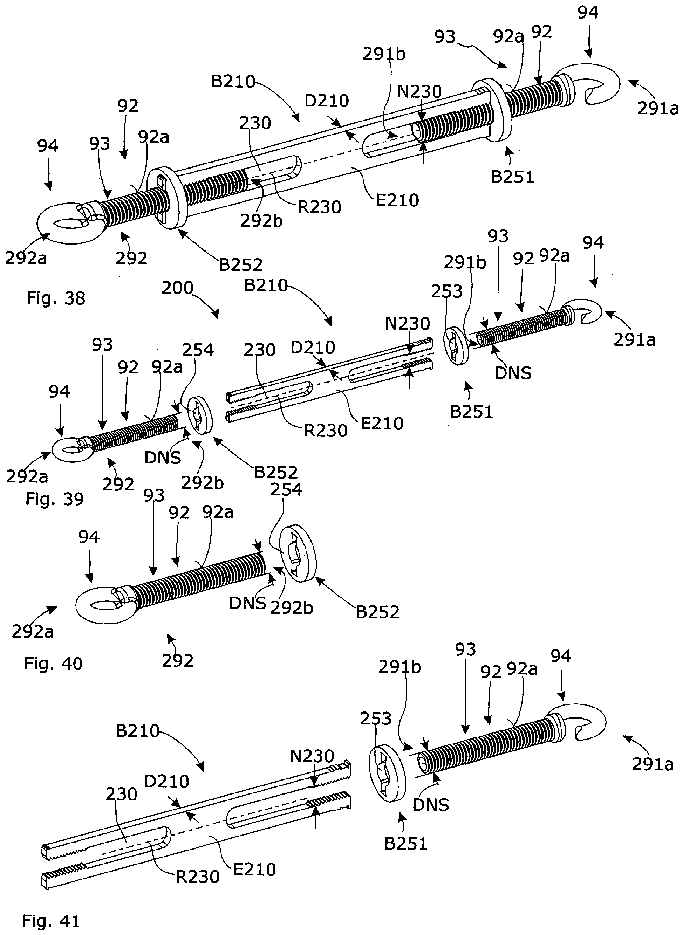

Bei der Ausführungsform der Figuren 38 bis 41 ist das Bauteil B210 aus einem ersten Anschlussabschnitt 241 und einem zweiten Anschlussabschnitt 241 gebildet, die über einen Verbindungsabschnitt 243 miteinander verbunden sind. Der erste Anschlussabschnitt 241 weist eine Ausnehmungs-Öffnung 233 nach der Figur 37 und der zweite Anschlussabschnitt 241 weist eine Ausnehmungs-Öffnung 233 nach der Figur 37 auf. Die Anschlussvorrichtungen B251, B252 sind als bezüglich des Anschlussabschnitts 210 separate Bauteile gebildet, die auf entgegengesetzt zueinander gelegenen Enden des Bauteils B210 auf diesem angeordnet und insbesondere aufgesetzt sind.

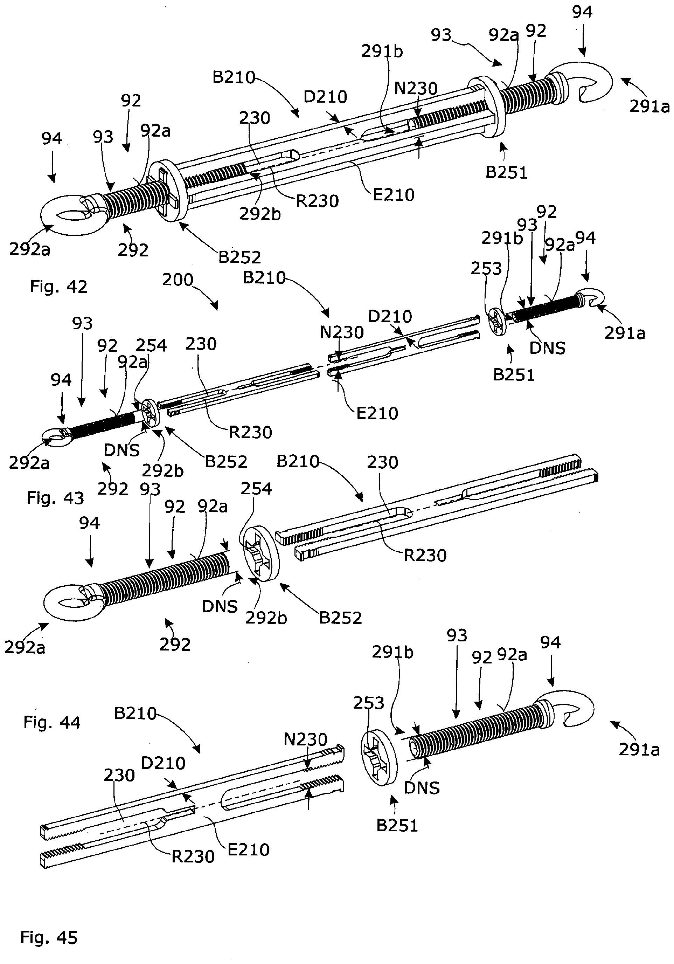

Bei der Ausführungsform der Figuren 44 bis 45 ist das Bauteil B210 aus einem ersten Bauteil B210 und einem zweiten Bauteil B210 gebildet, deren Längsrichtungen sich entlang zueinander erstrecken und deren Breitenrichtungen sich quer und insbesondere senkrecht zueinander erstrecken. Dabei sind das erste Bauteil B210 und das zweite Bauteil B210 ineinander gesteckt und können ineinander arretiert sein.

Die Figuren 46 und 47 zeigen eine Ausführungsform der erfindungsgemäßen Verbindungsvorrichtung 1, die aus zwei ersten Bauteilen B310, B410 und einem zweiten Bauteil B150 gebildet ist.

Jedes der ersten Bauteile ist nach einer der Ausführungsformen der Figuren 14 bis 25 ausgeführt. Dabei erstrecken sich die ersten Bauteile B310, B410 in einer ersten ebenen Erstreckung E310 bzw. E410 vorzugsweise entlang zueinander und weisen einen jeweils ersten Anschlussabschnitt 310 bzw. 410 und eine Befestigungs-Ausnehmung 330 bzw. 430 auf, die sich unter Ausbildung einer Ausnehmungs-Öffnung 333 bzw. 433 an einer Randabschnitts-Oberfläche 315 bzw. 415 des jeweiligen ersten Bauteils B310 bzw. B410 von diesem aus in einer Ausnehmungs-Erstreckungsrichtung R330 bzw. R430 quer zu der Randabschnitts-Oberfläche 315 bzw. 415 des ersten Bauteils B310 bzw. B410 erstreckt. Jedes der ersten Bauteile B310, B410 kann jeweils einen Funktionsabschnitt 319 bzw. 419 aufweisen, der an den Anschlussabschnitt 310 bzw. 410 anschließt. Die Ausnehmungs-Öffnung 333, 433 ist jeweils durch zwei entlang zueinander verlaufende Ausnehmungs-Längsabschnitte 31a, 32a jeweils eines Ausnehmungs-Randbereichs 31 bzw. 32 des Anschlussabschnitts 310 bzw. 410 begrenzt. Die Ausnehmungs-Längsabschnitte 31a, 32a bilden jeweils ein Gewinde-Aufnahmeprofil 80, wie es hierin anhand der Figur 2 beschrieben ist.

Das zweite Bauteil B150 ist bei der dargestellten Ausführungsform nach der Figur 19 ausgeführt und weist einen zweiten Anschlussabschnitt 150 mit einer ersten Oberfläche 150a und einer entgegengesetzt zu dieser gelegenen zweiten Oberfläche 150b auf. In dem zweiten Anschlussabschnitt 150 ist die Durchgangsöffnung 153 ausgebildet. Der Schraubenschaft 92 der Gewindeschraube 90 durchragt die Durchgangsöffnung 153 von der zweiten Oberfläche 150b aus, wobei der Gewindeprofil-Abschnitt 95 des Gewindes 93 von den Gewinde-Aufnahmeprofilen 80 beider ersten Bauteile B310, B410 aufgenommen ist.

Die Eingriffsvorrichtung E der Verbindungsvorrichtung 1 ist aus zumindest einem Fixierungs-Vorsprung 316, 317; 416, 417, der jeweils an jedem der beiden ersten Bauteile B310, B410 ausgebildet ist, und weist zumindest eine Fixierungs-Ausnehmung 156, 157 auf, in dem jeweils zwei der Fixierungs-Vorsprünge 316, 317; 416, 417 von verschiedenen der beiden ersten Bauteile B310, B410 zumindest abschnittsweise gelegen sind.

Bei der Ausführungsform der Figur 46 kann die Eingriffsvorrichtung auch nach einer anderen hierin beschriebenen Ausführungsform ausgeführt sein.

In der Figur 48 ist eine Verbindungsvorrichtung 500 zur festen Verbindung von zwei Bauteilen B510, B520 dargestellt. Die Verbindungsvorrichtung 500 weist ein erstes Anschlussbauteil B510 mit einem ersten Anschlussabschnitt 510, ein zweites Anschlussbauteil B520 mit einem zweiten Anschlussabschnitt 520 und eine diese verbindende Stützvorrichtung 530 auf, durch die der erste Anschlussabschnitt 510 und der zweite Anschlussabschnitt 520 in einer Abstützrichtung R530 voneinander beabstandet liegen. Das erste Anschlussbauteil B510 erstreckt sich in einer ersten ebenen und insbesondere geraden Erstreckung E510 und das zweite Anschlussbauteil B520 erstreckt sich in einer zweiten ebenen und insbesondere geraden Erstreckung E520, die insbesondere entlang der ersten ebenen Erstreckung E510 verlaufen kann. In dem ersten Anschlussabschnitt 510 ist eine Ausnehmungs-Öffnung 511 und in dem zweiten Anschlussabschnitt 520 ist eine zweite Ausnehmungs-Öffnung 521 ausgebildet.

Jeder der oder einer der Anschlussabschnitte 510, 520 können bzw. kann insbesondere plattenförmig ausgeführt sein. An die Anschlussabschnitte 510, 520 kann sich jeweils ein Funktionsabschnitt 519 bzw. 529 anschließen, der sich an den Anschlussabschnitt 10 anschließt. Der Funktionsabschnitt 519 bzw. 529 ist je nach dem Verwendungszweck und der Funktion des jeweiligen Bauteils B510, B520 gestaltet. Beispielsweise kann der Funktionsabschnitt 519 bzw. 529 dazu vorgesehen sein, dass an diesem weitere Bauteile befestigt und z.B. angeklemmt, angeschraubt oder angeschweißt werden.

Die Stützvorrichtung 530 weist ein erstes Stützteil 531 und ein zweites Stützteil 532 auf, die jeweils als separate Bauteile gebildet sind.

Das erste Stützteil 531 ist an in der Abstützrichtung R530 entgegengesetzt zueinander gelegenen Enden 536a, 536b durch jeweils eine Eingriffsvorrichtung E jeweils an den Anschlussbauteilen B510, B520 fixiert. Ebenso ist das zweite Stützteil 532 an in der Abstützrichtung R530 entgegengesetzt zueinander gelegenen Enden 537a, 537b durch jeweils eine Eingriffsvorrichtung E an den Anschlussbauteilen B510, B520 fixiert.

Die Stützteile 531, 532 sind derart angeordnet, dass zwischen diesen eine sich in der Abstützrichtung R530 erstreckende Befestigungs-Ausnehmung 535 gelegen ist, die von einender zugewandt und gegenüber gelegenen Ausnehmungs-Längsabschnitten 531a, 532a des ersten Stützteils 531 bzw. zweiten Stützteils 532 gebildet sind.

Jede Eingriffsvorrichtung E weist auf:

- zumindest einen Fixierungs-Vorsprung, der jeweils an einem der beiden Bauteile ausgebildet ist:

  (a) an dem ersten Anschlussbauteil B510,

  (b) an dem zweiten Anschlussbauteil B520,

- zumindest einer Fixierungs-Ausnehmung, in dem jeweils der Fixierungs-Vorsprung zumindest abschnittsweise gelegen ist, wobei die zumindest eine Fixierungs-Ausnehmung an demjenigen Anschlussbauteil (a) oder (b) ausgebildet ist, an dem der in diesem jeweils gelegenen Fixierungs-Vorsprung nicht ausgebildet ist.

Bei der Verbindungsvorrichtung der Figur 48 kann die Eingriffsvorrichtung auch nach einer anderen hierin beschriebenen Ausführungsform ausgeführt sein.

Im befestigten Zustand der Verbindungsvorrichtung 500 ist der zumindest eine Fixierungs-Vorsprung derart in der jeweiligen Fixierungs-Ausnehmung gelegen, dass sich der Fixierungs-Vorsprung nur gering in der jeweiligen Fixierungs-Ausnehmung bewegen kann und die Eingriffsvorrichtung E eine Sicherung der Anschlussbauteile B510, B520 gegen eine Bewegung relativ zueinander in Bezug auf eine Drehrichtung in Richtung der Abstützrichtung R530 bereitstellt.

Somit sind die Stützteile 531, 532 jeweils an in der Abstützrichtung R530 entgegengesetzt zueinander gelegenen Enden 536a, 537a; 536b, 537b durch jeweils eine Eingriffsvorrichtung E an dem jeweiligen Anschlussbauteil B510, B520 fixiert. Konkret weist die Eingriffsvorrichtung E bei der Ausführungsform der Figur 48 auf:

zwei Fixierungs-Ausnehmungen 516, 517, die im ersten Anschlussbauteil B510 als Erweiterungen der Durchgangsöffnung 511 jeweils in zueinander entgegengesetzten Richtungen der Erstreckung E510 des ersten Anschlussbauteils B510 realisiert sind,

zwei Fixierungs-Ausnehmungen 526, 527, die im zweiten Anschlussbauteil B520 als Erweiterungen der Durchgangsöffnung 521 jeweils in zueinander entgegengesetzten Richtungen der Erstreckung E520 des zweiten Anschlussbauteils B520 realisiert sind,

zwei an entgegengesetzten Enden des ersten Stützteils 531 ausgebildete Vorsprünge 536a, 536b, die in jeweils eine der Fixierungs-Ausnehmungen 516, 526 des ersten Anschlussbauteils B510 bzw. zweiten Anschlussbauteils B520 einsetzbar und eingesetzt sind, um beide Anschlussbauteile B510, B520 aneinander in Bezug auf eine Drehrichtung, deren Drehvektor entlang der Abstützrichtung R530 verläuft, an dem ersten Stützteil 531 zu fixieren,

zwei an entgegengesetzten Enden des zweiten Stützteils 532 ausgebildete Vorsprünge 537a, 537b, die in jeweils eine der Fixierungs-Ausnehmungen 517, 527 des ersten Anschlussbauteils B510 bzw. zweiten Anschlussbauteils B520 einsetzbar und eingesetzt sind, um beide Anschlussbauteile B510, B520 aneinander in Bezug auf eine Drehrichtung, deren Drehvektor entlang der Abstützrichtung R530 verläuft, an dem zweiten Stützteil 532 zu fixieren.

Bei der Verbindungsvorrichtung 500 kann vorgesehen sein, dass die sich entlang der Abstützrichtung R530 ergebenden Querschnitte von Vorsprüngen und Ausnehmungen unterschiedlich gestaltet sind oder zueinander unterschiedliche Größen haben, um eine Vertauschungssicherung vorzusehen. Beispielsweise kann die Fixierungs-Ausnehmung 516 anders gestaltet oder größer oder kleiner sein als die Fixierungs-Ausnehmung 517 und entsprechend der Vorsprung 536a anders gestaltet oder größer oder kleiner sein als der Vorsprung 537a. Gleichzeitig oder davon unabhängig kann die Fixierungs-Ausnehmung 526 anders gestaltet oder größer oder kleiner sein als die Fixierungs-Ausnehmung 527 und entsprechend der Vorsprung 536b anders gestaltet oder größer oder kleiner sein als der Vorsprung 537b.

Die Ausnehmungs-Längsabschnitte 531a, 532a des ersten Stützteils 531 bzw. zweiten Stützteils 532 begrenzen die Ausnehmung 535. An dem Ausnehmungs-Längsabschnitt 531a des ersten Stützteils 531 oder an dem Ausnehmungs-Längsabschnitt 532a des zweiten Stützteils 532 oder an beiden Ausnehmungs-Längsabschnitten 531a, 532a kann jeweils ein sich in der Abstützrichtung R530 erstreckendes Gewinde-Aufnahmeprofil 80 mit einer Mehrzahl von Aufnahmeprofil-Abschnitten 81 ausgebildet sein.

Die Ausnehmungs-Längsabschnitte 531a, 532a sind einander zugewandt gelegen und zwischen diesen ist die sich in der Abstützrichtung R530 erstreckende Befestigungs-Ausnehmung 535 gelegen.

Jedes Gewinde-Aufnahmeprofil 80 weist, wie in der Figur 2 dargestellt, eine Mehrzahl von Aufnahmeprofil-Abschnitten 81 auf, die in einer Reihe angeordnet sind. Zwischen jeweils zwei Aufnahmeprofil-Abschnitten 81 ist ein Gewindeaufnahme-Tal 82 ausgebildet. Jeder Aufnahmeprofil-Abschnitt 81 ist jeweils aus zwei Gewindeflanken 81a, 81b gebildet, die zueinander entgegengesetzt gerichtet sind und die in ihrer Längserstreckung in Richtung zur Ausnehmungs-Öffnung 535 und quer zur Abstützrichtung R530 aufeinander zu verlaufen. Dabei kann vorgesehen sein, dass die zu der Ausnehmungs-Öffnung 535 hin gerichteten Enden jeweils mit einer Endfläche 81d miteinander verbunden sind. Dabei kann diese sich entlang der Abstützrichtung R530 erstrecken. Alternativ dazu kann vorgesehen sein, dass die Gewindeflanken 81a, 81b aufeinander zu verlaufen und dabei eine gemeinsame Kantenlinie ausbilden oder durch eine Abrundungsfläche miteinander verbunden sind. Nach der Erfindung ist vorgesehen, dass die Aufnahmeprofil-Abschnitte 81 jeweils als zwei aufeinander zulaufende Gewindeflanken 81a, 81b und mit einem diese verbindenden Randabschnitt 81c ausgebildet sind, wobei die Gewindeflanken 81a, 81b jeweils als zumindest senkrecht zur Richtung des Gewinde-Aufnahmeprofils 80 gerade verlaufende Ebenen oder als zumindest senkrecht zur Richtung des Gewinde-Aufnahmeprofils 80 im Wesentlichen gerade verlaufende Ebenen gestaltet sind.

Dabei kann sich das Gewinde-Aufnahmeprofil 80 - wie in den Figuren 48 und 49 gezeigt - jeweils über die gesamten Längen der Ausnehmungs-Längsabschnitte 531a, 532a erstreckt. Alternativ dazu können die Ausnehmungs-Längsabschnitte 531a, 532a derart ausgeführt sein, dass sich das Gewinde-Aufnahmeprofil 80 jeweils nur abschnittsweise über die Ausnehmungs-Längsabschnitte 531a, 532a erstreckt.

Die Verbindungsvorrichtung 500 weist in ihrem befestigten Zustand oder Montagezustand weiterhin auf:

eine erste Gewindeschraube 591, deren umlaufender Gewindeprofil-Abschnitt 95 die erste Befestigungs-Ausnehmung 535 durchragt und von entgegengesetzten Seiten von dem Gewinde-Aufnahmeprofil 80 aufgenommen ist,

eine zweite Gewindeschraube 592, deren umlaufender Gewindeprofil-Abschnitt 95 die Befestigungs-Ausnehmung 535 durchragt und von entgegengesetzten Seiten von dem Gewinde-Aufnahmeprofil 80 aufgenommen ist.

Jede Gewindeschraube 591, 592 kann insbesondere nach der in den Figuren 1 bis 4 beschriebenen Gewindeschraube 90 ausgeführt sein.

Die Gewindeschraube 90 kann zusätzlich einen an den Schraubenschaft 92 anschließenden Schraubenkopf 91 aufweisen. Auch kann vorgesehen sein, dass die Gewindeschraube 90 oder der Schraubenschaft 92, also die Gewindeschraube 90 ohne Schraubenkopf 91, an dem ersten bzw. zweiten Bauteil B510, B520 fixiert ist und von diesem absteht. An der Außenseite 92a des Schraubenschafts 92 ist ein Gewinde 93 mit einem von den Aufnahmeprofil-Abschnitte 81 aufgenommenen Gewindeprofil-Abschnitt 95 ausgebildet. Die Gewindeschraube 90 durchragt die jeweilige Befestigungs-Ausnehmung 511, 521 von einer entgegengesetzt zu einer ersten Oberfläche 510a, 520a des ersten bzw. zweiten Anschlussabschnitts 510 bzw. 520 orientierten zweiten Oberfläche 510b bzw. 520b aus. Durch den Schraubenkopf 91 presst die Gewindeschraube 591 bzw. der Schraubenkopf 91 das erste Bauteil B510 an die Anlage-Randabschnitte 536c bzw. 537c des ersten Stützteils 531 bzw. zweiten Stützteils 532. In analoger Weise presst der Schraubenkopf 91 die Gewindeschraube 592 bzw. der Schraubenkopf 91 das zweite Bauteil B520 an die Anlage-Randabschnitte 536d bzw. 537d des ersten Stützteils 531 bzw. zweiten Stützteils 532.

Dabei kann insbesondere vorgesehen sein, dass der Außendurchmesser des Schraubenschafts 92 und die sich quer zur Abstützrichtung R530 erstreckende Weite W530 der Ausnehmung 535 betragsmäßig in einem Verhältnis zueinander stehen, bei dem der Gewindeprofil-Abschnitt 95 in der jeweiligen Erstreckung E510 bzw. E520 gesehen über die entgegengesetzt zueinander gelegenen Oberflächen 531r, 531s bzw. 532r, 532s des jeweiligen ersten Stützteils 531 bzw. zweiten Stützteils 532 heraussteht.

Das Nennmaß DNS des jeweiligen Schraubenschafts 92 der Gewindeschrauben 591, 592 und die linear und parallel zueinander verlaufenden Aufnahmeprofile 80 jeweils gegenüberliegender Ausnehmungs-Längsabschnitte 531a, 532a können so gestaltet sein, dass der jeweilige Schraubenschaft und die Gewinde-Aufnahmeprofile 80 einer jeweiligen Befestigungs-Ausnehmung 535 eine leichtgängige oder schwergängige Verbindung eingehen. Das Nennmaß N530 der insbesondere linear und parallel zueinander verlaufenden Aufnahmeprofile jeweils gegenüberliegender Ausnehmungs-Längsabschnitte entspricht dem Nennmaß des durch das Verfahren hergestellten linearen Innengewindeprofils.

Dabei kann insbesondere vorgesehen sein, dass das Nennmaß DNS des Gewindes des Schraubenschafts 92 und die insbesondere durchschnittliche Dicke D530 der Stützteile 531, 532 betragsmäßig in einem Verhältnis D530 / DNS zueinander stehen, für das gilt: D530 / DNS $\leq$ 3,0. In besonders vorteilhafter Weise kann für den Zusammenhang zwischen D530 und DNS gelten: $\mathrm{D530} * \mathrm{L} = \sqrt{\mathrm{DNS}^2 - \mathrm{K30}^2}$ wobei K30 das Kernmaß der Gewinde-Aufnahmeprofile 80 derselben Befestigungs-Ausnehmung darstellt und L ein Proportionalitätsfaktor ist der einen Wert zwischen 0,8 und 1,2 hat. Insbesondere kann das Verhältnis D530 / DNS so festgelegt sein, dass der Gewindeprofil-Abschnitt 95 in der ersten ebenen Erstreckung der Stützteile 531 über die entgegengesetzt zueinander gelegenen Oberflächen 531r, 531s bzw. 532r, 532s heraussteht.

Unter der Dicke D530 kann hierin insbesondere die durchschnittliche oder die maximale Dicke der Stützteile 531, 532 verstanden werden.

Die Verbindungsvorrichtung 500 ist derart realisiert, dass nur eine der Gewindeschrauben 591, 592 in die Befestigungs-Ausnehmung 535 hineinragt. Dabei kann insbesondere vorgesehen sein, dass die Stützteile 531, 532 an dem jeweils anderen Anschlussbauteil B510 bzw. Anschlussbauteil B520, an dem keine Gewindeschraube in die Befestigungs-Ausnehmung 535 hineinragt, auf andere Weise und insbesondere durch Verkleben oder Verschweißen befestigt sind.

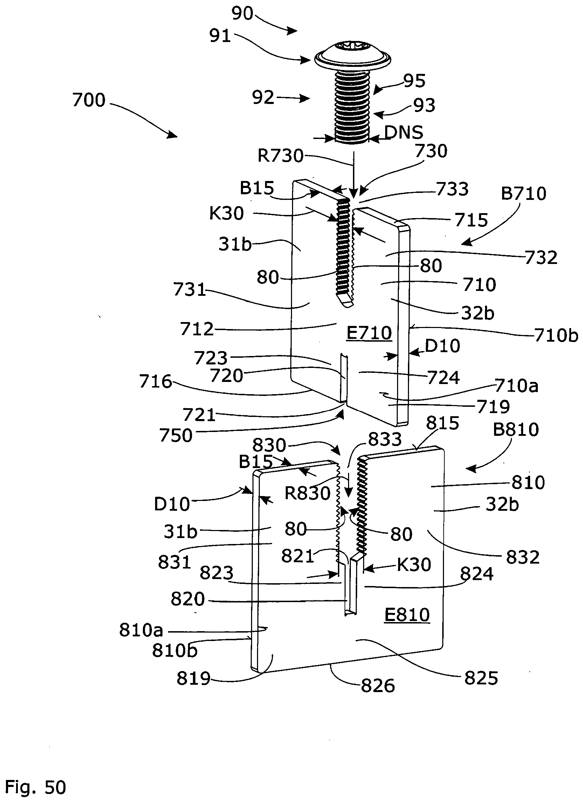

Die Figuren 50 bis 54 zeigen eine weiteren Ausführungsform der erfindungsgemäßen Verbindungsvorrichtung 700, bei der ein erstes Bauteil an einem ersten Anlage-Randabschnitt einen ersten Aufnahme-Schlitz und ein zweites Bauteil einen zweiten in der Verlängerung der Befestigungs-Ausnehmung ausgebildeten Aufnahme-Schlitz aufweist, durch die das erste und das zweite Bauteil ineinander gesteckt werden können.

Die Verbindungsvorrichtung 700 weist insbesondere ein erstes Basis-Bauteil B710 mit einem ersten Anschlussabschnitt 710 sowie ein zweites Basis-Bauteil B810 mit einem zweiten Anschlussabschnitt 810 auf.

Das erste Basis-Bauteil B710 erstreckt sich in einer ersten ebenen Erstreckung E710 und weist eine erste Befestigungs-Ausnehmung 730 auf, die sich unter Ausbildung einer Ausnehmungs-Öffnung 733 an einer ersten Randabschnitts-Oberfläche 715 des ersten Basis-Bauteils B710 von diesem aus in einer Ausnehmungs-Erstreckungsrichtung R730 quer zu der ersten Randabschnitts-Oberfläche 715 erstreckt und dabei entlang zueinander verlaufende Ausnehmungs-Längsabschnitte 731, 732 jeweils mit einem Gewinde-Aufnahmeprofil 80, das jeweils eine Abfolge von Aufnahmeprofil-Abschnitten 81 aufweist, ausbildet. Die erste Befestigungs-Ausnehmung 730 weist eine quer zur Ausnehmungs-Erstreckungsrichtung R730 erstreckende Weite N730 auf. Jeder Aufnahmeprofil-Abschnitt 81 ist wie an Hand der Figur 2 beschrieben ausgeführt. Das erste Basis-Bauteil B710 weist einen ersten Aufnahme-Schlitz 750 auf, der sich von einem entgegengesetzt zu der ersten Randabschnitts-Oberfläche 715 gelegenen weiteren Randabschnitt 716 unter Ausbildung einer ersten Schlitz-Öffnung 721 an demselben in der Ausnehmungs-Erstreckungsrichtung R730 abschnittsweise zu der ersten Befestigungs-Ausnehmung 730 erstreckt. Dabei ist zwischen der ersten Befestigungs-Ausnehmung 730 und dem ersten Aufnahme-Schlitz 720 ein Zwischenbereich 712 des Anschlussabschnitts 710 gelegen.

Das zweite Basis-Bauteil B810 erstreckt sich in einer zweiten ebenen Erstreckung E810 und weist eine zweite Befestigungs-Ausnehmung 830 aufweist, die sich unter Ausbildung einer Ausnehmungs-Öffnung 833 an einem zweiten Anlage-Randabschnitt 825 des zweiten Bauteils B810 von diesem aus in einer Ausnehmungs-Erstreckungsrichtung R830 quer zu der zweiten Randabschnitts-Oberfläche 815 erstreckt und dabei entlang zueinander verlaufende Ausnehmungs-Längsabschnitte 831, 832 jeweils mit einem Gewinde-Aufnahmeprofil 80, das jeweils eine Abfolge von Aufnahmeprofil-Abschnitten 81 aufweist, ausbildet. Die zweite Befestigungs-Ausnehmung 830 weist eine quer zur Ausnehmungs-Erstreckungsrichtung R830 erstreckende Weite N830 auf. Jeder Aufnahmeprofil-Abschnitt 81 ist wie an Hand der Figur 2 beschrieben ausgeführt. Das zweite Basis-Bauteil B810 weist einen zweiten Aufnahme-Schlitz 820 auf, der sich von der Befestigungs-Ausnehmung 830 in der Ausnehmungs-Erstreckungsrichtung R830 in Richtung abschnittsweise zu einem entgegengesetzt zu der zweiten Randabschnitts-Oberfläche 815 gelegenen weiteren Randabschnitt 826 unter Ausbildung einer Verbindungs-Öffnung 821 zwischen der Befestigungs-Ausnehmung 830 und dem zweiten Aufnahme-Schlitz 820 erstreckt. Dabei ist in der Verlängerung des zweiten Aufnahme-Schlitzes 820 ein Verlängerungsbereich 825 des zweiten Anschlussabschnitts 810 gelegen.

Das erste Basis-Bauteil B710 und das zweite Basis-Bauteil B810 sind derart aneinander angeordnet,

dass sich die erste Befestigungs-Ausnehmung 730 und die zweite Befestigungs-Ausnehmung 830 zumindest abschnittsweise überlappen,

dass die erste ebene Erstreckung E710 und die zweite ebene Erstreckung E810 quer zueinander verlaufen,

dass der Zwischenbereich 712 des ersten Anschlussabschnitts 710 zumindest abschnittsweise von dem zweiten Aufnahme-Schlitz 820 aufgenommen ist und an den zweiten Aufnahme-Schlitz 820 bildenden Wandungsabschnitten 823, 824 drehfest gehalten wird,

dass der Verlängerungsbereich 825 des zweiten Anschlussabschnitts 820 in dem ersten Aufnahme-Schlitz 720 gelegen ist und an den ersten Aufnahme-Schlitz 720 bildenden Wandungsabschnitten 723, 724 drehfest gehalten wird.

Ein Schraubenschaft 92 einer Gewindeschraube 90 ist in den von der ersten Befestigungs-Ausnehmung 730 und der zweiten Befestigungs-Ausnehmung 830 gebildeten Raum eingesetzt. An dessen Außenseite 92a ist ein Gewinde 93 mit einer von den Aufnahmeprofil-Abschnitten 81 sowohl der ersten Befestigungs-Ausnehmung 730 als auch der zweiten Befestigungs-Ausnehmung 830 aufgenommenen Gewindeflanken-Abschnitt 97 ausgebildet, wobei der Schraubenkopf 91 Gewindeschraube 90 an der ersten Randabschnitts-Oberfläche 715 und der zweiten Randabschnitts-Oberfläche 815 anliegt und das erste Bauteil B710 und das zweite Bauteil B810 aneinander presst.

Die Gewindeschraube 90 ist insbesondere wie anhand der Figur 5 beschrieben ausgeführt.

Die Gewinde-Aufnahmeprofile 80 können insbesondere wie anhand der Figur 2 beschrieben ausgeführt sein. Insbesondere können die Aufnahmeprofil-Abschnitte 81 jeweils als zwei aufeinander zulaufende Gewindeflanke 82a, 82b und mit einem diese verbindenden Randabschnitt 82c ausgebildet sein. Weiterhin können dabei die Gewindeflanken 82a, 82b jeweils als zumindest senkrecht zur Richtung des Gewinde-Aufnahmeprofils 80 gerade verlaufende Ebenen oder als zumindest senkrecht zur Richtung des Gewinde-Aufnahmeprofils 80 im Wesentlichen gerade verlaufende Ebenen gestaltet sein.

Das erste und das zweite Basis-Bauteil B710 bzw. B810 oder eines der beiden kann jeweils einen Funktionsabschnitt 719 bzw.819 aufweisen.

Das Nennmaß DNS des jeweiligen Schraubenschafts 92 und die linear und parallel zueinander verlaufenden Aufnahmeprofile jeweils gegenüberliegender Ausnehmungs-Längsabschnitte können so gestaltet sein, dass der jeweilige Schraubenschaft und die Gewinde-Aufnahmeprofile 80 einer jeweiligen Befestigungs-Ausnehmung 730 bzw. 830 eine leichtgängige oder schwergängige Verbindung eingehen. Die Nennmaße N730 bzw. N830 der insbesondere linear und parallel zueinander verlaufenden Aufnahmeprofile jeweils gegenüberliegender Ausnehmungs-Längsabschnitte entsprechen dem Nennmaß der durch das Verfahren hergestellten linearen Innengewindeprofile.

Insbesondere kann vorgesehen sein, dass das Nennmaß DNS des jeweiligen Schraubenschafts 92 und die insbesondere durchschnittlichen Dicken D730 bzw. D830 der Ausnehmungs-Randbereiche des jeweiligen Anschlussabschnitts derart gestaltet sind, bei dem das Gewinde 93 jeweils in der ersten ebenen Erstreckung E710 und der zweiten ebenen Erstreckung E810 gesehen über die entgegengesetzt zueinander gelegenen Oberflächen 710a, 710b des ersten plattenförmigen Anschlussabschnitts 710 sowie die entgegengesetzt zueinander gelegenen Oberflächen 810a, 810b des zweiten plattenförmigen Anschlussabschnitts 810 heraussteht.

Dabei kann insbesondere vorgesehen sein, dass das Nennmaß DNS des Gewindes des Schraubenschafts 92 und die insbesondere durchschnittliche Dicke D10 der Ausnehmungs-Randbereiche der Anschlussabschnitte 710, 810 betragsmäßig in einem Verhältnis D710 / DNS bzw. D810 / DNS zueinander stehen, für das gilt: D730 / DNS $\leq$ 3,0 bzw. D830 / DNS $\leq$ 3,0. In

besonders vorteilhafter Weise kann für den Zusammenhang zwischen D730 und DNS bzw. D830 und DNS gelten: $D730 * L = \sqrt{DNS^2 - K30^2}$ bzw. $D830 * L = \sqrt{DNS^2 - K30^2}$ wobei K30 das Kernmaß der Gewinde-Aufnahmeprofile 80 derselben Befestigungs-Ausnehmung darstellt und L ein Proportionalitätsfaktor ist der einen Wert zwischen 0,8 und 1,2 hat. Insbesondere kann das Verhältnis D730 / DNS bzw. D830 / DNS so festgelegt sein, dass der Gewindeprofil-Abschnitt 95 in der jeweiligen ebenen Erstreckung E710 bzw. E810 gesehen über die entgegengesetzt zueinander gelegenen Oberflächen 710a, 710b bzw. 810a, 810b des jeweiligen plattenförmigen Anschlussabschnitts 710 bzw. 810 heraussteht.

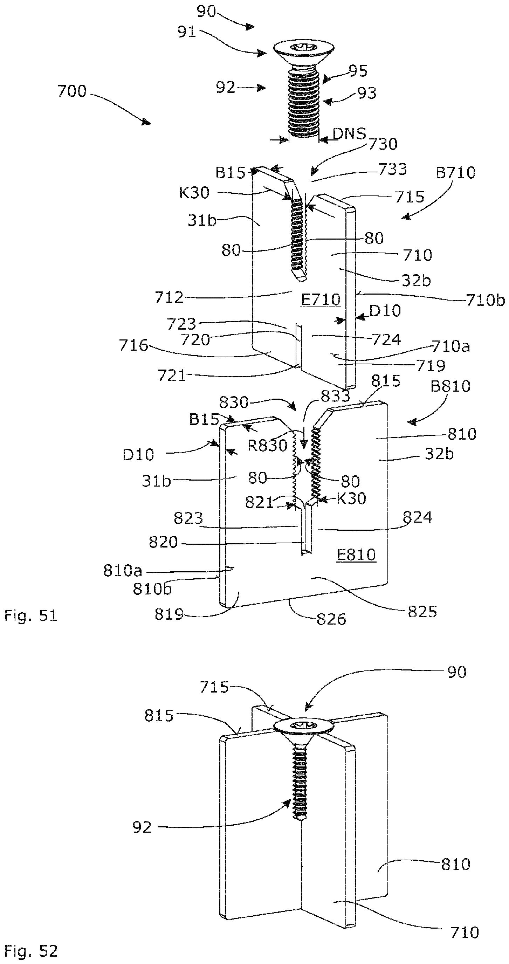

Bei einer Weiterführung der Verbindungsvorrichtung 700 sind mehr als ein erstes Basis-Bauteil B710 und ein zweites Basis-Bauteil B810, also z.B. zusätzlich ein drittes oder auch viertes Basis-Bauteil vorgesehen, die beispielsweise wie das erste Basis-Bauteil B710 oder wie das zweite Bauteil B810 ausgeführt sind, so dass drei bzw. vier Bauteile analog zum Montagezustand der Figur 52 ineinandergesteckt werden können.

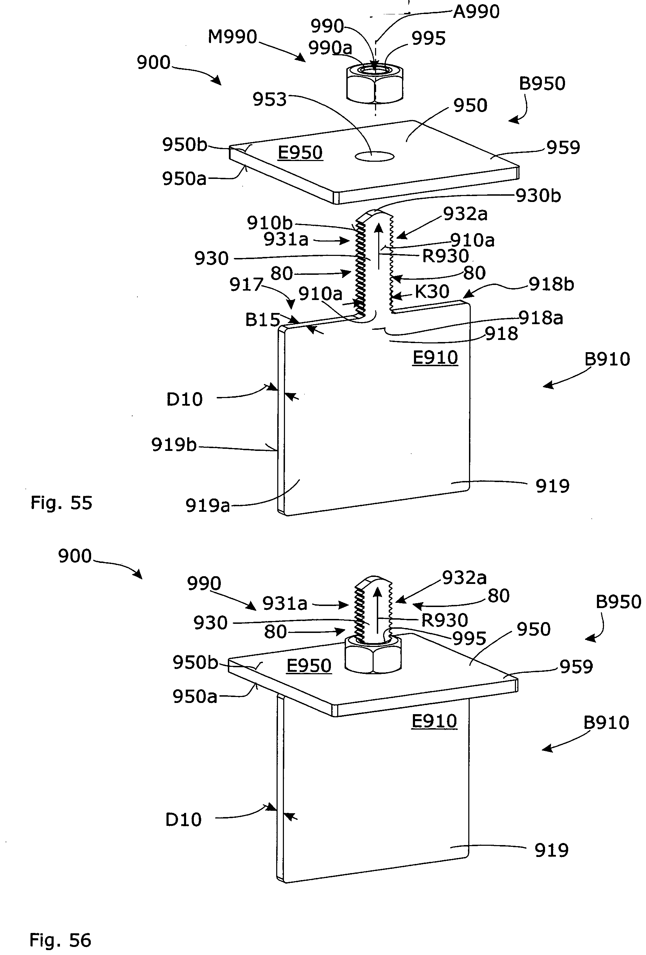

Die Figuren 55 bis 62 zeigen eine Verbindungsvorrichtung 900, die insbesondere aufweist:

- ein erstes Bauteil B910 mit einem Funktionsabschnitt 919 und einem an diesem anschließenden ersten insbesondere plattenförmig ausgebildeten Anschlussabschnitt 930,
- ein zweites Bauteil B950 mit einem zweiten plattenförmigen Anschlussabschnitt 950 mit einer Durchgangsöffnung 953.

Das erste Bauteil B910 erstreckt sich in einer ersten ebenen Erstreckung E910. Der Funktionsabschnitt 919 weist eine in der ebenen Erstreckung E910 verlaufende erste Oberfläche 919a und eine entgegengesetzt zu dieser gelegene zweite Oberfläche 919b auf. Der Funktionsabschnitt 919 weist einen Randabschnitt 917 mit einer Randabschnitt-Oberfläche 917a auf, von dem aus ein Anschlussabschnitt 930 in einer Anschlussabschnitt-Längsrichtung R930 weg ragt. Der Anschlussabschnitt 930 ist mit einem ersten Ende 930a an dem Funktionsabschnitt 919 gelegen und bildet ein entgegengesetzt zu dem ersten Ende 930a gelegenes zweites Ende 930b aus. Der Funktionsabschnitt 919 weist an oder entlang des Randabschnitts 917 eine Dicke D917 auf. Nach einer Ausführungsform hat die Dicke D917 einen Betrag von mindestens dem 0,6-fachen des Innendurchmessers.

Nach einer Ausführungsform ist zumindest ein an dem Anschlussabschnitt 930 gelegener und an diesem anschließender Verbindungsabschnitt 918 des Funktionsabschnitts 919 derart gestaltet, dass dessen entgegengesetzt zueinander gelegene und in dessen Erstreckungsrichtung verlaufende Oberflächen 918a, 918b kontinuierlich mit den Oberflächen 910a, 910b verlaufen und insbesondere zusammen jeweils eine gerade Oberfläche bilden. Dabei kann die Größe des Verbindungsabschnitts 918 derart definiert sein, dass sich dieser um zumindest eine Länge von dem ersten Ende 930a des Anschlussabschnitts 930 wegerstreckt, die zumindest die mittlere größte Breite B930 des Anschlussabschnitts 930 beträgt.

Der Randabschnitt 917 bzw. die Randabschnitt-Oberfläche 917a erstreckt sich in Bezug auf die Anschlussabschnitt-Längsrichtung R930 zumindest auf einer Seite des Anschlussabschnitts 930 und von dieser weg. Bei der in der Figur 55 gezeigten Ausführungsform erstreckt sich die der Randabschnitt 917 bzw. die Randabschnitt-Oberfläche 917a zu beiden Seiten des Anschlussabschnitts 930.

Nach einer Ausführungsform ist die Randabschnitt-Oberfläche 917a zumindest abschnittsweise als gerade Auflagefläche ausgeführt, die entlang und insbesondere in der Anschlussabschnitt-Längsrichtung R930 gerichtet ist. Dabei kann die gerade Auflagefläche - wie in der Figur 55 dargestellt - als durchgehend gerade Fläche oder als zwei durch eine Vertiefung miteinander verbundene Vorsprünge, die sich quer zur Anschlussabschnitt-Längsrichtung R930 erstrecken, realisiert sein.

Der Anschlussabschnitt 930 des ersten Bauteils B910 ist streifenförmig gestaltet. In Bezug auf die Anschlussabschnitt-Längsrichtung R930 ist der Anschlussabschnitt 910 seitlich durch Anschlussabschnitt-Längsabschnitte 931a, 932a begrenzt, die entgegengesetzt zueinander gelegen sind. An diesen schließt sich der Funktionsabschnitt 919 mit dem Randabschnitt 917 an, der sich seitlich des ersten Anschlussabschnitts 910 erstreckt. Der Anschlussabschnitt 930 Aufnahmeprofil-Abschnitten 981 des Anschlussabschnitts 910 aufgenommen ist.

An den Anschlussabschnitt-Längsabschnitten 931a, 932a ist zumindest abschnittsweise jeweils ein Gewinde-Aufnahmeprofil 980 mit jeweils einer Abfolge von Aufnahmeprofil-Abschnitten 981 ausgebildet. Das Gewinde-Aufnahmeprofil 980 kann in der Anschlussabschnitt-Längsrichtung R930 vollständig oder abschnittsweise an den Anschlussabschnitt-Längsabschnitten 931a, 932a ausgebildet sein. Die Aufnahmeprofil-Abschnitte 981 weisen jeweils zwei quer zur Anschlussabschnitt-Längsrichtung R930 aufeinander zulaufende Gewindeflanken 981a, 981b und einen diese verbindenden Randabschnitt 981d auf. Nach einer Ausführungsform sind die Gewindeflanke 981a, 981b jeweils als zumindest senkrecht zur Anschlussabschnitt-Längsrichtung R930 gerade verlaufende Ebenen gestaltet.

Generell kann bei der Verbindungsvorrichtung 900 vorgesehen sein, dass die Aufnahmeprofil-Abschnitte 981 jeweils zahnförmig ausgebildet sind. Die Aufnahmeprofil-Abschnitte 981 sind somit an den Ausnehmungs-Längsabschnitten 931, 932 ausgebildet und erstrecken sich in Richtung der Anschlussabschnitt-Längsrichtung R930 des Anschlussabschnitts 930. Die Oberflächen der Aufnahmeprofil-Abschnitte 981 weisen aufeinander zulaufende Gewindeflanken 981a, 981b und einen diese zur Ausbildung eines freien Ende 983c des jeweiligen Aufnahmeprofil-Abschnitte 981 verbindenden Randabschnitt 981d auf. Die Gewindeflanken 981a, 981b können dabei als senkrecht oder quer zum Gewinde-Aufnahmeprofil 980 gerade verlaufende Ebenen gestaltet sein. Der Randabschnitt 981d kann als eine gerade Ebene oder als gerader Randlinien-Abschnitt insbesondere bei einem Zulaufen der Gewindeflanken 981a, 981b ausgeführt sein. Dadurch ist ein einfaches Herstellungsverfahren durch ein Trennverfahren durch eine Materialformung quer zur ebenen Erstreckung E930 des Anschlussabschnitts 930 möglich.

Auf das Gewinde-Aufnahmeprofil 980 des Anschlussabschnitts 930 ist eine Gewindemutter M990 geschraubt. Die Gewindemutter M990 weist eine Innenfläche 990a auf, die eine sich in einer Gewindemutter-Längsachse erstreckende Durchgangsbohrung begrenzt. Die Innenfläche 993 bildet ein Innengewinde 990 mit einem Gewindeprofil-Abschnitt 991 aus, der sich in einer die Gewindemutter-Längsachse umlaufenden Umfangsrichtung und entlang der Gewindemutter-Längsachse schraubt und zwischen dem sich ein Gewindeprofil-Tal 992 erstreckt. Der Gewindeprofil-Abschnitt 991 ist von den Aufnahmeprofil-Abschnitten 981 des Anschlussabschnitts 910 aufgenommen, wenn die Gewindemutter M990 auf diesen geschraubt ist. Die Aufnahmeprofil-Abschnitte 981 weisen jeweils zwei quer zur Gewindemutter-Längsachse aufeinander zulaufende Gewindeflanken 981a, 981b und einen diese verbindenden Randabschnitt 981 auf, der ein freies Ende 981c ausbildet.

Das zweite Bauteil B950 weist einen zweiten Anschlussabschnitt 950 auf, der insbesondere plattenförmig ausgebildet sein kann. Das zweite Bauteil B950 erstreckt sich in einer zweiten ebenen und insbesondere geraden Erstreckung E950, die quer zu der ersten ebenen und insbesondere geraden Erstreckung E910 des ersten Bauteils B910 verläuft. Der zweite Anschlussabschnitt 950 kann eine z.B. umlaufend geschlossene oder geschlitzte Durchgangsöffnung 953 aufweisen. Die Durchgangsöffnung 953 kann in verschiedener Weise gestaltet sein. Insbesondere kann die Durchgangsöffnung 953 schlitzförmig, rechteckig, rund, elliptisch oder als Langloch gestaltet sein.

Im Montagezustand ist zwischen der Gewindemutter M990 und dem Randabschnitt 917 das zweite Bauteil 950 gelegen. Bei der Verbindungsvorrichtung 900 nach der Figur 55 liegt eine erste Oberfläche 950a des zweiten plattenförmigen Anschlussabschnitts 950 des zweiten Bauteils B950 auf dem Anlage-Randabschnitt 917 des ersten Bauteils B910 auf. Bei der Ausführungsform, bei der die Randabschnitt-Oberfläche 917a zumindest abschnittsweise als gerade Auflagefläche ausgeführt ist, wird das zweite Bauteil 950 in einer Lage relativ zum ersten Bauteil B910 gehalten, bei der die Erstreckung E950 des zweiten Bauteils 950 quer und insbesondere senkrecht zur Erstreckung E910 des erstes Bauteils B910 verläuft.

Das zweite Bauteil B950 kann einen Funktionsabschnitt 959 aufweisen, der an den Anschlussabschnitt 950 anschließt und je nach dem Verwendungszweck und der Funktion des zweiten Bauteils B950 gestaltet ist. Bei der in der Figur 55 gezeigten Ausführungsform ist der Funktionsabschnitt 959 ebenfalls als plattenförmiger Abschnitt ausgebildet, der sich in derselben Erstreckungsrichtung E950 wie der Anschlussabschnitt 910 erstreckt. Beispielsweise kann der Funktionsabschnitt 959 dazu vorgesehen sein, dass an diesem Bauteile befestigt und z.B. angeklemmt, angeschraubt oder angeschweißt werden.

Eine die plattenförmigen Anschlussabschnitte verbindende Gewindemutter M990 ist auf den Gewindeflanken-Aufnahmeabschnitten des Anschlussabschnitts 910 aufgeschraubt und presst das zweite Bauteil B950 an den Anlage-Randabschnitt 917 des ersten Bauteils B910 an. Dabei weist die Gewindemutter M990 ein Innengewinde 993 mit einem Gewindeprofil-Abschnitt 95 auf.

Nach einem weiteren Aspekt der Erfindung ist ein Verfahren zur Herstellung eines Bauteils B1 mit einem ersten plattenförmigen Anschlussabschnitt 10 vorgesehen, wobei sich das erste Bauteil B1 in einer ersten ebenen Erstreckung E10 erstreckt und eine Ausnehmung 30 aufweist, die sich unter Ausbildung einer Ausnehmungs-Öffnung 33 an einer Randabschnitts-Oberfläche 15 des ersten Bauteils B1 von diesem aus in einer Ausnehmungs-Erstreckungsrichtung R30 quer zu der Randabschnitts-Oberfläche 15 des ersten Bauteils B1 erstreckt und dabei entlang zueinander verlaufende Ausnehmungs-Längsabschnitte 31a, 32a, das Verfahren aufweisend:

mittels eines Trennverfahrens an dem plattenförmigen Anschlussabschnitt 10 Ausbildung der beiden Ausnehmungs-Längsabschnitte 31a, 32a jeweils mit einem Gewinde-Aufnahmeprofil 80, das jeweils eine Abfolge von Aufnahmeprofil-Abschnitten 81 aufweist,

wobei das Trennverfahren eine Materialformung quer zur ebenen Erstreckung E10 des plattenförmigen Anschlussabschnitts 10 ausführt und dabei die Aufnahmeprofil-Abschnitte 81 mit aufeinander zulaufenden Gewindeflanken 82a, 82b und gegebenenfalls mit einer diese zur Ausbildung eines freien Endes 83c der jeweiligen Gewindeflanke verbindenden Randabschnitt 82d ausbildet, wobei die Gewindeflanken 82a, 82b im Wesentlichen als gerade verlaufende Ebenen gestaltet sind.

Dabei kann vorgesehen sein, dass das Trennmittel oder das Trennwerkzeug den Anschlussabschnitt 10 in einer Richtung quer zu einer ersten ebenen Erstreckung E10 durchdringt.

Das Trennverfahren kann ein thermisches Trennverfahren sein, bei dem der thermische Bearbeitungsstrahl den Anschlussabschnitt 10 in einer Richtung quer zu einer ersten ebenen Erstreckung E10 durchstrahlt.

Das Trennverfahren kann auch zumindest eines der folgenden Verfahren sein:

ein Stanzverfahren,

ein Wasserstrahl-Trennverfahren,

ein Fräsverfahren,

ein Schleifverfahren.

**Patentansprüche**

1. Verbindungsvorrichtung (1) zur festen Verbindung zweier Bauteile (B1, B5) miteinander, die Verbindungsvorrichtung (1) aufweisend:

ein sich in einer ersten flächigen Erstreckung (E10) erstreckendes erstes Bauteil (B1) mit einem plattenförmigen ersten Anschlussabschnitt (10), der ein seitliches Ende mit einer Randabschnitts-Oberfläche (15) aufweist, die quer zur Dickenrichtung des plattenförmigen ersten Anschlussabschnitts (10) orientiert ist, wobei die Randabschnitts-Oberfläche (15) in der ersten flächigen Erstreckung (E10) gesehen ausschließlich eine Seitenfläche einer Platte ist, wobei das erste Bauteil (B1) eine Befestigungs-Ausnehmung (30) aufweist, die sich unter Ausbildung einer Ausnehmungs-Öffnung (33) an der Randabschnitts-Oberfläche (15) des ersten Anschlussabschnitts (10) von dieser aus in einer Ausnehmungs-Erstreckungsrichtung (R30) quer zu der Randabschnitts-Oberfläche (15) des ersten Bauteils (B1) erstreckt und dabei entlang zueinander verlaufende Ausnehmungs-Längsabschnitte (31a, 32a) jeweils mit einem Gewinde-Aufnahmeprofil (80) ausbildet, das jeweils eine sich in der in der Ausnehmungs-Erstreckungsrichtung (R30) erstreckende Abfolge von sich quer zur Ausnehmungs-Erstreckungsrichtung (R30) in die Befestigungs-Ausnehmung (30) hinein erstreckenden Aufnahmeprofil-Abschnitten (81) aufweist, wobei die Ausnehmungs-Längsabschnitte (31a, 32a) im Wesentlichen parallel zueinander verlaufen,
ein zweites Bauteil (B5) mit einem plattenförmigen zweiten Anschlussabschnitt (50), wobei sich das zweite Bauteil (B5) in einer zweiten ebenen Erstreckung (E50) erstreckt, die quer zu der ersten ebenen Erstreckung (E10) verläuft, wobei der plattenförmige zweite Anschlussabschnitt (50) eine Durchgangsöffnung (53) aufweist,
eine Gewindeschraube (90) mit einem Schraubenschaft (92), an dessen Außenseite (92a) ein Gewinde (93) mit einem von den Aufnahmeprofil-Abschnitten (81) aufgenommenen Gewindeprofil-Abschnitt (95) ausgebildet ist, wobei die Gewindeschraube (90) von einer entgegengesetzt zu einer ersten Oberfläche (50a) des zweiten plattenförmigen Anschlussabschnitts (50) orientierten zweiten Oberfläche (50b) aus die Durchgangsöffnung (53) durchragt,
wobei die Aufnahmeprofil-Abschnitte (81) jeweils als zwei entlang zueinander verlaufende Gewindeflanken (81a, 81b) ausgebildet sind, wobei die Gewindeflanken (81a, 81b) jeweils als gerade verlaufende Ebenen, deren Orientierung entlang der Ausnehmungs-Erstreckungsrichtung (R30) verlaufen, gestaltet sind,
wobei ein die Gewindeflanken (81a, 81b) verbindender Randabschnitt (81c) als gerade verlaufende Ebene oder als gerader Randlinien-Abschnitt ausgeführt ist.

2. Verbindungsvorrichtung (1) nach dem Anspruch 1, wobei für das Verhältnis zwischen der sich entlang der Dicke D10 des ersten Anschlussabschnitts (10) erstreckenden Breite (B15) der Randabschnitts-Oberfläche (15) und dem Nennmaß DNS des Gewindes des Schraubenschafts (92) gilt: B15 / DNS $\leq$ 3 und B15 / DNS $\geq$ 0,1.

3. Verbindungsvorrichtung (1) nach dem Anspruch 1 oder 2, wobei der Gewindeprofil-Abschnitt (95) in der ersten ebenen Erstreckung (E10) gesehen über die entgegengesetzt zueinander gelegenen Oberflächen (10a, 10b) des ersten plattenförmigen Anschlussabschnitts (10) heraussteht.

4. Verbindungsvorrichtung (1) nach einem der voranstehenden Ansprüche, wobei das Gewinde des Schraubenschafts (92) nach einer der folgenden Alternativen ausgeführt ist:
Blechschrauben-Gewinde, Holzschrauben-Gewinde, Spanplattenschrauben-Gewinde, Gewinde einer selbstschneidenden Schraube, Kunststoffschrauben-Gewinde, Flachgewinde, Rundgewinde, Sägegewinde, Trapezgewinde, Whitworth-Gewinde, Spitzgewinde, insbesondere metrisches Spitzgewinde oder Zollgewinde.

5. Verbindungsvorrichtung (1) nach einem der voranstehenden Ansprüche,

wobei das erste Bauteil (B1, B110) und das zweite Bauteil (B5, B150, B350) jeweils als separate Bauteile hergestellt sind,
wobei der plattenförmige zweite Anschlussabschnitt (50, 150, 350) des zweiten Bauteils (B5, B150, B350) mit einer ersten Oberfläche (50a, 150a, 350a) des plattenförmigen zweiten Anschlussabschnitts (50, 150, 350) auf der Randabschnitts-Oberfläche (15, 115) des ersten Bauteils (B1, B110) aufliegt,
wobei die Gewindeschraube (90) mittels einem Schraubenkopf (91) das zweite Bauteil (B5, B150, B350) an die Randabschnitts-Oberfläche (15, 115) des ersten Bauteils (B1, B110) anpresst.

**6.** Verbindungsvorrichtung (1) nach einem der voranstehenden Ansprüche, wobei die Verbindungsvorrichtung (1) eine Eingriffsvorrichtung (E) aufweist, mit:

zumindest einem Fixierungs-Vorsprung, der jeweils an einem der beiden folgenden Alternativen (a) oder (b) ausgebildet ist:

(a) an dem ersten Bauteil,
(b) an dem zweiten Bauteil,

zumindest einer Fixierungs-Ausnehmung, in dem jeweils der Fixierungs-Vorsprung zumindest abschnittsweise gelegen ist, wobei die zumindest eine Fixierungs-Ausnehmung an demjenigen Bauteil (a) oder (b) ausgebildet ist, an dem der in dieser jeweils gelegene Fixierungs-Vorsprung nicht ausgebildet ist,
wobei im befestigten Zustand der Verbindungsvorrichtung (1) der zumindest eine Fixierungs-Vorsprung derart in der jeweiligen Fixierungs-Ausnehmung gelegen ist, dass sich der Fixierungs-Vorsprung nur gering in der jeweiligen Fixierungs-Ausnehmung bewegen kann und die Eingriffsvorrichtung (E) eine Sicherung der Bauteile gegen eine Bewegung relativ zueinander in Bezug auf eine Drehrichtung in Richtung der Ausnehmungs-Erstreckungsrichtung (R30) bereitstellt.

**7.** Verbindungsvorrichtung (1) nach dem Anspruch 6,

wobei das erste Bauteil (B1) ein Paar von ersten Bauteilen (B310, B410) jeweils mit einem ersten Anschlussabschnitt (310, 410) aufweist, wobei sich die ersten Bauteile (B310, B410) jeweils in einer ersten ebenen Erstreckung (E310, E410) erstrecken und jeweils eine Befestigungs-Ausnehmung (330, 430) aufweisen, die sich unter Ausbildung einer Ausnehmungs-Öffnung (333, 433) an einem Anlage-Randabschnitt (315, 415) des jeweiligen ersten Bauteils (B310, B410) von diesem aus in einer Ausnehmungs-Erstreckungsrichtung (R330, R430) quer zu dem Anlage-Randabschnitt (315, 415) des jeweiligen ersten Bauteils (B310, B410) erstrecken und dabei entlang zueinander verlaufende Ausnehmungs-Längsabschnitte (31, 32) jeweils mit einem Gewinde-Aufnahmeprofil (80) ausbildet, das jeweils eine Abfolge von Aufnahmeprofil-Abschnitten (81) aufweist,
wobei sich das zweite Bauteil (B5, B150) mit dem plattenförmigen zweiten Anschlussabschnitt (50, 150) in einer zweiten ebenen Erstreckung (E150) erstreckt, die quer zu den ersten ebenen Erstreckungen (E310, E410) verläuft,
wobei der plattenförmige zweite Anschlussabschnitt (50, 150) eine Durchgangsöffnung (153) aufweist,
wobei die Verbindungsvorrichtung (1) eine Gewindeschraube (90) mit einem Schraubenschaft (92) aufweist, an dessen Außenseite (92a) ein Gewinde (93) mit einem von den Aufnahmeprofil-Abschnitten (81) der ersten Bauteile (B310, B410) aufgenommenen Gewindeprofil-Abschnitt (95) ausgebildet ist, wobei die Gewindeschraube (90) von einer entgegengesetzt zur ersten Oberfläche (150a) des plattenförmigen zweiten Anschlussabschnitts (50, 150) orientierten zweiten Oberfläche (150b) aus die Durchgangsöffnung (153) durchragt,
wobei die Eingriffsvorrichtung (E) der Verbindungsvorrichtung (1) zumindest einen Fixierungs-Vorsprung (316, 317; 416, 417), der jeweils an jedem der beiden ersten Bauteile (B310, B410) ausgebildet ist, und zumindest eine Fixierungs-Ausnehmung (156, 157) aufweist, in dem jeweils zwei der Fixierungs-Vorsprünge von verschiedenen der beiden ersten Bauteile (B310, B410) zumindest abschnittsweise gelegen sind.

## Claims

**1.** Connecting device (1) for firmly connecting two components (B1, B5) to one another, wherein the connecting device (1) comprises:

a first component (B1) which extends in a first planar extension (E10) with a plate-shaped first connection section (10) which comprises a lateral end with an edge section surface (15) which is oriented transversely to the thickness direction of the plate-shaped first connection section (10), wherein the edge section surface (15), when viewed in the first planar extension (E10), is exclusively a side surface of a plate, wherein the first component (B1) comprises a fastening recess (30) which is formed with the formation of a recess opening (33) on the edge section surface (15) of the first connection section (10) extends therefrom in a recess extension direction (R30) transversely to the edge section surface (15) of the first component (B1) and thereby forms recess longitudinal sections (31a, 32a) each with a thread receiving profile (80), wherein the recess longitudinal sections (31a, 32a) run along one another, wherein the thread receiving profile (80) in each case comprises a sequence of receiving profile sections (81) which extend transversely to the recess extension direction (R30) into the fastening recess (30), wherein the recess longitudinal sections (31a, 32a) run essentially parallel to one another,
a second component (B5) with a plate-shaped second connection section (50), wherein the second component (B5) extends in a second planar extension (E50) which runs transversely to the first planar extension (E10), wherein the plate-shaped second connection section (50) comprises a through opening (53),
a threaded screw (90) with a screw shank (92), on the outer side (92a) of which a thread (93) with a thread profile section (95) received by the receiving profile sections (81) is formed, wherein the threaded screw (90) protrudes through the through opening (53) from a second surface (50b) which is oriented contrary opposite to a first surface (50a) of the second plate-shaped connection section (50),
wherein the receiving profile sections (81) are each formed as two mutually extending thread flanks (81a, 81b), wherein the thread flanks (81a, 81b) are each formed as straight planes, the orientation of which runs along the recess extension direction (R30),
wherein an edge section (81c) which connects the thread flanks (81a, 81b) is formed as a straight plane or as a straight edge line section.

**2.** Connecting device (1) according to claim 1, wherein the ratio between the width (B15) of the first edge section surface (15) which extends along the thickness D10 of the same and the nominal dimension DNS of the thread of the screw shaft (92) is defined as: $B15 / DNS \leq 3$ und $B15 / DNS \geq 0,1$.

**3.** Connecting device (1) according to claim 1 or 2, wherein the thread profile section (95) protrudes beyond the opposing surfaces (10a, 10b) of the first plate-shaped connection section (10) when viewed in the first flat extension (E10).

**4.** Connecting device (1) according to one of the preceding claims, wherein the thread of the screw shank (92) is formed according to one of the following alternatives:
tapping screw thread, wood screw thread, chipboard screw thread, thread of a self-cutting screw, plastic screw thread, flat thread, round thread, buttress thread, trapezoidal thread, Whitworth thread, cone thread, in particular metric pointed thread or inch thread.

**5.** Connecting device (1) according to one of the preceding claims,

wherein the first component (B1, B110) and the second component (B5, B150, B350) are each manufactured as separate components,
wherein the plate-shaped second connection section (50, 150, 350) of the second component (B5, B150, B350) rests with a first surface (50a, 150a, 350a) of the plate-shaped second connection section (50, 150, 350) on the edge section surface (15, 115) of the first component (B1, B110),
wherein the threaded screw (90) presses the second component (B5, B150, B350) against the edge section surface (15, 115) of the first component (B1, B110) by means of a screw head (91).

**6.** Connecting device (1) according to one of the preceding claims, wherein the connecting device (1) comprises an engagement device (E) with:

at least one fixation projection, which is formed on one of the two following alternatives (a) or (b):

(a) on the first component,
(b) on the second component,

at least one fixation recess in which the fixation projection is located at least sectionwise, wherein the at least one fixation recess is formed on that component (a) or (b) on which the fixing projection respectively located therein is not formed,
wherein in the fastened state of the connecting device (1) the at least one fixation projection is located in the respective fixation recess in such a way that the fixation projection can only move slightly in the respective fixation recess and the engagement device (E) provides a locking of the components against a movement relative to one another in relation to a direction of rotation in the direction of the recess extension direction (R30).

**7.** Connecting device (1) according to claim 6,

wherein the first component (B1) comprises a pair of first components (B310, B410) each with a first connection section (310, 410), wherein the first components (B310, B410) each extend in a first planar extension (E310, E410) and each comprise a fastening recess (330, 430) which form a recess opening (333, 433) on an contact edge section (315, 415) of the respective first component (B310, B410) and extend from the contact edge section (315, 415) in a recess extension direction (R330, R430) transversely to the contact edge section (315, 415) of the respective first component (B310, B410) and thereby forms recess longitudinal sections (31, 32) which extend each other each of which comprise a thread receiving profile (80), which comprises a sequence of receiving profile sections (81),
wherein the second component (B5, B150) with the plate-shaped second connection section (50, 150) extends in a second planar extension (E150) which runs transversely to the first planar extensions (E310, E410), wherein the plate-shaped second connection section (50, 150) comprises a through opening (153),
wherein the connecting device (1) comprises a threaded screw (90) with a screw shank (92), on the outside (92a) of which a thread (93) with a thread profile section (95) is formed which is received by the receiving profile sections (81) of the first components (B310, B410), wherein the threaded screw (90) protrudes through the through opening (153) from a second surface (150b) which is oriented contrary to the first surface (150a) of the plate-shaped second connection section (50, 150),
wherein the engagement device (E) of the connecting device (1) comprises at least one fixation projection (316, 317; 416, 417) which is formed on each of the two first components (B310, B410) and at least one fixation recess (156, 157), in each of which two of the fixation projections of different ones of the two first components (B310, B410) are located at least in sectionwise.

## Revendications

1. Dispositif de connexion (1) pour la connexion fixe de deux pièces (B1, B5) l'une à l'autre, le dispositif de connexion (1) présentant :

   une première pièce (B1) s'étendant dans une première superficielle (E10) comportant une première section de raccordement en forme de plaque (10) qui présente une extrémité latérale ayant une surface de section périphérique (15) qui est orientée transversalement au sens de l'épaisseur de la première section de raccordement en forme de plaque (10), la surface de section périphérique (15), vue dans la première extension superficielle (E10), étant exclusivement une surface latérale d'une plaque, la première pièce (B1), présentant une échancrure de fixation (30) qui s'étend, en formant une ouverture d'échancrure (33), au niveau de la surface de section périphérique (15) de la première section de raccordement (10) depuis celle-ci dans un sens d'extension d'échancrure (R30) transversalement à la surface de section périphérique (15) de la première pièce (B1) et constitue alors des sections longitudinales d'échancrure s'étendant le long les unes des autres (31a, 32a) et dotées respectivement d'un profil récepteur de filetage (80) qui présente respectivement une succession de sections de profil récepteur (81) s'étendant dans le sens d'extension d'échancrure (R30) de section de profil récepteur s'étendant transversalement au sens d'extension d'échancrure (R30) jusque dans l'échancrure de fixation (30), les sections longitudinales d'échancrure (31a, 32a) étant orientées sensiblement parallèlement les unes aux autres,
   une seconde pièce (B5) comportant une seconde section de raccordement en forme de plaque (50), la seconde pièce (B5) s'étendant dans une seconde extension plane (E50) qui est orientée transversalement au premier sens d'extension (E10), la seconde section de raccordement en forme de plaque (50) présentant un orifice traversant (53),
   une vis filetée (90) comportant une tige de vis (92) au niveau de la face extérieure de laquelle (92a) un filetage (93) comportant une section de profil fileté (95) reçue par les sections de profil récepteur (81) est constitué, la vis filetée (90) dépassant d'une seconde surface (50b) orientée à l'opposé de la première surface (50a) de la seconde section de raccordement en forme de plaque (50) hors de l'orifice traversant (53),
   les sections de profil récepteur (81) étant respectivement réalisées avec deux flancs filetés (81a, 81b) s'étendant le long d'un de l'autre, les flancs filetés (81a, 81b) se présentant respectivement sous forme de plans s'étendant de manière rectiligne et dont l'orientation suit le sens d'extension de l'échancrure (R30),
   une section périphérique (81c) connectant les flancs filetés (81a, 81b) étant réalisée sous forme d'un plan s'étendant de manière rectiligne ou sous forme d'une section de ligne périphérique rectiligne.

2. Dispositif de connexion (1) selon la revendication 1, dans lequel on a, pour le rapport entre la largeur (B15) s'étendant le long de l'épaisseur D10 de la première section de raccordement (10) de la surface de section périphérique (15) et la cote nominale DNS du filetage de la tige filetée (92): $B15 / DNS \leq 3$ et $B15 / DNS \geq 0,1$.

**3.** Dispositif de connexion (1) selon la revendication 1 ou 2, dans lequel la section de profil fileté (95), vue dans la première extension plane (E10), dépasse au-delà des surfaces situées à l'opposé l'une de l'autre (10a, 10b) de la première section de raccordement en forme de plaque (10).

**4.** Dispositif de connexion (1) selon une des revendications précédentes, dans lequel le filetage de la tige filetée (92) est réalisé suivant une des alternatives suivantes :
filetage de vis à tôle, filetage de vis à bois, filetage de vis à aggloméré, filetage de vis auto-coupante, filetage de vis en plastique, filetage plat, filetage rond, filetage en scie, filetage trapézoïdal, filetage Whitworth, filetage pointu, en particulier filetage pointu métrique ou filetage en pouces.

**5.** Dispositif de connexion (1) selon une des revendications précédentes,

dans lequel la première pièce (B1, B110) et la seconde pièce (B5, B150, B350) sont respectivement fabriquées sous forme de pièces séparées,
dans lequel la seconde section de raccordement en forme de plaque (50, 150, 350) de la seconde pièce (B5, B150, B350) repose par une première surface (50a, 150a, 350a) de la seconde section de raccordement en forme de plaque (50, 150, 350) sur la surface de section périphérique (15, 115) de la première pièce (B1, B110),
dans lequel la vis filetée (90) comprime au moyen d'une tête de vis (91) la seconde pièce (B5, B150, B350) au niveau de la surface de section périphérique (15, 115) de la première pièce (B1, B110).

**6.** Dispositif de connexion (1) selon une des revendications précédentes, dans lequel le dispositif de connexion (1) présente un dispositif d'engrènement (E) comportant :

au moins une saillie de fixation qui est réalisée respectivement au niveau d'une des deux alternatives (a) ou (b) suivantes :

(a) au niveau de la première pièce,
(b) au niveau de la seconde pièce,

au moins une échancrure de fixation dans laquelle est située du moins par sections la saillie de fixation, l'au moins une échancrure de fixation étant réalisée au niveau de la pièce (a) ou (b) au niveau de laquelle la saillie de fixation respectivement située n'est pas réalisée,
dans lequel, à l'état fixé du dispositif de connexion de connexion (1), l'au moins une saillie de fixation est située dans l'échancrure de fixation respective de manière à ce que la saillie de fixation ne puisse bouger que faiblement dans l'échancrure de fixation respective et que le dispositif d'engrènement (E) établisse un blocage des pièces contre un mouvement réciproque par rapport à un sens de rotation en direction du sens d'extension de l'échancrure (R30).

**7.** Dispositif de connexion (1) selon la revendication 6,

dans lequel la première pièce (B1) présente une paire de premières pièces (B310, B410) dotées respectivement d'une première section de raccordement (310, 410), les premières pièces (B310, B410) s'étendant respectivement dans une première extension plane (E310, E410) et présentant respectivement une échancrure de fixation (330, 430) qui, en formant une ouverture d'échancrure (333, 433) au niveau d'une section périphérique d'appui (315, 415) de la première pièce respective (B310, B410), s'étend depuis celle-ci dans un sens d'extension d'échancrure (R330, R430) transversalement à la section périphérique d'appui (315, 415) de la première pièce respective (B310, B410) et constitue alors des sections d'échancrure (31, 32) alignées les unes le long des autres et dotées respectivement d'un profil récepteur de filetage (80) qui présente respectivement une succession de sections de profil récepteur (81),
dans lequel la seconde pièce (B5, B150) s'étend avec la seconde section de raccordement en forme de plaque (50, 150) dans une seconde extension plane (E150) qui s'étend transversalement aux premières extensions planes (E310, E410), la seconde section de raccordement en forme de plaque (50, 150) présentant un orifice traversant (153),
dans lequel le dispositif de connexion (1) présente une vis filetée (90) dotée d'une tige de vis (92) sur la face extérieure de laquelle (92a) un filetage (93) comportant une section de profil fileté (95) reçue par les sections de profil récepteur (81) des premières pièces (B310, B410) est constitué (95), la vis filetée (90) dépassant d'une seconde surface (150b) orientée à l'opposé de la première surface (150a) de la seconde section de raccordement en forme de plaque (50, 150) hors de l'orifice traversant (153),
dans lequel le dispositif d'engrènement (E) du dispositif de connexion (1) présente au moins une saillie de fixation (316, 317 ; 416, 417) qui est réalisée respectivement au niveau de de chacune des deux premières pièces (B310, B410) et présente au moins une échancrure de fixation (156, 157) dans laquelle respectivement deux des saillies de fixation de pièces différentes des deux premières pièces (B310, B410) sont situées du moins par sections.

90
91
95
92
93
B5
R50
DNS
53
59
50
50b
E50
50a
A2
33
B15
15
E10
R10
R30
40
D10
80
31a
32
31
80
32a
B1
30
10
K30
10a
10b
19
32
B1
82z
81
81a
10
81c
81d
81e
81b
80
82
83
B2
90
50
B5
91
50b
59
50a
92
10
D10
K30
B1
L6
59
90
50b
91
B5
50
10
50a
A5
K30
L6
B1

Fig. 1

Fig. 2

Fig. 3

Fig. 4

DNS
95
93
95a
96
95c
95b
83
85
90
80
92
92a
N30
90
91
92
A7
R10
D10

Fig. 5

Fig. 6

R30
81a
95
95a
81b
95b
93
81
81a
81b
82

Fig. 7

K30
R30
33
B1
E10
40
A9
40
31
32
31a
30
32a

Fig. 8

81
82
81e
83
10
81a
81c
81b

Fig. 9

81
82
81e
83
10
81a
81c
81b

Fig. 10

33
K30
10
B15
R30
B1
R10
32a
31a
E10
19
D10
30

Fig. 11

90
B2
B2
90
B15
B15
D10
K30
B1
D10
B1

Fig. 12

Fig. 13

90
91
1
95
92
93
156
E
B150
R150
DNS
153
159
150
150b
E150
150a
157
117
133
115
116
B15
E110
132
R110
80
R130
131
110
131a
80
80
132a
B110
130
K30
D10
119

Fig. 14

90
150b
91
B150
150
110
150a
K30
B110

Fig. 15

15
11b
11c
10
B119
30
11b
30
32
210
131
116
233
110
230
130
10
31
131
117
11a
116
132
117
210
111c
11d
132
11c
130
119
230
115
233
119
111d
130
110
111a
90
90
53
B50
53
1
B119
90
53
90
53
90
90
B150
90
90
B50
B10
90
1
90
B119
90
B50
90
90
B150
90
90
B50
90

Fig. 16

Fig. 17

Fig. 18

90
91
92
95
93
1
B150
R150
DNS
159
153
156
150
150b
E150
150a
157
133
115f
115
B15
115e
115g
115h
117
116
R130
80
131a
110
131
80
132a
132
130
E110
B110
K30
D10
R110
119
1
156
116
117
157
90
91
B150
150b
115
150
110
150a
131
132
80
80
K30
B110
119
90
91
1
92
95
93
B150
R150
DNS
153
157
150b
150
E150
150a
117
115f
115
133
B15
E110
R110
R130
80
131a
110
131
80
132a
130
132
B110
K30
D10
119
1
90
91
153
B150
150b
150
110
150a
K30
B110
119
Fig. 19

Fig. 20

Fig. 21

Fig. 22

90
91
92
95
93
B150
R150
DNS
153
157
150
150b
150a
E150
80
133
80
B15
115
117
R110
R130
140
131a
132
110
131
140
132a
130
E110
B110
K30
D10
119
90
91
150b
B150
150
110
150a
K30
B110

Fig. 23

Fig. 24

90
91
92
95
93
156
B150
R150
DNS
153
157
150
150b
150a
E150
117
133
B15
115
116
E110
R110
R130
80
132
131a
110
131
80
132a
130
B110
K30
D10
119
90
91
150b
B150
150
110
150a
K30
B110

Fig. 25

Fig. 26

90
91
92
95
93
DNS
B150
156
R150
153
157
159
150b
150
150a
E150
133
115j
117
116
115i
115
R130
80
132
131a
110
131
80
132a
130
E110
B110
K30
R110
119
115i
115j
B150
150b
110
150a
K30
B110
159
153
150
116
B15
E110
140
132
131a
140
130
D10

Fig. 27

Fig. 28

Fig. 29

90
91
95
92
93
B150
R150
153
157
150b
150
E150
150a
156
133
117
116
115
B15
E110
R110
R130
80
131a
110
131
80
132a
132
130
B110
K30
D10
119

Fig. 30

90
91
95
92
93
B150
R150
157
153
150b
150
E150
150a
156
117
133
116
115
B15
E110
R110
140
132
R130
131a
110
131
140
132a
130
B110
K30
D10
119

Fig. 31

300
90
91
92
95
93
350
R350
DNS
350b
B350
356
357
E350
359
R359
350a
353
358
358a
359b
359a
E359
133
117
116
115
B15
E110
R130
80
132
131
131a
110
D10
80
132b
130
B110
K30
R110
119


Fig. 32

90
400
91
95
450
92
93
DNS
E450
453
450a
115
B15
133
R110
E110
R130
140
131a
110
80
132a
D10
130
K30
B110
119


Fig. 33

90
91
1
92
95
93
156
B150
R150
DNS
153
157
150
150b
150a
E150
159
117
E
115
133
116
B15
E110
R110
R130
80
131a
110
132a
130
K30
B110
D10
119
Fig. 34

Fig. 35

292a
94
292
92
93
92a
DNS
292b
254
200
B252
E210
230
B210
R230
K30
B251
253
291b
DNS
92
93
92a
291
94
291a
200
292
250
B252
252
E252
216
234
E210
D210
80
21b
B210
210
210a
80
B210
231
232
230
K30
231a
232a
233
215
251
B251a
E251
291

Fig. 36

Fig. 37

94
93
92a
92
291b
B210
N230
291a
92
D210
94
93
92a
230
B251
E210
R230
292b
292a
292
B252
93
291b
92
92a
94
Fig. 38
200
B210
253
N230
291a
93
254
230
D210
DNS
92
92a
94
B251
E210
R230
DNS
292a
292b
B252
292
Fig. 39
93
254
92
92a
94
DNS
292b
B252
292a
292
Fig. 40
93
291b
92
92a
94
253
B210
291a
N230
D210
230
DNS
B251
R230
E210
Fig. 41

94
93
92a
92
291b
B210
D210
N230
291a
230
92
94
93
92a
B251
E210
R230
292b
292a
292
B252
93
92
291b
253
92a
94
200
B210
D210
N230
291a
DNS
93
92
254
230
92a
94
B251
E210
R230
DNS
292a
292b
B252
B210
230
292
93
254
92
92a
94
R230
DNS
292b
B252
292a
292
93
94
291b
92
92a
253
B210
N230
291a
D210
230
DNS
B251
R230
E210

Fig. 42

Fig. 43

Fig. 44

Fig. 45

90
91
1
95
92
93
B150
R150
153
157
150b
150
E150
R430
333
150a
156
433
417
317
416
430
415
316
31a
R330
315
32a
410
32
B410
31
80
B310
80
80
310
330
E310
319
K30
419
E410
1
E150
B150
R150
153
157
150b
150
150a
156
430
330
410
80
80
80
B410
320
E310
B310
K30
592
91
90
591
95
93
500
92
519
511
516
517
510
510b
E510
510a
E1
K30
537a
E531
536a
536c
537c
532b'
530
531s
535a
535
D10
R530
532
531b'
531r
532s
531
532r
E532
531a'
531a
535b
536b
532a
532a'
B520
80
537d
537b
E2
80
520a
536d
520
E520
529
526
527
520b
521
592
95
90
591
91
90
B510
500
591
535
592
K30
90
B520

Fig. 46

Fig. 47

Fig. 48

Fig. 49

90
91
700
92
95
93
DNS
R730
730
B15
733
B710
K30
715
31b
732
80
80
731
710
32b
712
E710
710b
D10
723
720
724
716
710a
721
719
750
815
B810
830
833
B15
R830
810
D10
32b
31b
80
80
831
821
832
823
K30
824
820
E810
810a
810b
819
826
825

Fig. 50

90
91
95
92
93
700
DNS
730
733
B15
B710
K30
715
31b
80
80
710
32b
712
E710
710b
D10
723
720
724
716
710a
719
721
815
B810
830
833
B15
810
R830
D10
32b
31b
80
80
821
K30
823
824
820
E810
810a
810b
819
826
825

Fig. 51

90
715
815
92
810
710

Fig. 52

90
91
92
95
93
DNS
B150
156
R150
153
157
159
150
700
150b
150a
E150
730
B15
733
B710
K30
715
31b
80
80
710
32b
712
E710
710b
D10
723
720
724
716
710a
721
719
830
833
815
B810
B15
810
R830
32b
31b
80
80
D10
821
K30
823
824
820
E810
810a
810b
819
826
825

Fig. 53

90
91
95
92
93
DNS
700
730
733
B15
B710
K30
715
31b
80
80
710
32b
712
E710
710b
D10
723
720
724
716
710a
719
721
830
833
815
B810
B15
810
R830
32b
31b
80
80
D10
821
K30
823
824
820
E810
810a
810b
819
826
825

Fig. 54

A990
990
995
M990
990a
900
B950
953
950
950b
E950
959
950a
930b
910b
932a
931a
910a
930
R930
80
80
917
910a
K30
918b
B15
918a
918
E910
B910
D10
919b
919
919a
900
990
932a
931a
80
930
R930
80
995
950
B950
950b
E950
959
950a
E910
B910
D10
919

Fig. 55

Fig. 56

993
910
990
R930
A61
930
B930
930a
917
Fig. 57
917
931a
990
932a
L60
L46
L59
B15
L45
Fig. 58
980
991c
981a
991a
932a
991d
981
993
991b
981d
910
981c
981b
930a
990
982
Fig. 59
990a
991
990a
980
990
992
993
95
990
995c
995a
995b
996
Fig. 60
980
983
981
982
982z
984a
984b
910a
981c
981a
981d
981b
Fig. 61
980
983
981
982
910a
982z
984a
984b
981c
981a
981d
981b
Fig. 62

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0412297 A2
- EP 2175144 A1
- US 2196032 A
- DD 230051 A1
- EP 0368433 A1
- HU 197074 B